(19) Europäisches Patentamt / European Patent Office / Office européen des brevets

(11) **EP 3 200 890 B1**

(12) **FASCICULE DE BREVET EUROPEEN**

(45) Date de publication et mention
de la délivrance du brevet:
**16.04.2025   Bulletin 2025/16**

(21) Numéro de dépôt: **15771943.6**

(22) Date de dépôt: **29.09.2015**

(51) Classification Internationale des Brevets (IPC):
*B01D 15/22* (2006.01)     *B01J 20/291* (2006.01)
*B01J 20/285* (2006.01)    *B01J 39/05* (2017.01)
*B01J 39/20* (2006.01)     *B01J 39/26* (2006.01)
*B01J 41/05* (2017.01)     *B01J 41/14* (2006.01)
*B01J 41/20* (2006.01)     *B01J 20/292* (2006.01)
*B01J 20/28* (2006.01)

(52) Classification Coopérative des Brevets (CPC):
**B01D 15/22; B01J 20/28042; B01J 20/28047;
B01J 20/2805; B01J 20/28078; B01J 20/285;
B01J 20/291; B01J 20/292; B01J 39/05;
B01J 39/20; B01J 39/26; B01J 41/05; B01J 41/14;
B01J 41/20;** B01D 53/025;               (Cont.)

(86) Numéro de dépôt international:
**PCT/EP2015/072466**

(87) Numéro de publication internationale:
**WO 2016/050789 (07.04.2016 Gazette 2016/14)**

(54) **PROCEDE DE CHROMATOGRAPHIE SUR UN GEL OU UN LIQUIDE ORGANIQUE**

ORGANISCHES GEL- ODER FLÜSSIGKEITSCHROMATOGRAFIEVERFAHREN

ORGANIC GEL OR LIQUID CHROMATOGRAPHY METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.09.2014   FR 1459175**

(43) Date de publication de la demande:
**09.08.2017   Bulletin 2017/32**

(73) Titulaire: **Parmentier, François
38400 Saint Martin d'Héres (FR)**

(72) Inventeur: **Parmentier, François
38400 Saint Martin d'Héres (FR)**

(74) Mandataire: **Regimbeau
87, rue de Sèze
69451 Lyon Cedex 06 (FR)**

(56) Documents cités:
**WO-A1-2013/064754     WO-A2-2011/114017
US-A1- 2007 017 870**

(52)  Classification Coopérative des Brevets (CPC):
      (Cont.)B01J 2220/84

(52)  Classification Coopérative des Brevets (CPC):
      (Cont.)B01J 2220/84

**Description**

**DOMAINE DE L'INVENTION**

La présente invention concerne un procédé de chromatographie sur un gel ou un liquide organique.

**ARRIERE PLAN DE L'INVENTION**

La chromatographie est un procédé de séparation moléculaire visant à séparer des espèces mélangées dans un échantillon sous l'action contradictoire d'un entraînement dynamique desdites espèces par un courant d'une phase mobile (également appelée « phase éluante ») et d'une rétention desdites espèces par une phase stationnaire.

Les conditions de rétention dépendent de l'affinité chimique entre chaque espèce et la phase stationnaire.

La chromatographie est caractérisée en ce qu'elle demande une grande régularité de la phase stationnaire et de son support et des distances diffusionnelles caractéristiques faibles. Cette distance diffusionnelle est généralement la taille des grains de solide d'un lit particulier ou le diamètre d'un tube capillaire vide. En pratique cette distance est toujours inférieure à 0,5 mm. Ceci aboutit à un nombre d'étage théoriques de séparation supérieur à 200 en général.

La chromatographie est une technique particulière, qui a ses avantages et contraintes propres et se différencie par là même des autres techniques qui mettent en oeuvre des garnissages solides et des fluides, comme l'adsorption et la catalyse hétérogène.

En adsorption on cherche à retenir un composé d'un effluent fluide sur la surface duquel il est adsorbé par l'intermédiaire d'un isotherme, ou sur laquelle il réagit. On cherche à purifier le fluide. On a besoin de hautes surfaces spécifiques. Il faut des lits de haute capacité. L'efficacité du garnissage n'est pas critique (nombre de plateaux théoriques) et l'on préfère utiliser des lits de granulés de 1 à 2 mm de diamètres. En effet l'efficacité n'a qu'une influence négligeable sur le dimensionnement du lit dans la mesure ou elle ne jouera que sur la raideur du front de percolation, qui est bonne dès que l'on atteint 20 plateaux théoriques environ. Il faut ensuite régénérer l'adsorbant par une combinaison de moyens, température ou réaction chimique, qui élimine les impuretés adsorbées ou combinées. Le fonctionnement est donc séquentiel mais les temps de cycle se chiffrent en jours ou en semaines. On dimensionne sur la masse du lit. Les pertes de charge sont faibles.

En catalyse, on cherche à effectuer une réaction chimique sur la surface du solide. On désire que les réactifs restent un temps optimal en contact avec le solide. Il s'agit là encore de forces d'adsorption et de réactions chimiques. On est intéressé par des critères de temps de séjour. Le raisonnement en nombre de plateaux théoriques est inopérant. La régularité du garnissage est un facteur parmi d'autres et est secondaire devant la sélectivité catalytique. On ne cherche pas à séparer des molécules. Les pertes de charges sont faibles.

En chromatographie, on sépare plusieurs espèces présentes dans une charge fluide admise séquentiellement selon un intervalle de temps court se comptant en minutes, en la propageant d'un point d'entrée à un point de sortie d'une colonne de solide sous l'effet d'un fluide éluant. La séparation obtenue peut l'être par une très large variété de forces qui rentrent en compétition avec l'effet moteur de l'éluant, partage, adsorption, interactions stériques, interactions ioniques, etc... Cette méthode offre un haut pouvoir séparateur, chaque composant se comportant de façon différente. Pour mettre en valeur ce pouvoir séparateur, il faut que la colonne présente un nombre de plateaux théoriques élevé, par exemple 1000. Cela signifie aussi que les résistances diffusionnelles doivent être minimisées, et donc que les distances de diffusion soient courtes, et que la colonne doit être longue. Ces facteurs combinés font que la chromatographie est une technique qui réclame une régularité excellente de l'écoulement et donc du garnissage, et une faible dimension caractéristique de celui-ci, conduisant à des pertes de charges qui deviennent rapidement critiques avec des solides particulaires. Ce sont ces problèmes qu'il faut résoudre en chromatographie.

D'autre part, la chromatographie préparative réalisable de façon pratique et simple est l'un des problèmes essentiels du génie chimique.

Le brevet US 4,957,620 de Cussler E. décrit l'utilisation de faisceaux de fibres creuses polymériques pour une utilisation comme colonne chromatographique. Cependant les fibres creuses agissent indépendamment les unes des autres comme colonnes chromatographiques. De ce fait les différences de comportement entre les fibres conduisent à de très mauvaises efficacités. Les fibres ont peu ou pas de contact et ne communiquent pas par diffusion. Elles sont empilées de façon très peu compacte. La diffusion moléculaire ne peut pas se produire entre les conduits. Ceci explique le très faible nombre de plateaux théorique des séparations obtenues, de l'ordre de 40, au regard du maximum attendu sur une seule fibre, de l'ordre de 6000.

La publication « Hollow-Fiber Liquid Chromatography » de Hongbing Ding et E. Cussler, AIChE Journal, 1989, Vol 35, N°5, pp 814-820, détaille les bases du brevet précédent. Il y est clairement mentionné page 815 que les essais sont conduits sur des modules de 4 cm de diamètre contenant 27000 fibres creuses de 100 $\mu$m de diamètre intérieur et de 30 $\mu$m d'épaisseur de paroi. Un simple calcul montre que les fibres creuses ne présentent pas un empilement compact, et que le volume extérieur aux fibres représente plus de 50% du volume total du module. Il y est également explicitement mentionné page 815, 3 dernières lignes que le solvant constituant la phase stationnaire mouille les fibres hydrophobes, mais ne s'écoule pas au travers de la fibre vers l'extérieur de la fibre. Le volume extérieur aux fibres reste donc rempli de gaz, en l'occurrence de l'air, et vide de solvant. Il en résulte que la résistance au transfert de matière radial entre les fibres augmente, provoquant une baisse de l'efficacité de la séparation.

Le brevet US N° 4,007,138 , de Kanig G. décrit un procédé de fabrication de gels de PS -DVB (PolyStyréne, DiVinylBenzène) pourvus d'une matrice de renfort polymérique.

Le brevet US N° 8,017,015 de Clarke et al décrit l'état de l'art des procédés de fabrication des gels organiques et de leur mise en oeuvre dans des colonnes de chromatographie.

Le brevet US N° 7,922,908, décrit l'utilisation de rayons X pour initier une polymérisation du gel organique. Ce procédé est particulièrement utile pour la réalisation de garnissages massifs. On notera également que la température de polymérisation peut être proche de l'ambiante, de 50 °C jusqu'à 90°C

Le brevet N° 7,473,367 de Xie S. décrit des procédés d'obtention de gels organiques.

La demande de brevet WO 2011/114017 de Parmentier présente un garnissage pour la chromatographie constitué d'un garnissage poreux monolithique. Elle décrit dans ses exemples un garnissage en résine polyester thermodurcissable réalisable suivant l'état de l'art. Cependant ce garnissage est constitué d'un polymère rigide et non poreux ne permettant aucune diffusivité appréciable. En effet la publication [1] fournit des mesures de perméabilité et de diffusivité de polyester thermodurcissable. Il en résulte que l'eau présente dans ce matériau une diffusivité de 0,6 $10^{-12}$ m2/s, correspondant à une perméabilité de 750 Barrer. Cette perméabilité est analogue à celle du polyéthylène ou du polycarbonate, matériaux reconnus comme étanches et non poreux servant à faire des récipients ou des parois imperméables. Le polyester thermodurcissable ne permettant donc pas un échange de matière par diffusion moléculaire entre conduits adjacents, l'efficacité d'un tel garnissage en chromatographie sera limitée.

Il ressort de l'état de l'art que ces monolithes organiques sont de fabrication malaisée, particulièrement en grandes dimensions, et de caractéristiques difficilement reproductibles. Ils sont de plus sensibles à la pression appliquée et soumis à des gonflements en présence de solvants ou de molécules à séparer. Leur taille de pore est difficilement ajustable. Leur fragilité mécanique les rend peu aptes à résister à des forces de compression importantes. Ils ne pourront donc pas être utilisés dans des colonnes de chromatographies fonctionnant sous des pertes de charge élevées, supérieures à quelques bars. Les garnissages actuels sont souvent particulaires, présentent une perte de charge élevée, et se trouvent donc limités en diamètre de particule et donc en efficacité.

Les monolithes organiques présentent cependant de nombreux avantages, par rapport à la silice, particulièrement en termes de taille de pores et de stabilité chimique à pH élevé et du fait de leur totale insolubilité dans l'eau.

Il reste donc le besoin de proposer des monolithes organiques stables, efficaces et de faible coût manufacturables de façon reproductible avec de grandes dimensions.

## BREVE DESCRIPTION DE L'INVENTION

L'invention propose un procédé de chromatographie dans lequel on fait circuler une phase mobile gazeuse, liquide ou supercritique contenant des espèces à séparer au travers d'un garnissage formant ou comprenant une phase stationnaire, ledit garnissage comprenant :

- une pluralité de conduits capillaires s'étendant dans le garnissage entre une face dite amont par laquelle la phase mobile pénètre dans le garnissage et une face dite aval par laquelle la phase mobile sort du garnissage, les espèces à séparer contenues dans la phase mobile circulant dans chaque conduit étant retenues par la phase stationnaire, et
- un milieu continu perméable à la diffusion moléculaire s'étendant entre lesdits conduits, comportant un gel organique poreux ou un liquide organique et incluant au moins un réseau de pores connexes dont la taille est supérieure à deux fois le diamètre moléculaire d'au moins une espèce à séparer et ouvert sur les conduits, de sorte à procurer à ladite au moins une espèce un chemin diffusif entre lesdits conduits,

la permittivité dudit milieu continu vis-à-vis des espèces à séparer étant supérieure à 5000 Barrer, c'est-à-dire supérieure à $5.10^{-7}$ (cm$^3$ O$_2$ cm) / (cm$^2$ s cm Hg).

Selon un mode de réalisation, les conduits capillaires traversent le garnissage de part en part entre la face amont et la face aval. Selon un autre mode de réalisation, les conduits capillaires sont inclus dans le garnissage et présentent au moins une extrémité débouchant à l'intérieur dudit garnissage.

Avantageusement la phase mobile pénètre la totalité de la première population de pores connexes de façon à réaliser un continuum de phase mobile monophasique entre les conduits.

Avantageusement la diffusion moléculaire des espèces à séparer entre les conduits s'effectue au sein dudit continuum de phase mobile.

De manière avantageuse, le débit molaire moyen de diffusion des espèces à séparer entre les conduits adjacents sous l'effet d'une différence de concentration donnée desdites espèces entre les parois desdits conduits est supérieur à 0.01 fois le débit molaire moyen de diffusion des espèces entre un conduit et la phase stationnaire que constitue le garnissage sous l'effet d'une même différence de concentration des espèces à séparer entre le fluide conduit par les conduits et la paroi desdits conduits.

Selon un mode de réalisation, le diamètre des conduits capillaires du garnissage est inférieur ou égal à 500 µm, de préférence inférieur ou égal à 150 µm et de manière encore préférée inférieur ou égal à 50 µm.

Selon un mode de réalisation, ledit milieu continu est formé d'un gel organique, ledit gel organique étant choisi parmi :

(a) un copolymère du styrène et du divinylbenzène,
(b) du polyméthacrylate de méthyle,
(c) un copolymère du méthacrylate d'hydroxyéthyle et du divinylbenzène.

Selon un autre mode de réalisation, ledit milieu continu est formé d'un gel organique, ledit gel organique étant un polyholoside.

Selon un autre mode de réalisation, ledit milieu continu est formé d'un liquide organique s'étendant dans ledit réseau de pores connexes, ledit liquide organique étant choisi parmi :

(a) un hydocarbure aliphatique ou aromatique,
(b) un alcool aliphatique ou aromatique,
(c) une cétone aliphatique ou aromatique,
(d) une amine aliphatique ou aromatique,
(d) un composé organique halogéné.

Le garnissage peut comprendre un monolithe de gel organique perméable à la diffusion moléculaire au travers duquel s'étendent lesdits conduits capillaires, ledit réseau de pores connexes s'étendant au sein dudit gel organique.

De manière alternative, le garnissage comprend un monolithe d'un matériau poreux chimiquement inerte contenant ledit réseau de pores connexes, lesdits pores étant remplis dudit gel organique ou dudit liquide organique perméable à la diffusion moléculaire.

En variante, le garnissage comprend un monolithe d'un matériau poreux chimiquement inerte contenant ledit réseau continu de pores, la surface desdits pores étant recouverte du gel organique perméable à la diffusion moléculaire sur une épaisseur choisie de sorte à laisser, dans ledit réseau de pores, un volume libre pour la diffusion de la phase mobile, ledit gel organique formant un réseau continu de pores entre les conduits.

De préférence, le matériau chimiquement inerte dudit monolithe est choisi parmi la silice, l'alumine, ou une combinaison de silice et d'alumine.

Selon un mode de réalisation, le garnissage comprend un empilement de fibres poreuses comprenant chacune un lumen formant un conduit capillaire du garnissage et une paroi comprenant un réseau de pores connexes, lesdites fibres étant rendues jointives par le gel organique poreux ou le liquide organique perméable à la diffusion moléculaire.

La paroi de chaque fibre peut être formée dudit gel organique perméable à la diffusion moléculaire.

De manière alternative, les pores de la paroi de chaque fibre sont remplis dudit gel ou dudit liquide organique perméable à la diffusion moléculaire.

En variante, la surface des pores de la paroi de chaque fibre est recouverte du gel organique perméable à la diffusion moléculaire sur une épaisseur choisie de sorte à laisser, dans ledit réseau de pores, un volume libre pour la diffusion de la phase mobile, ledit gel organique formant un réseau continu de pores à l'intérieur de ladite paroi.

Selon un mode de réalisation, le gel organique perméable à la diffusion moléculaire forme la phase stationnaire chromatographique.

De manière alternative, le gel organique présente des pores contenant un tiers corps solide formant la phase stationnaire chromatographique.

Un procédé de fabrication d'un garnissage pour la mise en œuvre du procédé de chromatographie décrit plus haut comprend les étapes suivantes :

- fourniture d'un faisceau de fils dits précurseurs des conduits capillaires,
- formation d'une matrice poreuse autour des fils ou des conduits, de sorte à former un monolithe,
- élimination des fils de façon à former lesdits conduits capillaires.

La matrice est avantageusement un gel organique.

En variante, la matrice comprend un matériau chimiquement inerte et l'on charge ladite matrice d'un gel organique.

Les fils précurseurs des conduits capillaires sont avantageusement des fils fusibles à une température inférieure à la température de dégradation de la matrice et l'élimination desdits fils comprend la fusion et le drainage desdits fils hors du garnissage.

Par exemple, les fils fusibles comprennent de l'indium, du bismuth, de l'étain, du gallium, de l'argent ou un de leurs alliages avec d'autres métaux à l'exclusion du plomb, du mercure et du cadmium.

Un autre procédé de fabrication d'un garnissage pour la mise en œuvre du procédé de chromatographie décrit plus haut comprend les étapes suivantes :

- fourniture d'un faisceau compact de fibres creuses,
- inclusion dans la paroi poreuse des fibres creuses d'un gel organique ou d'un précurseur dudit gel organique destiné à être polymérisé in situ, de façon à laisser libre et ouvert le lumen des fibres creuses,
- création d'une liaison diffusive entre lesdites fibres creuses par ledit gel ou liquide organique.

Dans un autre procédé de fabrication d'un garnissage pour la mise en œuvre du procédé de chromatographie décrit plus haut, on réalise un moulage du gel organique en une structure définissant lesdits conduits capillaires.

Un autre objet de l'invention concerne un garnissage pour la chromatographie selon la revendication 11.

Lorsque le milieu continu est formé d'un gel organique, ledit gel organique peut être choisi parmi :

(a) un copolymère du styrène et du divinylbenzène,
(b) du polyméthacrylate de méthyle,
(c) un copolymère du méthacrylate d'hydroxyéthyle et du divinylbenzène.

De manière alternative, le gel organique peut être un polyholoside.

Lorsque ledit milieu continu est formé d'un liquide organique s'étendant dans le réseau de pores connexes, ledit liquide organique est choisi parmi :

(a) un hydocarbure aliphatique ou aromatique,
(b) un alcool aliphatique ou aromatique,
(c) une cétone aliphatique ou aromatique,
(d) une amine aliphatique ou aromatique,
(d) un composé organique halogéné.

Selon un mode de réalisation, le garnissage comprend un monolithe de gel organique perméable à la diffusion moléculaire au travers duquel s'étendent lesdits conduits capillaires.

Selon un autre mode de réalisation, le garnissage comprend un monolithe d'un matériau poreux chimiquement inerte présentant un réseau continu de pores, lesdits pores étant remplis dudit gel ou dudit liquide organique perméable à la diffusion moléculaire.

Selon un autre mode de réalisation, le garnissage comprend un monolithe d'un matériau poreux chimiquement inerte présentant un réseau continu de pores, la surface desdits pores étant recouverte du gel organique perméable à la diffusion moléculaire sur une épaisseur choisie de sorte à conserver, dans ledit réseau de pores, un volume libre pour la diffusion de la phase mobile, ledit gel organique formant un réseau continu de pores entre les conduits.

Selon un autre mode de réalisation, le garnissage comprend un empilement de fibres poreuses comprenant chacune un lumen formant un conduit capillaire du garnissage et une paroi comprenant un réseau continu de pores, lesdites fibres étant rendues jointives par le gel ou liquide organique perméable à la diffusion moléculaire.

La paroi de chaque fibre peut alors être formée dudit gel organique perméable à la diffusion moléculaire.

De manière alternative, les pores de la paroi de chaque fibre sont remplis dudit gel ou dudit liquide organique perméable à la diffusion moléculaire.

## BREVE DESCRIPTION DES DESSINS

D'autres caractéristiques et avantages de l'invention ressortiront de la description détaillée qui va suivre, en référence aux dessins annexés sur lesquels :

- la figure 1 est une vue en coupe d'un schéma de principe d'un garnissage monolithique selon un mode de réalisation de l'invention dans un plan parallèle à l'axe longitudinal dudit garnissage,
- la figure 2 est une vue en coupe d'un schéma de principe dudit garnissage dans un plan perpendiculaire à l'axe longitudinal dudit garnissage,
- la figure 3 est une vue en coupe d'un schéma de principe d'un garnissage multicapillaire comprenant un squelette poreux stable dimensionnellement dont les pores sont recouverts d'un gel organique perméable à la diffusion moléculaire,
- la figure 4 est une vue en coupe d'un schéma de principe d'un garnissage formé d'un empilement de fibres creuses selon un mode de réalisation de l'invention dans un plan perpendiculaire à l'axe longitudinal dudit garnissage,
- les figures 5 et 6 sont des vues de dessus et en coupe d'un gel organique moulé,
- la figure 7 présente l'efficacité d'un garnissage multicapillaire dans lequel la paroi des conduits est non poreuse (a) et poreuse (b).
- les figures 8 et 9 présentent les flux diffusifs entre conduits adjacents et à l'intérieur d'un même conduit.
- les figures 10 et 11 explicitent deux variantes de réalisation d'un procédé chromatographique.
- la figure 12 représente un garnissage formé d'un gel organique constitué d'un matériau organométallique comportant dans sa masse le produit d'une co-condensation d'orthosilicates et de silanes
- la figure 13 représente un garnissage suivant l'invention formé d'une masse poreuse organique ou minérale comprenant des particules ou des nanoparticules en dispersion dans ses pores
- la figure 14 représente schématiquement une simulation sur ordinateur de la séparation de deux espèces chimiques sur un garnissage multicapillaire à parois poreuses dont le diamètre des pores communicants est supérieur à deux fois le diamètre moléculaire de ces espèces
- la figure 15 représente schématiquement une simulation sur ordinateur de la séparation des mêmes espèces chimiques sur un garnissage présentant des caractéristiques dimensionnelles identiques à celles du garnissage utilisé pour la simulation de la figure 14 mais dont le diamètre des pores communicants est inférieur à deux fois le diamètre moléculaire de l'une de ces espèces
- la figure 16 représente une vue en coupe suivant une direction parallèle à son grand axe d'une variante d'un garnissage pour la chromatographie suivant un mode de réalisation de l'invention dans lequel les conduits sont inclus dans une masse monolithique poreuse,
- les figures 17 à 24 sont des vues de la construction d'une colonne de chromatographie,
- les figures 25 et 26 représentent un mode d'assemblage de fils précurseurs des conduits d'un monolithe,
- la figure 27 représente schématiquement l'assemblage du faisceau de fils dans la pièce 90.
- la figure 28 représente une feuille perforée dont les trous sont répartis en couches de trois diamètres différents.
- la figure 29 représente des réponses chromatographiques d'une même colonne dans le cas où la molécule éluée est d'un diamètre moléculaire inférieur à deux fois le diamètre des pores permettant la diffusion entre les conduits adjacents (courbe en pointillés), et dans le cas ou son diamètre moléculaire, supérieur à deux fois le diamètre des pores, ne le permet pas (courbe en trait plein), la colonne contenant trois familles de conduits de diamètres différents arrangés en couches superposées,
- la figure 30 représente des réponses chromatographiques d'une même colonne dans le cas où la molécule éluée est d'un diamètre moléculaire inférieur à deux fois le diamètre des pores permettant la diffusion entre les conduits adjacents (courbe en pointillés), et dans le cas ou son diamètre moléculaire, supérieur à deux fois le diamètre des pores, ne le permet pas (courbe en trait plein), la colonne contient des conduits dont les diamètres sont répartis aléatoirement suivant une loi gaussienne dont l'écart type correspond à 5% du diamètre moyen des conduits.
- Les figures 31 à 34 représentent des chromatogrammes obtenus à l'aide d'un dispositif suivant l'invention.

## DESCRIPTION DETAILLEE DE L'INVENTION

Le procédé de chromatographie met en oeuvre une phase stationnaire qui se présente sous la forme d'un garnissage dont différents modes de réalisation seront décrits ci-après et une phase mobile contenant des espèces à séparer.

La chromatographie est un procédé de séparation moléculaire particulier caractérisé en ce qu'il effectue une séparation d'un mélange de substances chimiques sous l'action contradictoire

- d'un entrainement dynamique de ces espèces par un courant d'une phase éluante
- d'une rétention de ces espèces par une phase stationnaire.

De préférence ce procédé est poursuivi jusqu'à élution complète des espèces séparées hors de la phase stationnaire.

On distingue deux catégories générales de procédé chromatographique, la chromatographie d'élution et la chromatographie d'affinité.

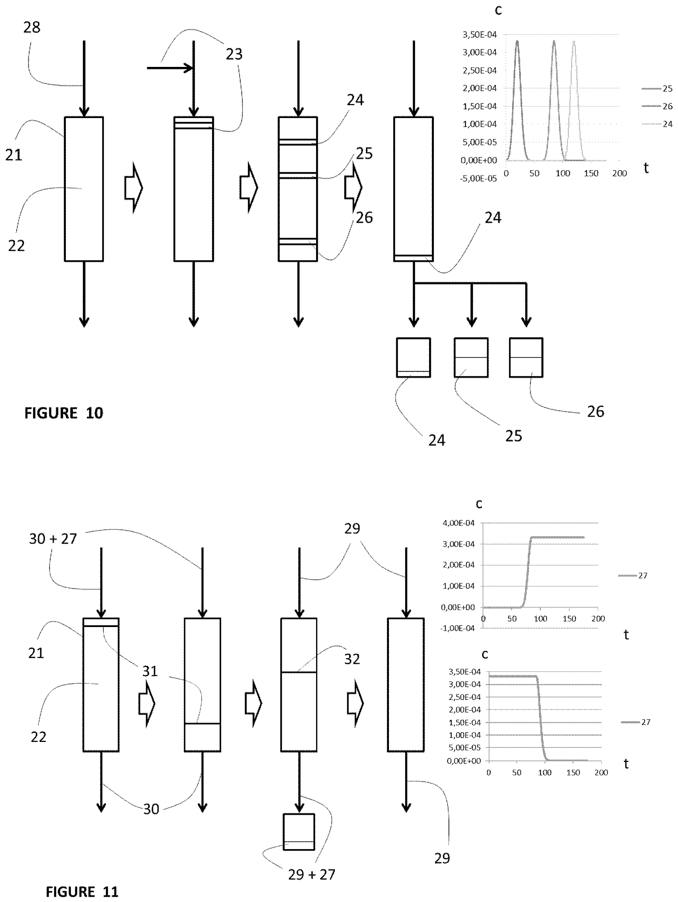

La figure 10 décrit un procédé de chromatographie d'élution. Suivant ce procédé un flux continu de phase mobile 28 de composition et de température éventuellement variables au cours du temps traverse la colonne de chromatographie 21 remplie d'une phase stationnaire 22. Un volume de charge à séparer 23 est injecté dans le flux d'alimentation. Sous l'effet antagoniste de la rétention réversible des espèces chimiques par la phase stationnaire et de l'élution ou entrainement par la phase mobile, les espèces migrent à des vitesses différentes le long de la colonne 21 et se séparent en bandes ou pics d'élutions 24, 25, 26, etc...

Les espèces séparées sont isolées en fractionnant le flux sortant de la colonne de façon à recueillir chaque bande au moment de sa sortie de la colonne dans le solvant d'élution.

Ce fractionnement peut être temporel dans le cas d'un procédé discontinu ou angulaire dans le cas d'un dispositif annulaire continu. Il peut consister en la séparation d'une fraction de tête et d'une fraction de queue pour un dispositif en lit mobile simulé.

Le chromatogramme représente les pics de concentration des espèces 24, 25, 26 en sortie de colonne en fonction du temps.

La figure 11 décrit un procédé de chromatographie d'affinité permettant la séparation de biomolécules. Un flux continu de solvant 30 contenant la biomolécule à séparer 27 alimente la colonne de chromatographie 21 remplie d'une phase stationnaire 22 présentant une forte affinité pour la biomolécule à séparer. Sous l'effet de cette forte affinité la molécule se fixe sur la phase stationnaire continûment jusqu'à saturation de celle-ci. Cette fixation est quasi irréversible dans les conditions de cette première phase. Le front de progression 31 de la concentration en 27 est dans ce cas un créneau progressant vers la sortie. La colonne est saturée lorsque la concentration en 27 devient significative dans le solvant en sortie de la colonne.

Lors d'une deuxième phase, on change les propriétés (pH, force ionique, etc...) ou la nature du solvant d'élution 29 de façon à diminuer ou éliminer l'affinité de la biomolécule 27 pour la phase stationnaire 22, et à solubiliser la biomolécule dans le solvant 29. La biomolécule 27 est éluée dans le solvant 29 sortant de la colonne 21 jusqu'à épuisement de la quantité présente dans celle-ci. La colonne 21 est alors régénérée et est prête pour un nouveau cycle.

Les chromatogrammes représentent les profils de concentration de l'espèce 27 en sortie de colonne en fonction du temps, lors des phases de fixation puis d'élution.

Avantageusement l'invention fait appel à un procédé de chromatographie d'élution.

La chromatographie d'élution peut être conduite par toute technique connue, comme par exemple la chromatographie discontinue sur colonne, la chromatographie annulaire continue radiale ou axiale, le lit mobile simulé.

Avantageusement, le procédé chromatographique mis en oeuvre pourra être un procédé de chromatographie d'affinité.

Avantageusement on caractérisera commodément une séparation chromatographique ou un procédé chromatographique en ce qu'il comprend au moins 300 étages théoriques, et de préférence au moins 1000 étages théoriques.

Ceci la différencie des séparations par membranes, des processus catalytiques et des séparations par adsorption ou échange d'ions en particulier.

On pourra avantageusement calculer le nombre d'étages théoriques NET optimal d'un procédé pour un composé non retenu par la formule :

$$NETMax = 1{,}6*L/(Dh+e*P)$$

Dans laquelle L est la longueur de la colonne, Dh est le diamètre hydraulique moyen (moyenne arithmétique) des conduits, e est l'épaisseur moyenne des parois, P est la fraction de vide des parois.

La chromatographie s'applique en phases liquide, gaz et supercritique.

L'invention permet d'optimiser l'efficacité et la rapidité d'un processus chromatographique par la sélection de la morphologie et de la structure du garnissage la plus avantageuse.

L'invention concerne un procédé de chromatographie dans lequel on fait circuler une phase mobile contenant des espèces à séparer au travers d'un garnissage,

ledit garnissage comprenant :

- une pluralité de conduits capillaires traversant le garnissage entre une face dite amont par laquelle la phase mobile pénètre dans le garnissage et une face dite aval par laquelle la phase mobile sort du garnissage, et
- un milieu continu et connexe perméable à la diffusion moléculaire s'étendant entre lesdits conduits, comportant un gel organique poreux ou un liquide organique et comportant une famille de pores assurant une connexité entre lesdits conduits.

Le procédé comprend donc un échange de matière entre la phase mobile et une phase stationnaire, qui peut être constituée du gel ou liquide organique lui-même ou d'un tiers corps solide contenu dans la porosité du gel organique.

Par « perméable à la diffusion moléculaire », on entend que les conduits du garnissage sont liés par une phase continue et connexe comportant au moins un gel organique poreux et/ou un liquide organique d'une part et éventuellement une phase mobile d'autre part, et comportant une famille de pores assurant une connexité entre lesdits conduits.

Avantageusement la taille des pores du milieu continu est supérieure à 2 fois le diamètre moléculaire d'au moins une espèce à séparer. De manière avantageuse, lorsqu'il existe plusieurs espèces à séparer, la taille des pores est supérieure à deux fois le diamètre moléculaire d'au moins deux espèces à éluer en séquence, voire de toutes les espèces à séparer.

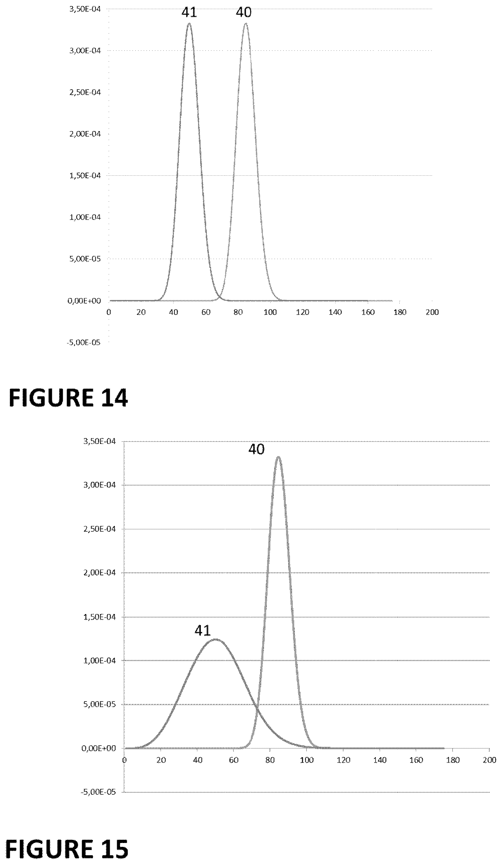

Cette caractéristique permet d'utiliser le garnissage dans des conditions d'efficacité optimales. Ceci est illustré par les figures 14 et 15.

La figure 14 représente schématiquement une simulation sur ordinateur de la séparation de deux espèces chimiques sur un garnissage multicapillaire à parois poreuses dont le diamètre des pores communicantes est supérieur à deux fois le diamètre moléculaire de chacune de ces espèces. Les conduits capillaires du garnissage présentent une variabilité statistique sur leur diamètre. Ces diamètres sont répartis sur une courbe de gauss dont l'écart type est égal à 5% de leur diamètre moyen.

Ces espèces sont par exemple un sel minéral comme du chlorure de sodium 40 et un peptide 41 dissous dans l'eau.

On constate une bonne séparation des deux pics d'élution permettant de séparer les deux espèces.

La figure 15 représente schématiquement une simulation sur ordinateur de la séparation des mêmes espèces chimiques sur un garnissage présentant des caractéristiques dimensionnelles identiques mais dont le diamètre des pores connexes est supérieur à deux fois le diamètre moléculaire de l'espèce 40 et est inférieur à deux fois le diamètre moléculaire de l'espèce 41.

On constate que les deux pics se recouvrent et ne permettent plus une séparation efficace et complète des deux espèces. Cet effet est dû au fait que la nature poreuse du gel permet l'équilibrage des concentrations entre les conduits par diffusion moléculaire dans le cas de l'espèce 40 et ne le permet plus dans le cas de l'espèce 41. De ce fait l'espèce 41 est sujette à un important étalement supplémentaire dû à la nature irrégulière des diamètres des conduits capillaires qui n'est plus compensée par la diffusion moléculaire entre les conduits adjacents.

Par conséquent, pour optimiser les performances de la séparation en présence de deux espèces (ou davantage) présentant des pics consécutifs, on fera en sorte que la taille des pores connexes soit supérieure à deux fois le diamètre moléculaire de chacune desdites espèces.

La diffusion moléculaire est liée classiquement à une différence de concentration et au coefficient de diffusion par la loi de Fick.

Avantageusement la taille des pores du milieu continu est supérieure à 10 fois le diamètre moléculaire des espèces à séparer.

Avantageusement la taille des pores du milieu continu est supérieure à 2 fois et inférieure à 1000 fois le diamètre moléculaire des espèces à séparer.

Avantageusement la taille des pores du milieu continu est supérieure à 2 fois et inférieure à 30 fois le diamètre moléculaire des espèces à séparer.

Avantageusement la phase mobile pénètre la totalité de la première population de pores connexes de façon à réaliser un continuum monophasique de phase mobile entre les conduits.

Avantageusement la diffusion moléculaire de la phase mobile entre les conduits s'effectue au sein dudit continuum de phase mobile.

On augmente ainsi l'importance de la diffusion moléculaire entre les conduits.

Avantageusement la phase continue et connexe liant les conduits est une phase condensée.

Avantageusement le milieu poreux continu et connexe s'étendant entre les parois ne présente pas d'interruption matérielle

La porosité du matériau peut être avantageusement définie en chromatographie de trois façons:

1. La porosité d'un gel organique pourra provenir du gonflement d'un gel réticulé dans un solvant organique, minéral ou aqueux, gonflement représentant avantageusement plus de 2% de son volume, et préférentiellement plus de 10% de son volume.

2. Elle pourra venir d'une porosité du gel à l'état non solvaté.

3. Elle pourra venir de la porosité d'un support sur lequel un gel polymérique est déposé sous forme d'une couche mince

A l'intérieur de cette définition de la perméabilité moléculaire, on entend avantageusement que dans les conditions du procédé chromatographique et pour les espèces à séparer :

- d'une part le débit molaire moyen de diffusion Phip entre les conduits adjacents sous l'effet d'une différence de concentration donnée des espèces à séparer entre les parois desdits conduits
- d'autre part le débit molaire moyen de diffusion Phic entre un conduit et la phase stationnaire que constitue le garnissage sous l'effet d'une même différence de concentration des espèces à séparer entre le fluide conduit par les conduits et la paroi desdits conduits.

sont proches l'un de l'autre,

Par débit moyen on entend que le débit constitue la moyenne de ce débit mesuré sur le garnissage dans son ensemble.

Par convention, on considérera que le débit molaire de diffusion Phic entre un conduit et la phase stationnaire que constitue le garnissage est mesuré en imposant une concentration uniforme à la paroi Cs et en calculant l'échange vis-à-vis de la concentration moyenne Ce du fluide parcourant le conduit. Cela se traduit par un nombre de Sherwood égal à 3,66 dans le cas d'un tube de section circulaire parcouru par un fluide en écoulement laminaire. Par proche l'un de l'autre, on entend en particulier que ledit débit molaire de transfert de matière des espèces à séparer entre les conduits adjacents entre leurs parois est au minimum 0,01 fois, avantageusement au moins 0,1 fois et encore plus avantageusement au moins 0,5 fois le terme dudit débit molaire lié au transfert de matière entre les conduits et leur phase stationnaire.

Dans le présent texte, on calculera le diamètre moléculaire de deux manières suivant le poids moléculaire de la substance considérée.

Pour les substances présentant une phase gazeuse et dont les coordonnées critiques sont accessibles, on utilisera le covolume, terme b de l'équation de Van der Waals, divisé par 4 et par le nombre d'Avogadro, et l'on calculera le diamètre d'une sphère de volume équivalent. On sait en effet que le covolume b est égal à quatre fois le volume moléculaire. Le covolume est aisément accessible à partir des coordonnées critiques du corps considéré.

Pour les macromolécules, les molécules biologiques (protéines, etc...) et les molécules dont les coordonnées critiques sont inaccessibles, on utilisera le diamètre hydrodynamique mesuré par diffusion dynamique de la lumière.

La phase mobile est, dans les conditions de mise en oeuvre du procédé, à l'état gazeux, liquide ou à l'état supercritique.

De manière préférée, la phase mobile est, dans les conditions de mise en oeuvre du procédé, à l'état liquide ou à l'état supercritique.

De manière plus préférentielle, la phase mobile est, dans les conditions de mise en oeuvre du procédé, à l'état liquide.

En effet, l'efficacité d'un garnissage augmente proportionnellement à la densité et à la diffusivité de la phase mobile qui le traverse. Pour augmenter l'efficacité du garnissage, on augmente la densité de la phase mobile qui le traverse en travaillant au voisinage du point critique de ladite phase mobile ou à l'état liquide.

Par ailleurs, le garnissage présente une solidité, une rigidité et une résistance mécanique suffisantes pour permettre la manipulation du garnissage.

Le garnissage peut avantageusement être mis en oeuvre à l'échelle industrielle sous des pertes de pression comprises entre un et quelques bars par mètre.

Le garnissage mis en oeuvre dans la présente invention est un garnissage poreux qui comprend une pluralité de conduits capillaires parallèles qui s'étendent dans la direction de circulation de la phase mobile, cette direction étant considérée comme la direction longitudinale du garnissage. Un tel garnissage est dit « multicapillaire ».

Ces conduits peuvent être vus comme un ensemble de macropores anisotropes distincts du matériau de garnissage qui les entoure et dans lequel ils sont inclus, et dans lesquels la phase mobile s'écoule de façon convective.

Avantageusement les conduits sont rectilignes, traversent le monolithe de part en part et sont débouchants en ses faces amont et aval.

Dans un tel garnissage, les conduits capillaires sont avantageusement vides de matière solide tandis que le matériau qui entoure les conduits est poreux. En particulier, au moins la paroi des conduits présente un réseau continu de pores, lesdits pores étant ouverts sur les conduits.

Les conduits capillaires sont avantageusement rectilignes, même s'il n'est pas exclu que les conduits présentent des coudes ou des angles.

Les conduits capillaires présentent une section uniforme les uns par rapport aux autres et sur leur longueur.

On définira commodément la variabilité de section des conduits par un écart type relatif. Cet écart type relatif représente le rapport de l'écart type du diamètre des conduits sur le diamètre moyen des conduits, exprimé en pourcentage. Avantageusement les conduits présentent un diamètre moyen substantiellement constant d'un conduit à l'autre, tel que l'écart type du diamètre sur l'échantillon de conduits du garnissage ne dépasse pas 30% du diamètre moyen, de préférence ne dépasse pas 10% du diamètre moyen, et encore plus préférentiellement ne dépasse pas 2,0 % du diamètre moyen. Dans le présent texte, on entend par moyenne d'un ensemble de valeurs d'une variable X sa moyenne arithmétique E[X]. L'écart type est défini comme la racine carrée de la moyenne arithmétique de $(X\text{-}E[X])^2$. Par distribution, on entend dans le présent texte un ensemble de valeurs de la variable X.

Avantageusement le diamètre ne varie pas de plus de 50% sur la longueur d'un même conduit.

Avantageusement, le diamètre ne varie de préférence pas de plus de 20% sur la longueur d'un même conduit. Encore plus avantageusement le diamètre ne varie pas de plus de 10% sur la longueur d'un même conduit. De manière encore préférée le diamètre ne varie pas de plus de 2% sur la longueur d'un même conduit.

Avantageusement, les conduits traversent le garnissage de part en part, permettant ainsi de minimiser la perte de charge au sein du garnissage lors du procédé de séparation chromatographique.

Avantageusement, le volume des conduits capillaires représente plus de 5% du volume total du garnissage, de préférence plus de 30% dudit volume total et de manière encore préférée plus de 50% du volume total du garnissage. On entend dans le présent texte par « volume total du garnissage » le volume occupé par le garnissage, incluant sa porosité et ses conduits ; ledit volume total peut donc être calculé à partir des dimensions extérieures dudit garnissage. Le volume des conduits est mesuré de la manière suivante : nombre de conduits x section moyenne d'un conduit x longueur moyenne d'un conduit.

De manière avantageuse, le volume occupé par le gel organique dans le garnissage est supérieur à 2% du volume du garnissage à l'exclusion des conduits, de préférence supérieur à 10% dudit volume et de manière encore préférée supérieur à 40% dudit volume. Par « volume du garnissage à l'exclusion des conduits », on entend la différence entre le volume total du garnissage et le volume des conduits capillaires.

Les conduits peuvent présenter une section de toute forme appropriée, par exemple une forme circulaire, carrée, rectangulaire, hexagonale, en étoile, en forme de fente, etc. Lorsque les conduits ont une section non circulaire, on entend par « diamètre » desdits conduits leur diamètre hydraulique.

De manière avantageuse, les conduits présentent un diamètre hydraulique inférieur ou égal à 500 $\mu$m. Selon un mode de réalisation, le diamètre hydraulique des conduits est inférieur ou égal à 150 $\mu$m, voire inférieur ou égal à 50 $\mu$m. Le diamètre hydraulique est classiquement calculé comme égal à quatre fois la section d'un conduit (en m$^2$) divisée par le périmètre dudit conduit mouillé par la phase mobile (en m).

Pour un procédé de chromatographie en phase liquide, les conduits présentent de préférence un diamètre inférieur à 500 $\mu$m, de manière très préférentielle inférieur à 30 $\mu$m, et de manière encore plus préférentielle inférieur à 15 $\mu$m.

Pour un procédé de chromatographie en phase supercritique, les conduits présentent de préférence un diamètre inférieur à 80 $\mu$m, de manière préférée inférieur à 30 $\mu$m, et de manière encore plus préférentielle inférieur à 5 $\mu$m.

Pour un procédé de chromatographie en phase gaz, les conduits présentent de préférence un diamètre inférieur à 500 $\mu$m, de manière préférée inférieur à 250 $\mu$m, et de manière encore plus préférentielle inférieur à 50 $\mu$m.

En effet la chromatographie en phase liquide s'effectue de façon simple dans des appareils gravitaires, ou le poids de la colonne de fluide sur le garnissage provoque son écoulement.

La limite haute du diamètre des capillaires sera obtenue lorsque l'écoulement du fluide à la vitesse permettant l'optimum de l'efficacité du garnissage provoquera une perte de charge égale au poids de la colonne de fluide considérée sur la hauteur du lit.

On sait que pour un garnissage multicapillaire à l'optimum d'efficacité :

$$\frac{V_c * d_c}{D_0} = V_R$$

La loi de Poiseuille s'écrit

$$\Delta P = \frac{32 * \mu * LG * v_c}{d_c^2}$$

La pression provoquée par une hauteur de fluide LG s'écrit

$$\Delta P = \rho * g * LG$$

Il en résulte que :

$$d_{max} = \sqrt[3]{\frac{32 * \mu * D_0 * V_R}{\rho * g}}$$

Le tableau ci-dessous exemplifie d$_{max}$ pour différents liquides courants en chromatographie.

| solvant | $\mu$ (Po) | Do (m2/s) | $V_R$ | $\rho$ (kg/m3) | dmax ($\mu$m) |
|---------|-----------|-----------|-------|---------------|---------------|
| Eau | 0,001 | 1E-09 | 5 | 1000 | 25,3869139 |
| Hexane | 0,00031 | 3E-09 | 5 | 659 | 28,4754613 |
| Methanol | 0,00055 | 2E-09 | 5 | 791 | 28,3363475 |
| Chloroforme | 0,00057 | 2E-09 | 5 | 1480 | 23,2716977 |

$V_R$ est en général compris entre 2 et 5.

On pourra prendre de façon simplifiée la valeur de 50 μm comme seuil de coupure haut du diamètre des conduits permettant de tirer utilement parti des avantages de la chromatographie multicapillaire. De la même façon simplifiée, on pourra prendre la valeur de 80 μm comme seuil de coupure haut du diamètre intérieur des conduits compte tenu de l'épaisseur de la phase stationnaire.

Dans ces formules $V_c$ est la vitesse de phase mobile dans le conduit, $d_c$ est le diamètre intérieur moyen du conduit, $D_0$ est la diffusivité des espèces à séparer dans la phase mobile, μ est la viscosité de la phase mobile, ρ est la densité de la phase mobile, LG est la longueur de la colonne, g est l'accélération de la pesanteur, ΔP est la perte de charge du fluide dans le conduit, $d_{max}$ est le diamètre intérieur moyen maximal admissible pour une séparation chromatographique. Toutes ces grandeurs sont exprimées dans le système d'unités SI.

Avantageusement les conduits sont répartis sur un seul mode, c'est-à-dire autour d'un seul diamètre moyen.

Sans sortir du cadre de l'invention, le diamètre des conduits peut cependant être réparti sur plusieurs modes, et en particulier sur deux modes. Les lois connues reliant moyennes et variances de plusieurs populations peuvent être appliquées de façon à respecter les contraintes numériques précédentes reliant moyenne et écart type relatif.

Par ailleurs, les conduits peuvent être disposés régulièrement suivant une maille axiale carrée ou triangulaire régulière. On entend par là que les axes des conduits se disposent aux sommets de carrés étroitement empilés de cotés substantiellement constants ou de triangles équilatéraux étroitement empilés de cotés substantiellement constants.

Enfin, l'écart type relatif de l'épaisseur de la paroi séparant deux conduits adjacents mesuré sur une section du garnisssage est de préférence inférieur à 30%, encore plus préférentiellement inférieur à 10%, et encore plus préférentiellement inférieur à 2,0%. Dans ce cas, l'écart type relatif caractérise le rapport entre l'écart type de l'épaisseur de la paroi et sa moyenne, exprimé en %.

Avantageusement, le garnissage peut présenter toute surface spécifique comprise entre 0,1 et 1200 $m^2$/g.

Avantageusement lorsque le garnissage comprend un gel organique monolithique poreux agissant en tant que phase stationnaire par adsorption sur sa surface poreuse, cette surface sera de préférence supérieure à 60 $m^2$/g, et encore plus préférentiellement comprise entre 80 et 600 $m^2$/g. Cette surface pourra être brute ou modifiée par un traitement chimique de surface.

Avantageusement lorsque le garnissage comprend un gel organique supporté par une structure sous-jacente et agissant dans sa masse par pénétration des molécules à séparer dans son volume, la structure de support de la phase organique aura une surface spécifique de préférence inférieure à 60 $m^2$/g, de préférence inférieure à 20 $m^2$/g, et encore plus préférentiellement inférieure à 2 $m^2$/g.

Avantageusement la taille de pores moyenne des parois des conduits du garnissage sera comprise entre quelques Angström et plusieurs centaines de nanomètres en fonction des besoins et du type de chromatographie utilisée.

Le volume poreux des parois du garnissage sera avantageusement compris entre 0 $cm^3$/g (tel est le cas lorsque les parois du garnissage sont remplies par une phase stationnaire liquide par exemple) et plusieurs $cm^3$/g (cas des phases stationnaires polymériques de type PS-DVB monolithiques actuelles par exemple)

Comme exposé plus haut, l'invention met en oeuvre un garnissage qui comprend un gel ou un liquide organique perméable à la diffusion moléculaire.

Ce gel ou liquide organique peut être le matériau constitutif du garnissage, ou bien former seulement une partie du garnissage, par exemple en tant qu'imprégnation de la porosité d'un matériau poreux de nature différente ou en tant que couche de revêtement déposée sur un matériau poreux de nature différente de sorte à recouvrir les pores dudit matériau.

Selon un mode de réalisation, le garnissage est un monolithe formé dudit gel organique. Dans ce garnissage, le gel organique forme un squelette continu définissant un réseau continu de pores s'étendant entre les conduits et ouverts sur les conduits.

Selon un autre mode de réalisation, le garnissage est un monolithe comprenant un squelette poreux formé d'un matériau autre qu'un gel organique et dont les pores sont remplis d'un gel ou liquide organique. Ainsi, le gel ou liquide organique forme un milieu continu perméable à la diffusion moléculaire s'étendant entre les conduits.

Selon une variante, le garnissage est un monolithe comprenant un squelette poreux formé d'un matériau autre qu'un gel organique et dont la surface des pores est recouverte d'un film de gel organique, de telle sorte que les pores du matériau renferment un volume résiduel dépourvu de gel organique, libre pour la diffusion de la phase mobile.

Selon une autre forme d'exécution, le garnissage comprend un empilement de fibres poreuses et creuses. Chaque fibre comprend un lumen formant un conduit capillaire et une paroi comprenant un réseau continu de pores.

Avantageusement ces fibres sont empilées de façon compacte de façon à occuper plus de 60% du volume total du garnissage, et de préférence plus de 80% du volume total du garnissage.

Selon un mode de réalisation, chaque fibre est constituée d'un gel organique.

De manière alternative, chaque fibre est recouverte ou imprégnée d'un gel organique.

De préférence, lesdites fibres sont rendues jointives au moyen du gel ou liquide organique perméable à la diffusion moléculaire.

Par rapport aux garnissages constitués d'une masse poreuse de gel organique dépourvue de conduits capillaires, un garnissage multicapillaire de gel organique présente, à efficacité égale, une perte de charge nettement plus faible (de l'ordre de 10 à 30 fois).

Par conséquent, la formation de conduits capillaires dans le garnissage permet de compenser la relativement faible résistance mécanique du garnissage en gel organique par la réduction de la perte de charge et par conséquent l'obtention de contraintes mécaniques modérées s'exerçant sur le garnissage pendant le procédé de chromatographie.

Pour assurer une bonne cohésion mécanique du garnissage, les conduits capillaires sont avantageusement rendus solidaires mécaniquement au moyen d'un milieu solide continu entre les conduits et contenant un gel ou liquide organique perméable à la diffusion moléculaire. Ce milieu continu crée une liaison entre les conduits qui permet à la diffusion moléculaire de s'effectuer librement entre des conduits adjacents.

Comme cela sera exposé plus bas, la mise en oeuvre d'un échange diffusif entre les conduits permet d'augmenter le nombre de plateaux théoriques disponibles pour un procédé de séparation chromatographique, et ainsi d'augmenter l'efficacité d'un tel procédé.

La mise en oeuvre d'un échange diffusif entre les conduits permet de niveler les différences de comportements entre conduits individuels. Il est donc nécessaire d'augmenter l'intensité de ces échanges afin d'obtenir une augmentation de l'efficacité mesurée en termes de plateaux théoriques disponibles.

L'augmentation de cette efficacité se traduit par un pouvoir séparateur plus important du garnissage vis-à-vis d'un mélange donné. Un mélange d'espèces de propriétés très proches pourra être résolu plus facilement, et ces espèces séparées avec un plus grand degré de pureté.

Dans la mesure où le gel organique est sujet à un certain gonflement entre l'état sec et l'état mouillé, il est avantageux, pour éviter des variations de diamètre des conduits, de renforcer le gel organique au moyen d'une structure dimensionnellement plus stable que ledit gel organique.

Par « structure dimensionnellement stable » on entend une structure ne présentant pas ou peu de déformation mécanique dans les conditions d'utilisation du garnissage. En particulier cette structure ne présente pas d'effet de gonflement notable en présence des solvants éluants caractéristiques d'un procédé chromatographique en phase liquide ou supercritique, ledit gonflement restant avantageusement inférieur à 10 % du volume total du garnissage, et de préférence inférieur à 2% dudit volume total.

Une structure dimensionnellement stable utilisable pour l'obtention d'un garnissage adapté à la mise en oeuvre de l'invention comprend un volume poreux le plus élevé possible destiné à servir de réservoir au gel ou liquide organique. Ledit volume poreux est de préférence supérieur à 20% du volume du garnissage à l'exclusion des conduits, avantageusement supérieur à 40 % de ce volume, et encore plus avantageusement supérieur à 60 % de ce volume.

Avantageusement une telle structure dimensionnellement stable présente une surface inerte chimiquement et une faible surface spécifique afin de ne pas interférer avec le processus chromatographique prenant place dans le gel organique. Avantageusement cette surface spécifique sera inférieure à 20 $m^2/g$, de préférence inférieure à 2 $m^2/g$, et encore plus préférentiellement inférieure à 0,2 $m^2/g$.

Selon un mode de réalisation, la structure dimensionnellement stable est un tissu ou un non tissé en un matériau minéral ou organique. Avantageusement ce tissu est en une ou plusieurs fibres de structure comme de la fibre de verre, de la fibre de carbone, de la fibre aramide, de la fibre métallique ou un de leurs mélanges. Pour former ladite structure, on utilise avantageusement une technique de tissage : des fibres précurseurs des conduits (c'est-à-dire présentant un diamètre extérieur égal au diamètre des conduits et destinées à être ultérieurement détruites pour former les conduits) sont tissées en trame et des fibres de structure sont agencées en chaîne, ou vice versa. Le tissu est mis en forme, par exemple enroulé ou empilé. Il est imprégné de liquide précurseur du gel organique ou d'une matrice poreuse d'un autre matériau. Le liquide précurseur est polymérisé ou la matrice poreuse est liée de façon à conférer à l'ensemble une tenue mécanique optimale. La fibre de structure assure le support des contraintes liées aux gonflements du matériau et améliore sa longévité et sa stabilité dimensionnelle en opération.

De manière alternative, la structure dimensionnellement stable est un faisceau de fibres en un matériau minéral ou organique.

Selon un autre mode de réalisation, la structure dimensionnellement stable est une charge de renfort comme des fibres, microfibres, nanofibres coupées ou broyées, des silices précipitées, un kieselgur, etc. Parmi les fibres coupées, hachées ou broyées, on notera les fibres de polyoléfines, de verre, de silice, d'aramides, de métal.

Selon une forme d'exécution, la structure dimensionnellement stable constitue le squelette rigide du garnissage. Cette structure dimensionnellement stable peut être une structure poreuse monolithique multicapillaire comme un monolithe en céramique, en métal ou en polymère. Parmi les céramiques possibles on citera en particulier mais de façon non limitative l'oxyde de titane, l'oxyde de zirconium les alumines, les aluminosilicates, la cordiérite, la mulite, la silice, le verre, les silicates métalliques comme les silicates de zinc, de magnésium, de calcium, d'aluminium, de titane, de zirconium, etc. ou les aluminosilicates de ces métaux. Ces monolithes peuvent être obtenus par des procédés connus, par exemple par extrusion et frittage. Cependant ces procédés par extrusion sont mal adaptés à réaliser des conduits de diamètre inférieurs à 0,8 à 1,2 mm et sont donc peu efficaces vis-à-vis de phénomènes diffusifs. Ils seront en particulier peu productifs.

De manière avantageuse, lesdits monolithes sont obtenus par l'un quelconque des procédés décrits dans les demandes WO 2011/114017 et WO 2013/064754 de Parmentier.

De tels monolithes comprennent avantageusement un volume poreux le plus élevé possible afin de servir de réservoir au gel ou liquide organique, de préférence supérieur à 20% du volume du garnissage à l'exclusion des conduits, avantageusement supérieur à 40 % de ce volume, et encore plus avantageusement supérieur à 60 % de ce volume.

Les monolithes multicapillaires pour la réalisation de l'invention seront avantageusement basés sur des réseaux de polymères organiques ou minéraux.

Les monolithes multicapillaires pour la réalisation de l'invention seront avantageusement basés sur des réseaux de polymères hautement réticulés ou sur des réseaux de silice ou d'alumine poreuse ou d'une de leurs combinaisons. Ces réseaux peuvent être réalisés de la même façon que les garnissages actuellement dits monolithiques pour la chromatographie, qui sont des monolithes de haute porosité macroporeux non multicapillaires.

Par combinaison de silice et d'alumine on entend toute formulation contenant principalement de la silice et de l'alumine sous forme combinée, ou sous forme de mélange, ou simultanément sous forme combinée et sous forme de mélange. En particulier le monolithe multicapillaire peut être constitué d'une silice bimodale. Cette silice bimodale est constituée d'un squelette poreux mésoporeux tridimensionnel dans lequel s'inscrit un volume de macropores interconnectées. Dans ce cas, le gel organique est éventuellement occlus dans le volume des mésopores.

Par « mésopores » on entend des pores dont le diamètre est compris entre 2 et 50 nanomètres ; par « macropores » on entend des pores dont le diamètre est supérieur à 50 nanomètres ; par « micropores » on entend des pores dont le diamètre est inférieur à 2 nanomètres.

Les tailles de pores mentionnées dans le présent texte sont mesurées selon deux techniques différentes selon la nature du matériau testé : lorsqu'il s'agit d'un matériau minéral et en particulier de silice, la technique employée est la porosimétrie au mercure pour la macro et mésoporosité, et l'adsorption d'azote pour la microporosité ; lorsqu'il s'agit de matériaux polymériques ou basés sur des matrices minérales recouvertes de gels organiques, on utilise la porosimétrie au mercure pour la macroporosité et la porosimétrie par adsorption d'azote pour la mésoporosité et la microporosité.

Selon un mode de réalisation, le gel organique recouvre le squelette des mésopores. Le volume des macropores reste avantageusement ouvert et interconnecté de façon à assurer une diffusion libre des espèces contenues dans la phase mobile dans la masse du monolithe.

Avantageusement on augmente le volume des mésopores et macropores.

On peut également stabiliser un monolithe support en silice par précipitation ou adsorption d'oxyde de zirconium sur sa surface de façon à le rendre stable à pH alcalin.

Avantageusement on utilise comme support du gel organique ou du liquide organique des silices bimodales dont le volume des mésopores est compris entre 10% et 40% du volume poreux total.

Avantageusement on utilise comme support du gel organique ou du liquide organique des silices bimodales dont le volume des macropores est compris entre 60% et 90% du volume poreux total.

Lorsque le gel organique est inclus dans une structure poreuse, il peut être constitué de molécules de faible poids moléculaire, avantageusement inférieur à 1000 g/mole, encore plus avantageusement inférieur à 500 g/mole, et encore plus préférentiellement inférieur à 150 g/mole. Ces substances de faible poids moléculaires pourront dans ce cas particulier être des liquides organiques.

Dans le cas de la chromatographie en phase liquide, les liquides organiques pouvant être utilisés en tant que gel organique pour mettre en oeuvre l'invention seront en particulier des aldéhydes, des cétones (methyl ethyl cetone, methyl isobutyl cetone, methyl cyclohexanone, dimethyl cyclohexanone), des esters (cyclohexyl acetate, furfuryl acetate, amyl acetate), des ethers (2-chloro-2methoxy diethyl ether, diisopropyl ether) des hydrocarbures aliphatiques et aromatiques (hexane, dodecane, et benzene, toluene)des alcools (iso-butanol, pentanol, octanol, dodecanol, methyl cyclohexanol, 2-ethyl hexanol), des acides carboxyliques (acide octanoïques, acides naphteniques). D'autres liquides organiques peuvent être utilisés, tels que le tributyl phospahate, le trioctyl phosphate, l'oxyde de trioctyl phosphine, les esters de l'acide phosphoniques, le dimethyl phtalate, le diethyl oxalate, les acides aryle sulfoniques, les hydroxyoximes, les dérivés des oximes, les beta dicétones, les alkylaryl sulfonamides, les amines primaires, secondaires, tertiaires, quaternaires, etc...

Un avantage des liquides organiques par rapport aux gels organiques est leur vieillissement très homogène, qui permet de maintenir un procédé chromatographique homogène au sein du garnissage même lorsque celui-ci est sujet à un vieillissement. Un tel vieillissement est notamment dû à la présence de particules contaminantes. Contrairement au gel organique, le liquide organique permet la diffusion de telles particules dans sa masse de sorte à obtenir une répartition régulière au sein du liquide.

Lorsque le procédé est utilisé pour séparer des molécules biologiques, par exemple des protéines, le liquide organique contient de préférence des micelles nanométriques de solution aqueuses stabilisées dans la phase moins polaire par des surfactants, appelées micelles inversées. Ces micelles inverses sont dotées d'une certaine charge électrostatique dépendant du pH qui peut permettre de solubiliser une protéine de charge opposée. Dans le cadre d'un procédé chromatographique, quand les produits à séparer sont des protéines et que la phase organique immobilisée contient de telles micelles inverses, le pH de la phase mobile est ajusté de façon à ce que ces micelles inverses solubilisent une protéine particulière. Après que les protéines de charges électrostatiques substantiellement semblables aient été séparées (comme n'étant pas solubles dans les micelles inverses), la protéine solubilisée dans les micelles inverses peut être éluée en changeant le pH de la phase mobile.

Dans le cas de la chromatographie en phase gaz, les liquides organiques pouvant être utilisés pour mettre en oeuvre l'invention seront en particulier des polysiloxanes, comportant des radicaux méthyl, benzyle, trifluoropropyle, cyano propyle, etc., des polyethylene glycols, etc.

Le gel organique est suffisamment perméable pour permettre une diffusivité élevée des espèces de la phase mobile entre les différents conduits voisins. On accroît ainsi considérablement l'efficacité d'un procédé chromatographique en nivelant les différences de comportement de conduits capillaires légèrement différents en diamètre, en épaisseur de paroi, etc. grâce aux diffusions moléculaires entre conduits voisins.

Suivant un mode de réalisation, on crée à cet effet dans la masse du gel organique ou autour du gel organique un réseau continu de pores connexes. Ces pores connexes sont constitués de mésopores, de mésopores et de macropores, ou de macropores.

Avantageusement, ces pores appartiennent à au moins deux réseaux indépendants de mésopores et de macropores.

On fait de préférence en sorte que le volume poreux du garnissage contenant le gel organique soit supérieur à 20%, de préférence supérieur à 40% et encore plus préférentiellement supérieur à 60% du volume total du garnissage à l'exclusion du volume des conduits.

Avantageusement quoique de façon non exclusive, on fait en sorte que le gel organique contienne des macropores de taille supérieure à 50 nanomètres. Ces macropores permettent aux molécules du solvant et à certaines de celles de la charge de diffuser rapidement dans le gel organique.

Suivant un mode de réalisation particulièrement avantageux de l'invention, les parois du garnissage comportent une fraction volumique vide de gel ou liquide organique et, le cas échéant, de phase stationnaire. Cette fraction permet de servir de réserves volumiques vis à vis des phénomènes de gonflement subi par le gel organique en contact avec un solvant ou des solutés en relâchant les contraintes mécaniques induites et en assurant l'intégrité et la permanence dimensionnelle du diamètre des conduits. En effet, les phénomènes de gonflement du gel organique sont absorbés et compensés macroscopiquement par ce volume vide dans le volume interne des parois des conduits et n'ont pas d'effet sur le volume offert à l'écoulement de la phase mobile.

Avantageusement cette fraction de volume vide est accessible à la phase stationnaire.

Avantageusement cette fraction de volume vide représente plus de 5% du volume du gel organique, préférentiellement plus de 10% du volume du gel organique, et encore plus préférentiellement plus de 25% du volume du gel organique. Ce phénomène est de manière particulièrement avantageuse utilisé en combinaison avec un renforcement du gel organique par une structure dimensionnellement stable.

En effet, la structure dimensionnellement stable assure la constance des dimensions géométriques du garnissage et en particulier du diamètre des conduits, en supportant les contraintes mécaniques associées aux phénomènes de gonflement ou de retrait du gel organique au cours de ses cycles d'utilisation. Ces phénomènes de retrait et de gonflement sont ainsi rejetés entièrement vers le volume poreux du gel organique. L'augmentation ou la diminution du volume du gel organique liée à des différences de solvatation se répercute intégralement sur une diminution ou une augmentation de son volume poreux en gardant constantes les dimensions de son enveloppe macroscopique et en particulier les diamètres des conduits.

A cet effet, on peut déposer le gel organique sous forme d'une couche mince sur un support poreux.

Ce dépôt peut se faire par toute technique connue de l'homme du métier comme par trempage de la structure dimensionnellement stable dans une solution du gel organique dans un solvant, ou dans une solution d'un précurseur du gel organique. Le drainage de la structure et l'évaporation du solvant laissent sur toute l'étendue de la paroi interne ou surface spécifique de cette structure une mince couche de gel organique ou de précurseur du gel organique qui peut être polymérisé ou réticulé in situ.

Cette mince couche de gel organique laisse libre un volume poreux vide de gel organique.

Avantageusement ce volume poreux libre est continu et connexe, c'est-à-dire que ses pores communiquent entre elles. Ce volume poreux accessible à la phase mobile permet une diffusion efficace des molécules dissoutes entre conduits adjacents.

Selon un mode de réalisation, le gel organique est déposé sous forme d'une couche mince sur le squelette d'une structure de silice bimodale ou d'un monolithe organique. Ladite couche mince est d'épaisseur micrométrique ou submicrométrique.

Ladite couche mince peut être déposée en quantité suffisante pour recouvrir le squelette du monolithe, mais en quantité insuffisante pour remplir le volume des macropores. En particulier, elle est déposée de façon à conserver un volume de macropores connexe et continu dans le garnissage et entre les conduits. Un tel dépôt peut être effectué par exemple en remplissant les macropores et les mésopores des précurseurs du gel organique à l'état dissout dans un solvant volatil et à évaporer le solvant de façon uniforme avant réticulation éventuelle du gel organique in situ.

Le dépôt peut avoir lieu dans toute la masse de la structure ou sur une partie seulement de celle-ci. En particulier il peut consister en une couche de gel organique déposé sur sa surface ainsi que sur la paroi des conduits.

Afin de conférer à un gel organique polymérique la porosité requise on peut conduire la polymérisation en présence d'un agent porogène ultérieurement éliminé. Cet agent porogène peut être un solvant ou un corps ultérieurement éliminé par dissolution, évaporation ou attaque chimique comme une macromolécule ou un gel de silice ou d'alumine. Lorsqu'il s'agit d'un solvant il conduira à la précipitation du gel organique durant sa polymérisation. Lorsqu'il s'agit d'une macromolécule elle pourra en particulier servir à agréger ou coacerver entre elles des particules de gel organique polymérique.

L'agent porogéne pourra en particulier être un solvant organique ou de l'eau. On peut utiliser par exemple des solvants organiques comme les alcools, les esters, les éthers, les hydrocarbures aliphatiques et aromatiques, les cétones, les di, tri tetraethylene glycols, les butane diols, glycérols etc. Parmi les solvants lourds porogènes on citera le tetrahydronahtalène, le décahydronaphtalène, l'anthracène, le biphényle, les huiles de paraffine, l'acide stéarique, oléique, palmitique, les phtalates de dialkyle, le camphre et ses esters, le dodecanol -1, l'octanol-1, le cyclohexanol ou un mélange de ceux-ci.

La quantité d'agent porogène peut varier entre 10 et 90% et préférentiellement entre 20 et 60% en volume du mélange final comprenant les monomères.

L'agent porogène influe sur la répartition finale en termes de taille des pores.

Selon un mode de réalisation la structure dimensionnellement stable est liée au gel organique polymérique par des liaisons chimiques, notamment des liaisons covalentes. Avantageusement, ces liaisons covalentes sont réalisées par greffage sur la surface de la structure dimensionnellement stable d'un agent de couplage apte à réagir avec le gel organique avant, après ou pendant sa réticulation ou sa polymérisation. Ledit agent de couplage peut comprendre des liaisons vinyliques, acryliques ou méthacryliques pour se coupler aux gels vinyliques, styréniques ou acryliques. Avantageusement cet agent de couplage comprend des groupements alcool, et plus avantageusement des molécules d'oses ou d'holosides pour se coupler aux polyholosides tels que le dextrane ou l'agarose au cours de leur réticulation. Parmi les agents de couplage utilisables on citera entre autres de façon non limitative les Dodecyltrimethoxysilane, Octadecyltrimethoxysilane, Methyltrimethoxysilane, n-Octyltriethoxysilane, n-Octyltrimethoxysilane, n-Propyltrimethoxysilane, n-Propyltriethoxysilane, Methyltriacetoxysilane, Ethyltriacetoxysilane, Vinyltriacetoxysilane, Vinyltri(2-methoxyethoxy)silane, 3-Chloropropyltriethoxsilane, 3-Chloropropyltrimethoxysilane, 3-Chloropropylmethyldimethoxysilane, 3-Aminopropyltriethoxysilane, 2-Aminoethyl-3-aminopropyltrimethoxysilane, 3-Aminopropyltrimethoxysilane, Bis(trimethoxysilypropyl)amine, 3-Ureidopropyltrimethoxysilane, 3-Glycidoxypropyltrimethoxysilane, 3-Glycidoxypropylmethyldimethoxysilane, 3-Methacryloxypropyltrimethoxysilane, 3-Methacryloxypropylmethyldimethoxysilane, Bis(3-triethoxysilylpropyl)tetrasulfide, Bis(3-triethoxysilylpropyl)disulfide, 3-Mercaptopropyltrimethoxysilane, 3-Mercaptopropylmethyldimethoxysilane, Vinyltris(methylethylketoxime)silane, vinyl Oximino Silane, Methyltris(methylethylketoxime)silane, Methyl Oximino Silane, Tetra(methylethylketoxime)silane, Trifluoropropylmethyldimethoxylsilane, des silanes contenant des liaisons époxy, etc.

Comme précédemment mentionné, par « perméable à la diffusion moléculaire », on entend que les conduits du garnissage sont liés par une phase continue et connexe comportant au moins un gel organique poreux et/ou un liquide organique d'une part et éventuellement une phase mobile d'autre part, et comportant une famille de pores assurant une connexité entre lesdits conduits

Avantageusement la taille des pores du milieu poreux est supérieure à 2 fois le diamètre moléculaire des espèces à séparer.

Avantageusement la phase continue et connexe liant les conduits est une phase condensée.

Avantageusement le milieu poreux continu et connexe s'étendant entre les parois ne présente pas d'interruption matérielle.

La porosité du matériau peut être avantageusement définie en chromatographie de trois façons:

1. La porosité d'un gel organique pourra provenir du gonflement d'un gel réticulé dans un solvant organique, minéral ou aqueux, gonflement représentant avantageusement plus de 2% de son volume, et préférentiellement plus de 10% de son volume.
2. Elle pourra venir d'une porosité du gel à l'état non solvaté.
3. Elle pourra venir de la porosité d'un support sur lequel un gel polymérique est déposé sous forme d'une couche mince.

A l'intérieur de cette définition de la perméabilité moléculaire, on entend avantageusement que dans les conditions du procédé chromatographique et pour les espèces à séparer :

- d'une part le débit molaire de diffusion moyen Phip entre les conduits adjacents sous l'effet d'une différence de concentration donnée des espèces à séparer entre les parois desdits conduits
- d'autre part le débit molaire de diffusion moyen Phic entre un conduit et la phase stationnaire que constitue le garnissage sous l'effet d'une même différence de concentration des espèces à séparer entre le fluide conduit par les conduits et la paroi desdits conduits.

sont proches l'un de l'autre.

Par convention, on considérera que le débit molaire de diffusion Phic entre un conduit et la phase stationnaire que constitue le garnissage est mesuré en imposant une concentration uniforme à la paroi Cs et en calculant l'échange vis-à-vis de la concentration moyenne Ce du fluide parcourant le conduit. Cela se traduit par un nombre de Sherwood égal à 3,66 dans le cas d'un tube de section circulaire parcouru par un fluide en écoulement laminaire.

Par proche l'un de l'autre, on entend en particulier que ledit débit molaire de transfert de matière des espèces à séparer entre les parois des conduits adjacents est au minimum 0,01 fois, avantageusement au moins 0,1 fois et encore plus avantageusement au moins 0,5 fois le terme dudit débit molaire lié au transfert de matière entre les conduits et leur phase stationnaire.

Par débit moyen on entend que lesdits débits sont calculés pour un diamètre de conduit moyen et une épaisseur de paroi moyenne du garnissage, lesdites moyennes étant des moyennes arithmètiques.

Ceci revient à exprimer en d'autres termes que le terme de conductance lié au transfert de matière entre les conduits adjacents au niveau de leur paroi est au minimum 0,01 fois, avantageusement au moins 0,1 fois et encore plus avantageusement au moins 0,5 fois le terme de conductance lié au transfert de matière entre les conduits et leur phase stationnaire

Rappelons que

$$Sh = k*D/Diff$$

k est le coefficient de transfert de matière, D le diamètre du conduit, Diff le coefficient de diffusion.

On en déduit le débit molaire de transfert de matière diffusif Phi par unité de surface de la paroi du conduit :

$$Phic = k*(Cs-Ce)$$

Avantageusement cette valeur se mesure sur les composants du mélange à séparer dans les conditions de la séparation ou du procédé chromatographique.

Afin de connaitre la permittivité ou la diffusivité effective d'une structure de paroi réelle, et calculer un débit de diffusion molaire Phip dans la paroi séparant des conduits adjacents, et le débit de diffusion entre un conduit et sa paroi contenant la phase stationnaire Phic, on fera de préférence appel à une simulation sur ordinateur comportant tous les détails morphologiques, géométriques et constitutifs, physiques et physico-chimiques de ladite paroi et du garnissage. Des logiciels comme COMSOL multiphysics permettent de réaliser aisément de telles performances.

Les données d'entrées d'une telle simulation sont essentiellement

- les fractions poreuses remplies par des phases mobiles dans la paroi, la tortuosité et la taille de pore moyenne et répartition en taille de pores de ces fractions poreuses ainsi que la diffusivité moléculaires des espéces à séparer mesurées dans ces phases dans les conditions de la séparation chromatographique. Lorsque celles-ci ne sont pas disponibles expérimentalement, on pourra les estimer par la méthode de Wilke et Chang.
- Les fractions poreuses remplies par du gel organique ou une phase stationnaire liquide organique dans la paroi, ainsi que la diffusivité moléculaires des espèces à séparer mesurées dans ces gels si il y a lieu dans les conditions de la séparation chromatographique.
- La géométrie de la paroi incluant des détails tels que la position et les dimensions des zones remplies par le gel organique, le liquide organique et la phase mobile et d'éventuelles zones mortes ou remplies par des fluides ou substrats autres que les phases mobile, liquide organique et gel organique, ainsi que la diffusivité moléculaires des espèces à séparer mesurées dans celles-ci dans les conditions de la séparation chromatographique.
- Les coefficients de partage des espèces à séparer entre les différentes phases en présence dans le domaine de concentration rencontré durant le processus chromatographique.
- La perte de charge appliquée au garnissage et la composition du fluide éluant ainsi que sa viscosité dans les conditions de la séparation chromatographique.

De façon plus approchée en préliminaire à une simulation on pourra approcher les débits diffusionnels par les équations suivantes.

On peut définir les grandeurs numériques suivantes :

$$G_{paroi} = K*D_{eff}/ep$$

$$G_{mobile} = 3.66*Do/(Dh)$$

avec

$$K=C_{stat}/C_{mobile}$$

et on en déduit Phic/Phip > $G_{mobile}/G_{paroi}$

où K est le coefficient de partage de l'espèce considérée entre la phase stationnaire considérée comme étant définie par tout le volume de la paroi, et la phase mobile, $C_{stat}$ est la concentration de l'espèce à séparer dans la phase stationnaire (mole/m$^3$), $C_{mobile}$ est la concentration de l'espèce à séparer dans la phase mobile (mole/m$^3$)à l'équilibre thermodynamique avec la précédente, Deff (m$^2$/s) est la diffusivité effective ou coefficient de diffusion dans le matériau de la paroi, ep (m) est l'épaisseur moyenne de la paroi séparant deux conduits, Do est le coefficient de diffusion de l'espèce considérée dans la phase mobile libre, et Dh est le diamètre hydraulique moyen du conduit capillaire.

De même en préliminaire à une simulation ceci reviendra avantageusement à poser une condition sur le rapport entre le nombre de plateaux théorique maximal d'une séparation NETMax et le nombre de plateaux théorique effectivement observé à l'optimum d'efficacité NET pour un composé non retenu sur le matériau réel.

NETMax à l'optimum d'efficacité peut être pris égal à la formule précédemment donnnée dans ce texte.

$$NETMax=1{,}6*L/(Dh+e*P)$$

Avantageusement, NETMax est obtenu par une simulation sur ordinateur.

Avantageusement NET/NETMax est supérieur à 0,1, encore plus avantageusement supérieur à 0,5.

Avantageusement la taille des pores du milieu continu est supérieure à 2 fois le diamètre moléculaire des espèces à séparer.

Avantageusement la taille des pores du milieu continu est supérieure à 10 fois le diamètre moléculaire des espèces à séparer.

Avantageusement la taille des pores du milieu continu est supérieure à 2 fois et inférieure à 1000 fois le diamètre moléculaire des espèces à séparer.

Avantageusement la taille des pores du milieu continu est supérieure à 2 fois et inférieure à 30 fois le diamètre moléculaire des espèces à séparer.

En phase condensée la gêne stérique à la diffusion provoquée par les pores se calcule par la formule (Deen, 1987) :

$$C = K_p * K_r$$

Avec

$$K_p = (1 - \lambda)^2$$

Et

$$K_r = 1 - 2{,}104 * \lambda + 2{,}089 * \lambda^2 - 0{,}948 * \lambda^3$$

$$\lambda = \frac{R_h}{r_0}$$

$R_h$ est le rayon moléculaire de la molécule d'espèce à séparer considérée comme une sphère et $r_0$ le rayon des pores (diamètre des pores $d_0$).

$K_p$ est un facteur tenant compte d'un écart de la concentration à l'équilibre entre les pores et le milieu infini.

$K_r$ prend en compte les gênes stériques des molécules à séparer dans le volume des pores.

C est le facteur de réduction de la diffusivité en milieu libre à appliquer pour obtenir la diffusivité dans les pores.

On constate ainsi que le groupe C devient inférieur à 0,1 pour un rapport $\lambda$ de 0,5, correspondant à une taille de pore inférieure à 2 fois le diamètre de la molécule d'espèce à séparer. On perd un ordre de grandeur sur la diffusivité effective, qui devient prohibitivement basse, et l'efficacité de la séparation devient mauvaise.

Le tableau suivant calcule le rapport C pour différentes molécules et différentes tailles de pores.

| Molecule | rh (nm) | $d_0$(nm) | $\lambda$ | Kp | Kr | C |
|----------|---------|-----------|-----------|------|------|------|
| Organique | 0,15 | 0,3 | 1 | 0,00 | 0,04 | 0,00 |
| Organique | 0,15 | 0,6 | 0,5 | 0,25 | 0,35 | 0,09 |
| Organique | 0,15 | 1 | 0,3 | 0,49 | 0,53 | 0,26 |
| Organique | 0,15 | 2 | 0,15 | 0,72 | 0,73 | 0,53 |
| Organique | 0,15 | 4 | 0,075 | 0,86 | 0,85 | 0,73 |
| Organique | 0,15 | 6 | 0,05 | 0,90 | 0,90 | 0,81 |
| Organique | 0,15 | 10 | 0,03 | 0,94 | 0,94 | 0,88 |
| Protéine | 1,5 | 6 | 0,5 | 0,25 | 0,35 | 0,09 |
| Protéine | 1,5 | 10 | 0,3 | 0,49 | 0,53 | 0,26 |
| Protéine | 1,5 | 30 | 0,1 | 0,81 | 0,81 | 0,66 |
| Protéine | 1,5 | 100 | 0,03 | 0,94 | 0,94 | 0,88 |
| macromolécule | 5 | 30 | 0,33 | 0,44 | 0,50 | 0,22 |
| macromolécule | 5 | 100 | 0,10 | 0,81 | 0,81 | 0,66 |
| macromolécule | 5 | 300 | 0,03 | 0,93 | 0,93 | 0,87 |

En phase gaz la diffusion devient gênée lorsque le flux diffusif entre en écoulement de Knudsen. Ceci survient lorsque le libre parcours moyen des molécules devient de l'ordre de ou supérieur au diamètre des pores.

Avantageusement le garnissage présente une population de pores connexes dont le diamètre est supérieur au libre parcours moyen des molécules à séparer dans les conditions du procédé.

La diffusivité de Knudsen s'écrit :

$$D_{KA} = \frac{d_{Pore}}{3} * \sqrt{\frac{8 * \kappa * N_{av} * TK}{\Pi * M_A}}$$

Lorsque la diffusivité de Knudsen et la diffusivité moléculaire sont en compétition, on écrit :

$$\frac{1}{D_{Ae}} = \frac{1}{D_{KA}} + \frac{1 - \alpha * y_A}{D_{AB}}$$

Avec

$$\alpha = 1 + \frac{N_B}{N_A}$$

En général on simplifie cette formule par :

$$\frac{1}{D_{Ae}} = \frac{1}{D_{KA}} + \frac{1}{D_{AB}}$$

Le coefficient C s'en déduit

$$C = \frac{D_{Ae}}{D_{AB}} = \frac{D_{KA}}{D_{AB} + D_{KA}}$$

Dans ces formules on note :

$D_{KA}$ : diffusivité de Knudsen, $m^2/s$
$D_{AB}$ : diffusivité moléculaire $m^2/s$
$D_{Ae}$ : diffusivité en régime intermédiaire $m^2/s$
TK : température absolue, Kelvin
$M_A$ : masse molaire du composant A, kg/mole
$\kappa$ : constante de Boltzmann, MKSA
$N_{av}$ : nombre d'Avogadro
$d_{pore}$ : diamètre des pores, m

On pourra en particulier considérer comme espèces standards de tests, l'eau, l'hexane ou le méthanol, en phase liquide ou en phase gaz à la pression de vapeur saturante à 25°C.

On appelle « diffusivité effective » la diffusivité expérimentalement constatée dans un matériau réel considéré comme un ensemble macroscopique. Le matériau réel est composé du matériau s'étendant entre les conduits à l'exception de ceux-ci. Il comprend au moins un gel organique poreux ou un liquide organique (non poreux) et un éventuel matériau de structure. La diffusivité dans le matériau réel est liée :

- à un éventuel volume poreux de celui-ci dans lequel la phase mobile peut pénétrer et dans laquelle les espèces à séparer peuvent diffuser, et
- à la diffusivité dans le gel organique lui-même.

La porosité d'un gel organique réticulé pourra provenir de son gonflement dans un solvant organique, minéral ou aqueux. C'est par exemple le cas des copolymères de styrène et de 2 à 8 % de divinylbenzène.

Elle pourra également venir d'une porosité du gel à l'état non solvaté. C'est par exemple le cas des copolymères de styrène et de 20 à 80 % de divinylbenzène polymérisés en présence d'un solvant porogène comme un alcool aliphatique comportant 8 à 12 atomes de carbone dans sa molécule.

Elle pourra également venir de la porosité d'un support sur lequel un gel polymérique est déposé sous forme d'une couche mince.

La diffusion effective est mesurée en imposant de part et d'autre d'une épaisseur uniforme Eu et d'une surface S de matériau représentatif du matériau réel des concentrations différentes $C_{aval}$ et $C_{amont}$ d'une molécule dissoute dans la phase stationnaire, et en mesurant le flux de matière $\Phi$ de cette molécule au travers de ladite épaisseur en résultant.

Le coefficient de diffusion $D_{eff}$ s'en déduit d'après la formule :

$$D_{eff} = \Phi.Eu / ((C_{amont} - C_{aval}).S)$$

La surface d'échange de matière entre un conduit et un conduit adjacent est avantageusement supérieure à 2% de sa périphérie, plus avantageusement supérieure à 10% de sa périphérie, et encore plus avantageusement supérieure à 20% de sa périphérie.

En pratique les conduits sont avantageusement liés par un continuum ou pont diffusif à l'état condensé.

En pratique, la diffusivité effective des espèces à séparer dans les parois du garnissage est avantageusement supérieure à un millième de leur coefficient de diffusion dans la phase mobile libre, plus avantageusement supérieure à un centième de leur coefficient de diffusion dans la phase mobile libre, et encore plus avantageusement supérieure à un dixième de leur coefficient de diffusion dans la phase mobile libre.

Pour mesurer la diffusivité effective, on utilise de préférence la méthode dite de la cellule de conductivité en régime stationnaire. On trouvera une description exhaustive de cette méthode dans [3]. En particulier, on mesurera la diffusivité effective après équilibrage complet de la phase stationnaire contenue dans la cellule et de l'espèce sur laquelle s'effectue la mesure. Dans le cas de la chromatographie d'affinité, cela revient en général à effectuer la mesure sur une phase stationnaire saturée en adsorbat.

En pratique on fait en sorte que la diffusivité effective des solutés au travers des parois des conduits soit avantageusement maintenue au-dessus de $1e^{-12}$ $m^2/s$ en chromatographie en phase liquide, au-dessus de $1e^{-10}$ $m^2/s$ en chromatographie en phase supercritique, et au-dessus de $1e^{-10}$ $m^2/s$ en chromatographie en phase gaz.

La diffusion des espèces de la phase mobile dans les parois du garnissage peut être réalisée de deux façons au moins, à savoir par diffusion dans la masse du gel ou liquide organique ou par diffusion à l'extérieur du gel organique, dans sa porosité.

Une telle diffusivité peut être obtenue par une combinaison de volume poreux, de taux de réticulation du gel organique, de solvant d'élution et de température opératoire suivant les connaissances de l'homme du métier et les données disponibles.

Le gel organique perméable à la diffusion moléculaire utilisé dans la présente invention peut également être défini par le fait que sa permittivité vis-à-vis des espèces à séparer est supérieure à 5000 Barrer.

Le Barrer est une unité de permittivité définie en ($cm^3$ de soluté diffusant, sous forme de gaz parfait dans les conditions standard.cm) / ($cm^2$ s cm Hg) :

$$1 \text{ Barrer} = 10^{-10} \, (cm^3 \, O_2 \, cm) / (cm^2 \, s \, cm \, Hg)$$

Le tableau ci-dessous indique les permittivités de polymères organiques courants vis-à-vis de l'oxygène et de l'eau.

| Polymère | Nom commercial | Permittivité O2, Barrer | Permittivité H2O, Barrer |
|---|---|---|---|
| Poly (isopréne) | Caoutchouc naturel | 23,3 | 2290 |
| PolyChloroprène | Néoprène G | 4,0 | 910 |
| Poly(vinyl chloride) | PVC (non plastifié) | 0,045 | 275 |
| Poly(tetrafluoroethylene) | Teflon | 4,2 | 4,8 |
| Poly(éthylène) basse densité | LDPE | 2,2 | 68 |
| Poly(propylène) | PP | 1,2 | 35 |
| Poly(methyl methacrylate) | Plexiglas | 1,2 | 3200 |
| Poly(carbonate) | Lexan | 1,4 | 1400 |
| Polyester insaturé | Polyester | | 750 |
| Cellulose | Cellulose | | 18900 |

De façon indicative, la diffusivité de l'eau n'est significative que pour des matériaux présentant une permittivité supérieure à 5000 Barrer (poly isoprène, Plexiglas) et de préférence supérieure à 25000 Barrer (cellulose). En revanche, un matériau tel que le polyester insaturé présente une permittivité comparable à celle du polyéthylène et du polycarbonate, qui sont des matériaux reconnus comme étanches et non poreux puisque servant à faire des récipients ou des parois imperméables.

Avantageusement la permittivité du gel organique vis-à-vis des espèces à séparer est supérieure à $10^5$ Barrer, et de manière encore préférée supérieure à $10^6$ Barrer.

Afin de mesurer la permittivité du gel organique, on utilisera le montage décrit dans la référence [1].

Le garnissage pourra comprendre en tant que gel organique perméable à la diffusion moléculaire un gel principalement constitué d'espèces chimiques organiques et donc principalement constitué de carbone et d'espèces usuellement liés au carbone dans le cadre de la chimie organique. En particulier il sera principalement constitué d'une association d'un squelette d'atome de carbone et d'atomes d'hydrogène, d'oxygène, d'azote, de phosphore, de soufre, de chlore, de fluor, de brome, d'iode. On citera les espèces hydrocarbonées, halogénocarbonées, hydroxycarbonées, oxycarbonées, sulfo carbonées, phosphorocarbonées, nitrocarbonées, etc. d'origine naturelle ou artificielle.

Sans sortir du cadre de l'invention ce gel pourra être constitué d'espèces organo métalliques. Parmi les atomes utilisables au titre de la présente invention comme prenant part aux molécules de gel organique on citera principalement le silicium, l'étain, le plomb, le bore, l'aluminium, le gallium, l'indium, le zinc, le béryllium, le magnésium, le titane, le zirconium, l'arsenic, l'antimoine, le sélénium, etc.

En particulier le gel organique peut comprendre dans sa masse les produits pouvant être obtenus par co-condensation d'orthosilicates et d'organosilanes. Ces silanes peuvent comporter une, deux ou trois liaisons Si-C ou Si-R. R peut être tout radical carboné, comme un radical propyle, butyle, octyle, octadecyle, une amine primaire, secondaire tertiaire ou quaternaire, un alcool, un acide organique, un groupement réactif, etc.... De façon non limitative un ou plusieurs silanes mono, bi ou trifonctionnel peuvent prendre part à la structure. On trouvera dans le document [4] des exemples de tels matériaux utilisables pour la réalisation de l'invention.

Ledit gel présente, dans les conditions de son utilisation, une permittivité suffisante pour permettre à des molécules ou des macromolécules de diffuser dans son sein ou son volume poreux et d'interagir de manière sélective avec lui afin de réaliser un processus chromatographique en moins de quelques heures, avantageusement moins de quelques dizaines de minutes et avantageusement moins de quelques minutes. Par « conditions de son utilisation », on entend essentiellement des conditions de température et l'utilisation de phases mobiles gazeuses, liquides ou supercritiques permettant de tirer parti de sa permittivité en permettant à des espèces (molécules ou macromolécules) présentes dans la phase mobile de diffuser dans la masse ou le volume poreux dudit gel et d'interagir de manière sélective avec lui.

Dans le contexte de la présente invention, un gel organique est une notion essentiellement macroscopique. Ledit gel est un matériau à part entière pouvant exister et être manipulé indépendamment de son support éventuel.

Ceci le distingue fondamentalement de couches d'épaisseur moléculaire résultant d'un greffage de silanes sur une surface par exemple qui n'existent pas indépendamment de leur support.

Selon une voie de réalisation privilégiée de l'invention, ce gel organique est constitué d'un polymère organique.

Avantageusement, le poids moléculaire de ce polymère est supérieur à 1000 g/mole.

Selon un mode de réalisation, le gel organique est un copolymère du styrène et du divinylbenzène.

Les copolymères du styrène et du divinylbenzène présentent une diffusivité et une perméabilité élevée vis à vis de molécules dissoutes dans un solvant. Afin d'augmenter cette diffusivité, on diminue le taux de styrène. Cette diminution a pour effet de rendre le polymère mécaniquement plus fragile. Cependant, du fait de la faible perte de charge d'un garnissage multicapillaire, les efforts mécaniques sur le polymère sont moins importants que pour un garnissage dépourvu de conduits, ce qui permet de diminuer le taux de styrène sans dégrader la tenue mécanique du garnissage par rapport aux garnissages connus dépourvus de conduits capillaires.

Suivant une première voie de réalisation de l'invention le taux pondéral de divinylbenzène dans le styrène est inférieur à 20%, avantageusement inférieur à 8 %, et encore plus avantageusement inférieur à 2%. La porosité de tels gels se développe par gonflement par un solvant d'élution. Ils sont en particulier utilisés en chromatographie d'exclusion stérique.

Suivant une deuxième voie de réalisation de l'invention le taux pondéral de divinylbenzène dans le styrène est supérieur à 20%, avantageusement supérieur à 40 %, et la polymérisation est menée en présence d'un agent porogène comme un solvant des monomères dans lequel le polymère est insoluble. La porosité de tels gels est inhérente à leur structure à l'état sec.

On pourra également citer de façon non limitative comme utilisables pour la réalisation de l'invention et comme matériaux constitutifs du garnissage les gels d'alcool polyvinylique, de polyméthyl méthacrylate, de polyhydroxyméthyl méthacrylate, de polyacrylamide, de methacrylate d'hydroxyethyle copolymérisé avec le dimethacrylate de glycidyle (GMA-EDMA), etc.

Les polyacrylamides sont avantageusement constituées de copolymères d'acrylamide et de N N' methylène bis acrylamide.

On peut également citer la cellulose (un polyholoside) et ses dérivés, notamment les carboxymethyl celluloses et les di ethyl amino ethyl celluloses pour la chromatographie d'échange d'ion.

On peut également utiliser des gels organiques polyholosides connus dans l'état de l'art utilisant des macromolécules organiques comme les dextranes réticulés, par exemple par des N,N methyléne diacrylamides ou des epichlorhydrines. Ces gels sont en particulier connus sous les noms commerciaux Sephacryl™ et Sephadex™, produits de la société GE Healthcare.

On peut également utiliser d'autres gels organiques polyholosides utilisant des macromolécules organiques comme les agaroses réticulés, par exemple par des epichlorhydrines. Ces gels sont en particulier connus sous les noms commerciaux Sepharose™ et Superdex™, Superose™, produits de la société GE Healthcare.

On peut également utiliser d'autres gels organiques utilisant des macromolécules artificielles comme des polymères vinyliques contenant de nombreux groupes hydroxyles. Ces gels sont en particulier connus sous le nom commercial ToyoPearl™, produits de la société Tosoh group.

En particulier ces gels organiques peuvent être réalisés au départ de mélanges de monomères monofonctionnels et de monomères multifonctionnels. Les monomères multifonctionnels réticulent le polymère obtenu.

Ces gels organiques peuvent être préparés au départ de monomères mono, di et multifonctionnels connus dans l'état de l'art. Ceux-ci peuvent être des monomères contenant des radicaux epoxy, vinyl ou hydroxyl siloxane. Ce peuvent être du styrène et ses dérivés contenant des groupement hydroxyle, halogène, amino, sulfonique, carboxylique, NO2, des chaines alkyles en C4, C8, C12, C18, etc... Ces monomères peuvent être des acrylates, méthacrylates, acrylamides, methacrylamides, vinylpyrolidones, vinylacétates, acide acrylique, acide methacrylique, acide vinyl sulfoniques. Les siloxanes peuvent comporter un groupe hydroxyle, des groupes vinyl, alkyl, etc....

En particulier ces monomères peuvent être du chloromethyl styrène, du 4-acetoxystyréne, du methacryle de methyle, d'ethyle, de propyle, de butyle, d'hexyle, de lauryle, de triphenylmethyle, de pyridyl-2 diphenylmethyle, de l'acrylate de methyle, d'ethyle, de propyle, de butyle, d'hexyle, de lauryle, du methacrylate de glycidyle, de l'AMPS, du 2-vinyl-4,4 dimethylazlactone, du methacrylate de 2-3 epoxypropyl etc...

Ces groupes fonctionnels peuvent être apportés avant ou après la polymérisation.

Le taux de monomère monofonctionnel peut varier entre 2% et 98% en poids des monomères totaux.

Avantageusement il est compris entre 2% et 40% en poids des monomères totaux.

Les monomères bi ou multifonctionnels peuvent être des monomères basés sur du benzène, naphtalène, pyridine, alkyl éthylène, glycol, etc. comportant deux ou plusieurs groupements fonctionnels vinyl ou epoxy. Des exemples de ces composants sont les divinyl benzènes, divinyl naphtalène, alkoyle diacrylates et diméthacrylates, diacrylamides, et diméthylacrylamides, divinyl pyridines, diméthacrylates ou diacrylates d'ethylène glycol, de polyéthylène glycol, di, ou trimethacrylate de trimethylolpropane, 1,3 butanedioldiacrylate, di, tri ou tetra méthacrylates ou acrylates de pentaérytrithol, ou leur mélange. Des siloxanes di, tri ou tetra hydroxylés souvent générés au départ d'alkoxysilanes peuvent être utilisés.

Le taux de monomère bi ou multifonctionnel peut varier entre 100% et 2% en poids des monomères totaux.

Avantageusement ledit taux est compris entre 98 % et 60% en poids des monomères totaux.

Les initiateurs utilisés pour la polymérisation comprennent tous ceux compris dans l'état de la technique, tels que les composés azo et les peroxydes. Des exemples typiques sont l'azobisisobutyronitrile, le peroxyde de benzoyle. La quantité typique d'initiateur varie en général de 0,4 à 2% en poids par rapport au poids des monomères.

Dans le cas des siloxanes, une hydrolyse acide est préférée.

Avantageusement ces mélanges sont polymérisés en présence d'un agent porogène ultérieurement éliminé comme un solvant organique ou un polymère non réactifs. Ces porogènes ont été mentionnés précédemment. On citera en particulier le dodecanol-1 et le cyclohexanol-1.

La quantité d'agent porogène peut varier entre 10 et 90% et préférentiellement entre 20 et 60% en volume du mélange final comprenant les monomères.

Une polymérisation sous rayons X ou gamma peut être utilisée pour la fabrication homogène de pièces de grande taille.

Avantageusement ces gels organiques peuvent être traités en surface de façon à les fonctionnaliser par greffage comme par exemple par des silanes. On pourra leur apporter des groupements sulfonés (sulfonation), des ammoniums quaternaires, des radicaux octadécyle, octyle, butyle, phényle, amine, diéthyle amino, éthyle, sulfopropyle, carboxyméthyle, des polymères hydrophyliques, des cyclodextrines alpha, beta, gamma, méthylées ou non, des L-amino acides ou D-amino acides, des protéines etc...

Sur des gels comportant des noyaux aromatiques on pourra utiliser des réactions de fonctionalisation telles que la chlorométhylation, l'amination, la nitration, la sulfonation, les alkylation et acylation Friedel Crafts, etc...

Avantageusement les gels organiques utilisables pour la chromatographie d'échange d'ion ou de complexation comprennent des radicaux aminodiacetate, phosphonate, amidoxime, amidophosphonate, thiol, sulfonate, amine primaire, secondaire ou tertiaire, ou quaternaire, carboxylique, pyridiles, etc ...

Avantageusement les gels organiques utilisables pour la chromatographie de complexes donneurs accepteurs d'électron comprennent des radicaux nitro ou chloroaromatiques, ou des radicaux phenoxy, pyréne, quinazoline-2, comme les dinitro-2-4 aminopropyle, trinitro 2,4,6 anilinopropyle, tetranitro-2,4,7 fluorenoiminopropyle, tetrachloro phtalimidopropyle, nitro-3 naphtalimido-1,8 propyle, naphtalene tetracarboxy-1,4,5,8-diimidopropyle, pyromellidiimidopro-pyle, pentafluorobenzamidopropyle, caféine, phenoxy, quinazoline-2, quinolinol,-8, 2,2,2 trifluoro-1(10-methyl-9anthryl) éthanol, pyrenepropyle etc...

Avantageusement les gels organiques utilisables pour la chromatographie d'échange de ligande comprennent les radicaux bis dithiocarbamate, cyclame, oxine, dialkyldithiocarbamate, etc.

Avantageusement les gels organiques utilisables pour la séparation de molécules chirales comprennent des sélecteurs chiraux choisis généralement parmi des groupes de type Pirkle, des cyclodextrines et ethers couronnes, des polymères naturels et synthetiques, des protéines.

Parmi les groupes de type Pirkle on citera entre autres les :

R ou S (dinitro-3,5) benzoyl)phenylglycine

R ou S N-(dinitro-3,5-benzoyl)tyrosine n-butylamide

S - N-(dinitro-3,5 benzoyl)tyrosine(naphtyl-1)-1ethylamide

R ou S -(dinitro-3,5 benzoyl)phenylglycine

S -(dinitro-3,5-benzoyl)leucine

S-(dinitro_3,5-benzoyl)phenylalanine

R ou S naphtylamine

R $\alpha$-methylbenzylurée

S $\alpha$-(naphtyl-1)ethylamine

On citera également les dérivés des produits suivants :

R-phénylglycine et acide S-(chloro-4-phenyl)4-isovalerique

R-phenylglycine et acide 1-R, 3-R, chrysanthémique
Dinitro-3,5-benzoyl et R ou S naphtyl-1 glycine
Tert-butylamine et S valine
Dinitro-3,5-aniline et S valine
Dinitro-3,5-aniline et S-tert-leucine
S-( $\alpha$-naphtyl)-1 ethylamine et S-valine
R-( $\alpha$-naphtyl)-1 ethylamine et S-valine
R-phenylglycine et R-( $\alpha$-naphtyl)-1 ethylamine
R-phenylglycine et S-( $\alpha$-naphtyl)-1 ethylamine
S-proline et R-( $\alpha$-naphtyl)-1 ethylamine
S-proline et S-( $\alpha$-naphtyl)-1 ethylamine
S-tert-leucine et R-( $\alpha$-naphtyl)-1 ethylamine
S- tert-leucine et S-( $\alpha$-naphtyl)-1 ethylamine
Acide tartrique et dinitrobenzylphenyle-ethylamine

Parmi les échangeurs de ligandes on citera entre autres les:

Proline, hydroxyproline, valine, etc...
Carboxyméthylamino-2-diphényl_1,2-ethanol

Parmi les cyclodextrines et ethers couronnes on citera entre autres les:

Ethers couronnes et dérivés
$\alpha$, $\beta$, $\gamma$ cyclodextrines
$\alpha$, $\beta$, $\gamma$ cyclodextrines acétylées
$\beta$- cyclodextrines dérivées (S-hydroxypropyle)
$\beta$-cyclodextrines dérivées (hydroxypropyle racémique)
$\beta$-cyclodextrines dérivées (S ou R ($\alpha$-naphtyl)-1 ethylcarbamate)
$\beta$-cyclodextrines dérivées ( ($\alpha$-naphtyl)-1 ethylcarbamate racémique)
$\beta$-cyclodextrines dérivées ( diméthyl-3,5 phenylcarbamate)
$\beta$-cyclodextrines dérivées ( para toluyl)

Parmi les polymères naturels on citera entre autres les:

Cellulose microcristalline triacétylée
Triacétate de cellulose
Tribenzoate de cellulose
Triphenylcarbamate de cellulose
Tri-(dimethyl-3,5-phenyl) carbamate de cellulose
Tri-4-chlorophénylcarbamate de cellulose
Tri-4-méthylphénylcarbamate de cellulose
Tri-4-méthylbenzoate de cellulose
Tricinnamate de cellulose
Tri-(phénylethylamine) carbamate d'amylose
Tri-(dimethyl-3,5-phenyl) carbamate d'amylose

Parmi les polymères synthétiques on citera entre autres les:

Poly (N-acryloyl-1-phenylalanine ethylester)
Poly (triphenyl methylmethacrylate)
Poly (pyridyl-2 diphényl-methylmethacrylate)

Parmi les protéines on citera entre autres:

Albumine de sérum de boeuf (BSA)
Acide $\alpha$-glycoprotéïque
Albumine de sérum humain
Ovomucoïde.

On trouvera une liste de ces groupements dans la référence [2] p.574 et 575.

On peut utiliser ces gels organiques pour réaliser de la chromatographie d'affinité. La chromatographie d'affinité sépare des molécules biochimiques en se basant sur des interactions hautement spécifiques telles que antigène-anticorps, enzyme-substrat, ou récepteur-ligand.

La mise en contact se fait par circulation de la phase mobile au travers des conduits du garnissage, permettant la fixation des molécules cibles sur le gel organique.

Les composés liés sont élués par un changement de pH, de pI, de concentration en sel, de charge ou de force ionique en général. Ceci procède en une étape (créneau) ou par un gradient d'élution pour récupérer les molécules d'intérêt.

On considère usuellement différentes formes de chromatographie d'affinité : par immunoaffinité, par ions métalliques immobilisés, par protéines recombinantes, par lectines (voir en particulier l'article de Wikipedia sur cette technologie).

En particulier, par immunoaffinité, on couple des protéines sur un substrat tel que l'agarose de manière covalente, et ils sont utilisés pour la purification de leurs anticorps.

En particulier, par ions métalliques immobilisés, on couple des ions métalliques tels que Cu, Ni, Co à un substrat tel que l'agarose pour la purification de protéines ou peptides contenant de l'histidine. On couple des ions métalliques tels que Fe, Zn, Ga à un substrat tel que l'agarose pour la purification de protéines ou peptides phosphorylées. L'élution se fait par changement de pH ou par des solutions de compétiteurs tels que l'imidazole.

En particulier, par protéines recombinantes, les protéines sont marquées, de façon à pouvoir les sélectionner, par des marqueurs tels que la glutathione S transferase (GST, l'hexahistidine (Hs) le Maltose (MSP). L'histidine présente une haute affinité pour Ni ou Co par coordination ou covalence. L'élution se fait par des solutions contenant un excès de soluté apte à la liaison au métal immobilisant, tel que l'imidazole, ou comme par exemple un excès de glutathione.

En particulier, par affinité pour des lectines, le marquage des molécules leur permet de se lier sélectivement à des carbohydrates. Des ligands tels que la conconovaline A se lient aux chaines glucoses de glycoprotéines et permettent de les isoler.

Les garnissages contenant des gels organiques suivant l'invention se prêtent aux séparations par affinité.

Ces gels se caractérisant par un coût unitaire volumique élevé, il est avantageux d'en réduire le volume immobilisé pour une production donnée.

De façon avantageuse les garnissages pour la chromatographie d'affinité présentent un volume de conduits faible devant le volume total du garnissage, de préférence inférieur à 40%, plus préférentiellement inférieur à 20% et encore plus préférentiellement inférieur à 10% du volume total du garnissage.

De façon avantageuse la distance entre conduits voisins est inférieure à 0,5 mm, de préférence inférieure à 0,25 mm, et de manière encore préférée inférieure à 0,1 mm, afin d'assurer une rapidité suffisante des processus diffusionnels. Le front de propagation de la molécule retenue est ainsi plus raide et de faibles longueurs de colonne peuvent être utilisées, réduisant encore le volume du garnissage.

Avantageusement le gel organique représente une fraction élevée du volume du garnissage considéré à l'exclusion du volume des conduits, avantageusement supérieure à 40%, plus préférentiellement supérieure à 60% de celui-ci.

De façon avantageuse on utilise ces garnissages pour la chromatographie d'affinité dans des dispositifs de chromatographie annulaire continue radiale ou axiale. On réduit ainsi au minimum la quantité de phase stationnaire nécessaire à une production donnée en diminuant sans dispositifs coûteux à l'aide d'instruments fonctionnant sous faible pression la quantité de phase stationnaire immobilisée grâce à des temps de cycle courts.

Suivant un mode de réalisation de l'invention, un gel organique polymérique poreux peut comprendre dans sa porosité un tiers corps solide. Avantageusement dans ce cas le garnissage comportant le gel organique polymérique et destiné à servir de support à un tiers corps solide aura des pores connexes de taille élevée, supérieure à 50 nm, de préférence supérieure à 200 nm, et encore plus préférentiellement supérieure à 500 nm.

Avantageusement le garnissage comportant le gel organique polymérique et destiné à servir de support à un tiers corps solide a une surface spécifique inférieure à 20 m$^2$/g.

Avantageusement ce tiers corps solide est une phase stationnaire pour la chromatographie.

Avantageusement ce tiers corps solide peut être une quelconque des phases stationnaires précédemment listées.

Avantageusement ce tiers corps solide peut être une phase stationnaire minérale ou organo métallique. Parmi celles-ci on nommera de façon non limitative les oxydes de silicium, d'alumine, de titane, de zirconium.

Avantageusement ce tiers corps solide peut être une silice de haute surface spécifique pour la chromatographie.

De manière plus générale, l'invention concerne, dans le domaine de la chromatographie en phase liquide :

- la chromatographie de partage liquide-liquide,
- la chromatographie de partage sur phases stationnaires greffées et polymères non ioniques,

- la chromatographie d'échange d'ion,
- la chromatographie ionique,
- la chromatographie de paires d'ions,
- la chromatographie d'échanges de ligandes,
- la chromatographie de complexes donneurs-accepteurs d'électrons,
- la chromatographie d'exclusion stérique,
- toutes les variantes de la chromatographie d'affinité.

Avantageusement l'injection de la phase mobile se fait au travers d'un filtre dont le diamètre de coupure est inférieur au diamètre des conduits, et de préférence dix fois inférieur au diamètre des conduits.

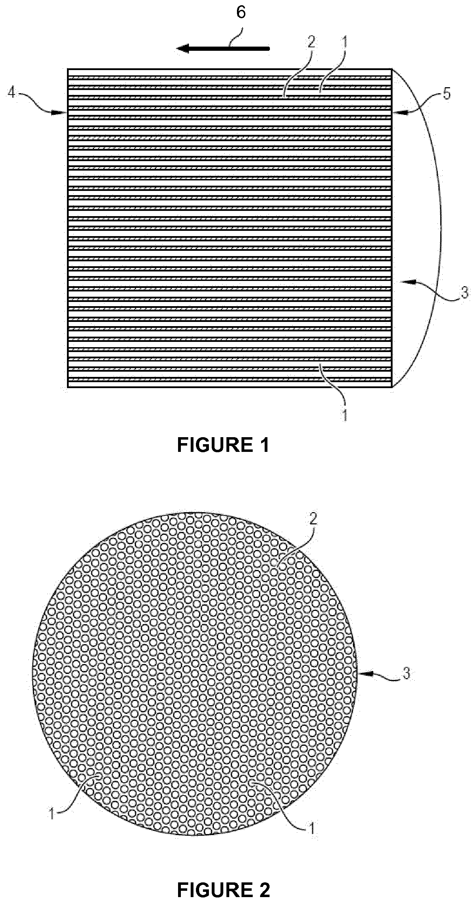

La figure 1 est une vue en coupe d'un garnissage multicapillaire 3 selon un mode de réalisation de l'invention dans un plan parallèle à l'axe longitudinal dudit garnissage.

Dans ce mode de réalisation, le garnissage est un monolithe poreux formé d'un gel organique 2 traversé par des conduits capillaires 1 où une phase mobile fluide ou supercritique traversant le garnissage 3 peut circuler librement. Par « monolithe » on entend un matériau poreux d'un seul tenant, comprenant un squelette continu, pouvant être réalisé en un ou plusieurs matériaux.

Dans l'exemple illustré sur la figure 1, les conduits capillaires sont droits, parallèles, et espacés de façon régulière. Les différents conduits ont des morphologies et diamètres aussi identiques que possible. Chaque conduit traverse le garnissage de part en part, c'est-à-dire qu'il a avantageusement ses extrémités ouvertes de chaque côté 4 et 5 du garnissage, permettant la circulation du fluide du côté d'entrée 4 vers le côté de sortie 5.

Un tel garnissage peut donc être utilisé dans une colonne chromatographique.

La figure 2 est une vue de dessus de la face 5 du garnissage de la figure 1 vu suivant la direction 6. On distingue les ouvertures des conduits capillaires individuels 1 dans la masse 2 de gel organique.

Selon une variante d'exécution, dans la mesure où le gel organique présente généralement une résistance mécanique limitée, le monolithe comprend un squelette poreux réalisé en un matériau dimensionnellement stable et plus résistant que le gel organique, et les pores dudit squelettes sont recouverts au moins en partie du gel organique.

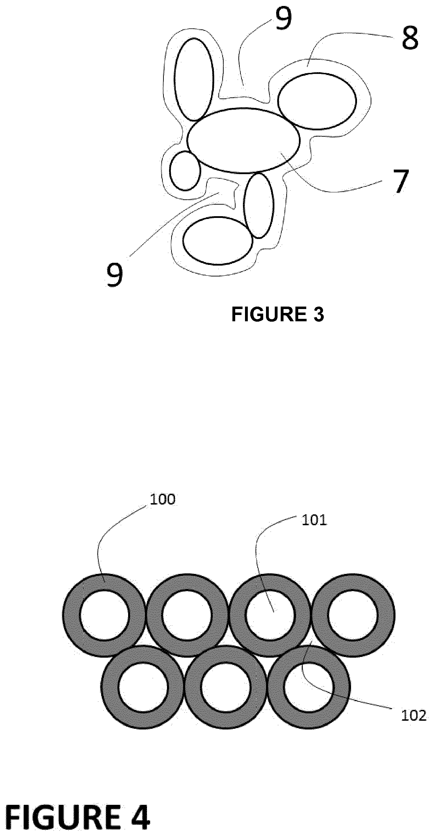

La figure 3 représente ainsi un squelette 7 en un matériau dimensionnellement stable, obtenu par exemple par un frittage d'une poudre moulée ou extrudée selon la forme du garnissage, ou obtenu par un procédé sol gel ou charge-liant. Le gel organique 8 est déposé sous forme d'une couche mince sur la surface du squelette 7, et notamment sur la surface des pores. Le garnissage présente un réseau continu de macropores 9 permettant à des molécules de diffuser rapidement dans toute l'épaisseur du garnissage et entre des conduits adjacents.

La figure 4 illustre un autre mode de réalisation du garnissage.

Suivant ce mode de réalisation on juxtapose des fibres creuses suivant un empilement optimal aussi compact que possible. Ces fibres creuses sont constituées d'un coeur vide 101 dans lequel s'écoule la phase mobile et d'une enveloppe poreuse 100 retenant le gel organique ou constituée du gel organique. L'espace entre les fibres 102 est rempli soit de la phase mobile soit du gel ou liquide organique.

On va maintenant décrire différents procédés de fabrication d'un garnissage tel que décrit plus haut.

Suivant une première voie de réalisation, on peut enduire d'un gel organique un monolithe multicapillaire obtenu par extrusion et frittage. Ce monolithe doit être poreux. Il doit donc être préparé et fritté dans des conditions permettant de conserver une porosité significative. Cependant le diamètre des conduits obtenu par un tel procédé d'extrusion, qui est de l'ordre du millimètre, est généralement trop élevé au regard d'une application chromatographique.

Selon un mode de réalisation, pour former un garnissage monolithique, on met en œuvre un procédé comprenant les étapes de :

- fourniture d'un faisceau de fils dits « précurseurs des conduits », c'est-à-dire des fils qui sont destinés à être éliminés ultérieurement pour laisser leur empreinte sous forme de conduits. Avantageusement le diamètre extérieur des fils est égal au diamètre intérieur des conduits
- formation d'une matrice poreuse autour des fils ou des conduits,
- élimination des fils de façon à former lesdits conduits capillaires.

Selon une forme d'exécution, la matrice formée autour des fils ou conduits est constituée d'un gel organique polymérique.

De manière alternative, la matrice formée autour des fils ou conduits est chargée d'un gel organique.

Eventuellement, les fils précurseurs des conduits comprennent une couche ablative d'un matériau d'enrobage éliminé lors d'une première étape du traitement d'élimination des fils. Ce matériau ablatif peut en particulier être une cire ou une paraffine.

Les fibres commerciales de nylon, polypropylène, acétate de cellulose, polyester, aramide, fibre de carbone, métal, etc. peuvent être utilisées en tant que fils précurseurs de ces conduits avec de telles contraintes. On utilise de préférence des fibres ne contenant pas de sels métalliques toxiques afin de ne pas polluer la structure finale du matériau.

Selon une forme particulière d'exécution, les fils précurseurs des conduits, éventuellement enrobés de la couche ablative, sont revêtus d'un espaceur préalablement à la formation du faisceau de façon à assurer une épaisseur minimale de matériau entre deux conduits adjacents.

Selon un mode de réalisation, des fils constitués d'un polymère hydrolysable sont assemblés en faisceau, le faisceau est immergé dans une solution précurseur d'un gel organique poreux, solution dont on provoque le gel autour des fils, et les fils sont éliminés par hydrolyse en espèces solubles de faible poids moléculaire par immersion du garnissage dans une solution acide ou basique. En effet la nature très inerte d'un gel organique permet de le mettre en contact avec des solutions aqueuses fortement acides et fortement basiques. Par « solution précurseur d'un gel organique », on entend un liquide de composition telle que, par son évolution dans les conditions du procédé de fabrication, il conduise à un gel organique.

Parmi les polymères hydrolysables on peut citer entre autres les polyesters dérivés de l'acide glycolique, de l'acide lactique, de la cellulose, et en particulier l'acétate de cellulose, l'acide polyglycolique ou ses copolymères avec l'acide lactique, avec l'ε-caprolactone ou avec le carbonate de triméthyléne, ainsi que la polydioxanone. On choisit de préférence un polymère dont l'hydrolyse est rapide à une température de 80 à 100°C en milieu acide ou de préférence basique.

Selon un autre mode de réalisation, on réalise un monolithe multicapillaire en gel de silice. La fraction poreuse externe aux conduits du monolithe reçoit le gel organique. Le squelette de silice est éliminé par dissolution dans une solution aqueuse à pH supérieur à 11,0. Le gel de silice joue dans ce cas le rôle d'agent porogène.

Suivant une voie de réalisation les fils sont constitués d'un métal ou d'un alliage de métaux à bas point de fusion et éliminés par fusion et écoulement hors du matériau.

De manière avantageuse, on choisit un alliage métallique dont la température de fusion est inférieure à la température de dégradation du matériau constituant le gel organique. De préférence on choisit des métaux dont le point de fusion est inférieur à 220°C, de préférence inférieur à 150°C, et encore plus préférentiellement inférieur à 100°C.

Un usage important de ces garnissages organiques consiste à réaliser des séparations sur des molécules et des liquides destinés à la consommation humaine ou animale. Il s'agit en particulier d'eau potable, de médicaments, d'adjuvants alimentaires, etc...

Dans un tel cas de figure, tous les éléments et composants du garnissage doivent être compatibles avec des contraintes sanitaires strictes. En particulier il est important d'éviter toute pollution du garnissage par des résidus toxiques du procédé de fabrication, et d'éviter autant que possible l'utilisation d'intermédiaires de fabrication toxiques. Les matériaux ou constituants des fils métalliques précurseurs des conduits font partie de ces intermédiaires.

En effet des résidus de ces métaux peuvent subsister dans le garnissage et polluer les espèces qui y seront traitées, ou se répandre dans la nature après sa destruction.

Parmi les métaux à bas point de fusion figurent essentiellement le plomb, l'étain, le bismuth, le gallium, le mercure, l'argent, le cadmium et l'indium. Le plomb, le cadmium et le mercure étant des métaux lourds nocifs et nuisibles à la santé humaine et animale et à l'environnement, on choisit de préférence des alliages ne contenant pas ces éléments et basés sur de l'étain, du bismuth, de l'indium, du gallium, de l'argent ou d'une quelconque association de ceux-ci entre eux ou avec d'autres métaux moins fusibles.

En particulier il peut s'agir d'un mélange de bismuth et d'étain. Il existe en particulier un mélange eutectique de ces métaux comportant 58% en poids de bismuth, 42% en poids d'étain, et fondant à 138 °C.

De manière alternative, il peut s'agir d'alliages métalliques à base d'indium. Parmi ces alliages d'indium on utilise de préférence un alliage d'indium à 52% et d'étain à 48% en poids, fondant à 118°C. On peut aussi utiliser un alliage de Bismuth à 32,5%, d'indium à 51% et d'étain à 16,5% en poids, fondant à 60°C.

La matrice pourra être créée par un procédé charge-liant. Avantageusement dans ce cas il pourra être créé au départ d'une mixture contenant un tiers corps solide comme une charge de faible granulométrie et un liant comme un sol, mis en suspension dans une phase liquide. Ce sol peut être tout sol organique ou minéral, sol de silice, d'alumine, de titane, de zirconium, latex naturel ou artificiel, sol de divers polyméres, colloïdes. On notera par exemple

- les sols de latex naturel,
- les latex de polystyrene, et leur dérivés fonctionalisés (amino, carboxy, etc...)
- les latex de copolymères du styréne avec le butadiène, l'acide acrylique, et leurs dérivés fonctionalisés,
- les sols de caoutchoucs nitrile, etc...
- Les sols de polymethylmethacrylate

Ce peut être aussi un sol créé in situ par un procédé sol gel.

Le liant peut aussi être un colloïde comme l'albumine, le dextrane, la gélatine, les amidons hydroxyéthylés, etc...

Avantageusement le liant ne pénétrera pas dans les pores de la charge. Ceci pourra être obtenu par exemple en choisissant un liant divisé en particules de taille supérieure à celles des pores.

En particulier le garnissage multicapillaire support du gel organique pourra être créé par un procédé sol gel.

Sans sortir du cadre de l'invention ce procédé sol gel pourra également être basé sur un aluminosilicate comme une argile par exemple.

Sans sortir du cadre de l'invention ce procédé sol gel pourra également être basé sur un oxyde de zirconium, un oxyde de titane, un oxyde de terre rare comme l'yttrium le cérium ou le lanthane, un oxyde de bore, un oxyde de fer, un oxyde de magnésium de calcium de strontium ou de baryum, un oxyde de germanium, un oxyde de phosphore, un oxyde de lithium, de potassium ou de sodium, un oxyde de Niobium ou de cuivre. Ces composés pourront être la base du gel ou être combinés entre eux de façon à créer un gel multicomposant.

Avantageusement comme base du gel on pourra utiliser des gels d'oxyde de zirconium ou d'oxyde de titane.

Avantageusement le procédé sol gel conduisant à ces gels mono ou multicomposants sera basé sur l'hydrolyse de composés organométalliques comme des alcoolates des métaux considérés, seuls ou en mélange avec d'autres organométalliques et éventuellement avec des sels métalliques tels que les nitrates ou les chlorures.

Un autre procédé pour la réalisation du garnissage suivant l'invention comprend l'utilisation de faisceaux de fibres creuses à parois poreuses imprégnées de gel organique par trempage puis drainées de façon à libérer le lumen des fibres. On peut ainsi fabriquer des garnissages de grandes dimensions.

Un tel procédé de fabrication comprend les étapes de :

- fourniture d'un faisceau compact de fibres creuses,
- inclusion dans la paroi poreuse des fibres creuses d'un gel organique ou de son précurseur polymérisé in situ, de façon à laisser libre et ouvert le lumen des fibres creuses,
- création de ponts diffusifs matériels poreux ou liquides entre les fibres creuses.

Par ponts diffusifs, on entend un continuum de matériau perméable à la diffusion moléculaire s'étendant entre les fibres.

La compacité de l'empilement des fibres creuses permet de diminuer les distances de diffusion moléculaire entre celles-ci.

Des liaisons matérielles entre les fibres creuses ménagent avantageusement des ponts diffusifs efficaces entre les conduits.

Les fibres creuses sont avantageusement rendues solidaires les unes des autres de façon à renforcer leur cohésion mécanique et à les manipuler collectivement. En particulier on pourra les tisser en un tissu composite ou les coller ensemble jointivement en forme de feuille.

En particulier on peut les coller ensemble jointivement pour former un monolithe.

Le liant peut être le gel organique lui-même.

Selon un mode de réalisation, on peut immerger le volume extérieur aux fibres à leur périphérie dans un liquide organique.

Selon un mode de réalisation, on peut utiliser comme liant des fibres entre elles une autre résine que le gel organique, résine liante poreuse.

On peut combiner ce dernier procédé avec un renfort par un tissu de fibres de structure.

Suivant un autre procédé pour la réalisation du garnissage suivant l'invention, on effectue un moulage du gel organique en une structure définissant des conduits.

Avantageusement ce moulage est réalisé de façon à obtenir un film de gel organique présentant un espaceur comme des reliefs. Les parois des conduits peuvent constituer cet espaceur. Le moulage peut être réalisé par emboutissage, extrusion, calandrage d'un film préexistant. Ce procédé peut être réalisé seul ou sur un film ou tissu de renfort.

Le procédé peut comprendre la polymérisation du gel organique in situ dans le moule présentant la préforme des espaceurs, puis le démoulage.

Alternativement le procédé comprend le moulage du gel organique fondu ou de son précurseur fondu dans le moule et sa solidification, puis le démoulage.

Le film est ensuite empilé ou enroulé de façon à obtenir le garnissage final.

Les espaceurs ménagent le passage libre du fluide au travers de la structure.

Lorsqu'un gel organique polymérique poreux contient un tiers corps solide, on peut créer ledit tiers corps par un dépôt par trempage du garnissage multicapillaire dans une formulation contenant le tiers corps en suspension ou un précurseur du tiers corps, ou les deux simultanément suivi d'un drainage puis d'un séchage du gel.

En particulier le tiers corps solide pourra être créé par un procédé charge-liant. Avantageusement dans ce cas il pourra être créé au départ d'une mixture contenant un tiers corps solide comme une charge de faible granulométrie constituée d'une phase stationnaire pour la chromatographie de taille de particules inférieure à la taille des pores du gel organique polymérique et un liant comme un sol, mis en suspension dans une phase liquide d'imprégnation de la porosité. Ce sol peut être un sol organique ou minéral, sol de silice, latex naturel ou artificiel, sol de divers polymères, etc... Ce peut être aussi un sol ou un gel créé in situ par un procédé sol gel.

En particulier le tiers corps solide pourra être créé sur la surface du gel polymérique en l'imprégnant par une solution colloïdale suivi éventuellement de son gel, et de son séchage. On notera en particulier comme particulièrement adaptés les sols de silice de haute surface spécifique.

En particulier le tiers corps solide pourra être créé sur la surface du gel polymérique par un procédé sol gel.

On pourra utiliser tout procédé sol gel tel que décrit précédemment dans ce mémoire. En particulier ce peut être une silice bimodale obtenue par un procédé sol gel.

De façon avantageuse ce tiers corps solide est de la silice pour chromatographie de haute surface spécifique liée par un sol de silice.

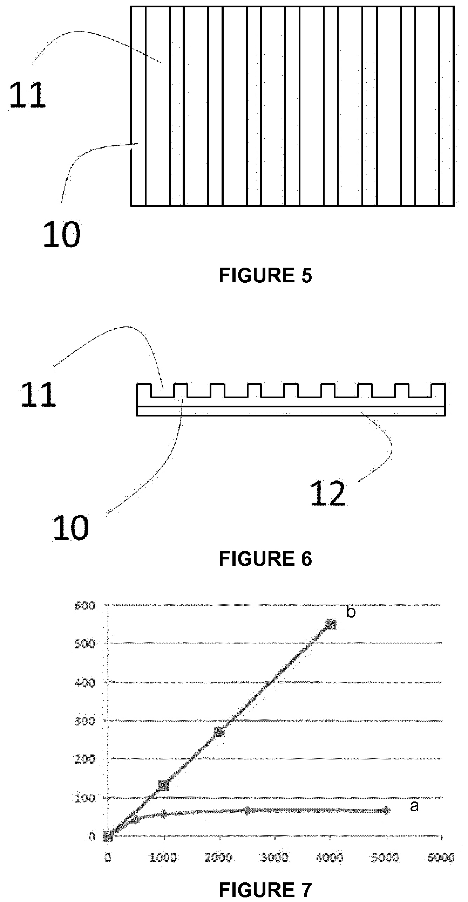

Les figures 5 et 6 représentent vu de dessus et vu en coupe respectivement un gel organique 10 parcouru par des conduits 11. Ce gel organique est sous forme de feuille obtenue par moulage sur une préforme. Il peut être rapporté sur un tissu sous-jacent 12 assurant une meilleure résistance mécanique. Le gel organique peut contenir une charge renforçante. Les feuilles peuvent être enroulées ou empilées pour réaliser toute forme voulue.

Avantageusement, le gel organique ou le tiers corps qu'il supporte est fonctionnalisé après la création des conduits.

Par fonctionnalisation on entend l'apport de groupements chimiques particuliers conférant une réactivité ou une sélectivité au garnissage brut. Il s'agit en particulier de l'apport de groupes réactifs échangeurs d'ion, de traitement par des silanes, de greffage de polyholosides, de protéines et de molécules chirales, etc.

Le garnissage présente typiquement une section supérieure à 20 cm$^2$, et de préférence supérieure à 100 cm$^2$.

Le garnissage peut présenter la forme d'un disque ou encore d'une colonne présentant deux sections droites planes, encapsulée dans une enveloppe jointive servant de protection mécanique.

L'étanchéité de la jonction entre le garnissage et l'enveloppe peut être assurée par une colle, un polymère ou un film plastique, en particulier un film thermorétractable.

Avantageusement le garnissage peut être créé directement dans ladite enveloppe.

Un procédé chromatographique est généralement caractérisé par l'efficacité du garnissage exprimée en nombre de plateaux théoriques.

De manière avantageuse, le garnissage présente une efficacité supérieure à 1000 plateaux théoriques par mètre de garnissage, de préférence de plus de 10000 plateaux théoriques par mètre de garnissage et de manière encore préférée de plus de 100000 plateaux théoriques par mètre de garnissage.

La figure 7 compare les efficacités d'un garnissage multicapillaire vis à vis d'une séparation chromatographique lorsque les parois séparant les conduits capillaires sont poreuses ou non poreuses, obtenues par simulation sur ordinateur.

L'axe des abscisses représente la longueur du garnissage exprimée en micromètres.

L'axe des ordonnées représente l'efficacité du garnissage exprimée en nombre de plateaux théoriques (NPT).

Les diamètres des conduits sont répartis suivant une loi de Gauss.

La courbe (a) représente un garnissage constitué de conduits de diamètre aléatoirement variable suivant une loi statistique gaussienne autour d'une moyenne de 10 μm avec un écart type de 0,5μm, pour des parois non poreuses.

La courbe (a) montre l'efficacité d'un tel garnissage dont les parois sont non poreuses et dont les capillaires se comportent par conséquent indépendamment les uns des autres. Cette efficacité commence par croître puis plafonne pour tendre vers une limite indépendante de la longueur du garnissage. Ce phénomène est dû au fait que les diamètres des capillaires ne sont pas uniformes mais répartis suivant une loi aléatoire gaussienne.

La courbe (b) représente le même faisceau avec des parois poreuses présentant 55% de volume poreux, une épaisseur de paroi de 2 μm et une taille de pore dix fois supérieure au diamètre moléculaire des espèces a séparer.

La courbe (b) montre donc l'efficacité d'un garnissage de mêmes dimensions que le précédent mais dont les parois des conduits sont poreuses et dans lequel les conduits capillaires adjacents communiquent par diffusion moléculaire. Dans ce cas, l'efficacité ne plafonne plus mais augmente proportionnellement à la longueur du garnissage malgré la même répartition gaussienne des diamètres. La non-uniformité de comportement de ces conduits est nivelée par la diffusion moléculaire entre ceux-ci.

Ce phénomène est spécifiquement pertinent pour un procédé chromatographique, où de hautes efficacités sont requises. On notera que de telles propriétés sont d'importance secondaire pour un procédé d'adsorption ou de catalyse, et sans intérêt pour un procédé de filtration.

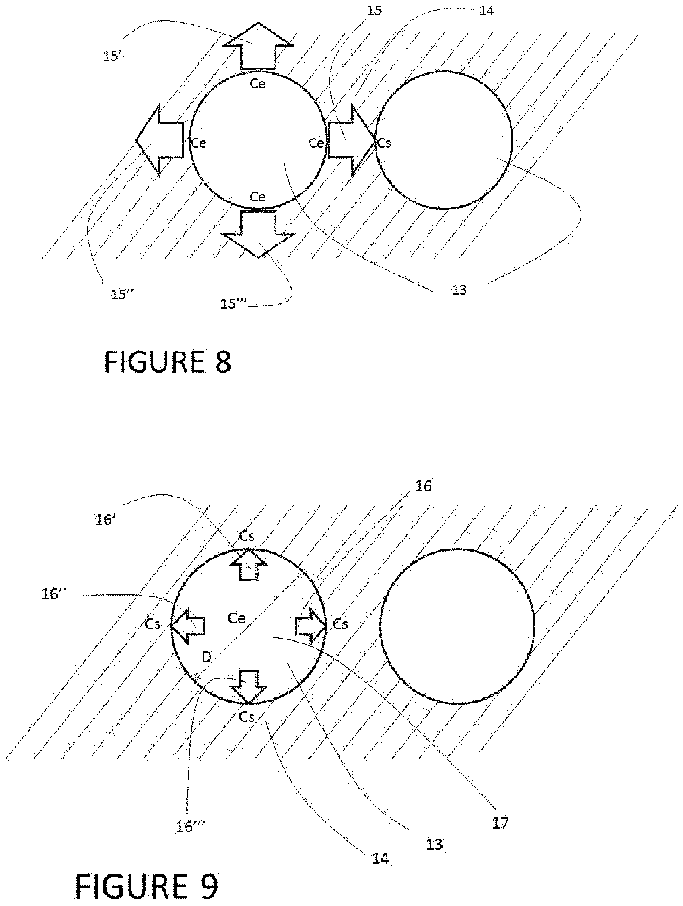

Les figures 8 et 9 décrivent les flux diffusifs considérés pour définir le concept de perméabilité moléculaire suivant l'invention.

La figure 8 décrit le débit molaire de diffusion entre les conduits adjacents sous l'effet d'une différence de concentration donnée des espèces à séparer entre les parois desdits conduits. Le conduit 13 est supposé présenter un profil de concentration dicté par les conditions hydrodynamiques de l'écoulement résultant en une concentration moyenne Ce. Les conduits adjacents sont supposés à une concentration Cs inférieure ici à Ce. Le débit molaire de diffusion moyen Phip est constitué par la somme des flux (15, 15', 15", 15''') quittant la périphérie du conduit 13 et traversant le garnissage 14. Le milieu 14 est constitué de gel organique poreux, de liquide organique et de phase mobile, et d'un éventuel support poreux de ceux-ci.

La figure 9 décrit le débit molaire de diffusion moyen Phic entre un conduit et la phase stationnaire que constitue le garnissage sous l'effet d'une même différence de concentration des espèces à séparer entre les conduits et la paroi desdits conduits. Le débit molaire de diffusion entre un conduit 13 et la phase stationnaire que constitue le garnissage est mesuré au travers d'une zone périphérique du conduit délimitant le capillaire vide dans lequel s'écoule le fluide, sous l'effet de la même différence de concentration des espèces à séparer. L'échange est calculé sur la base d'une concentration moyenne Ce du débit d'éluant dans le conduit. La périphérie du conduit est supposée à une concentration Cs. Le débit molaire de diffusion est constitué par la somme des flux (16, 16', 16", 16"') passant de la zone centrale du conduit 13 au garnissage 14.

Les concentrations sont exprimées en mole/m$^3$.

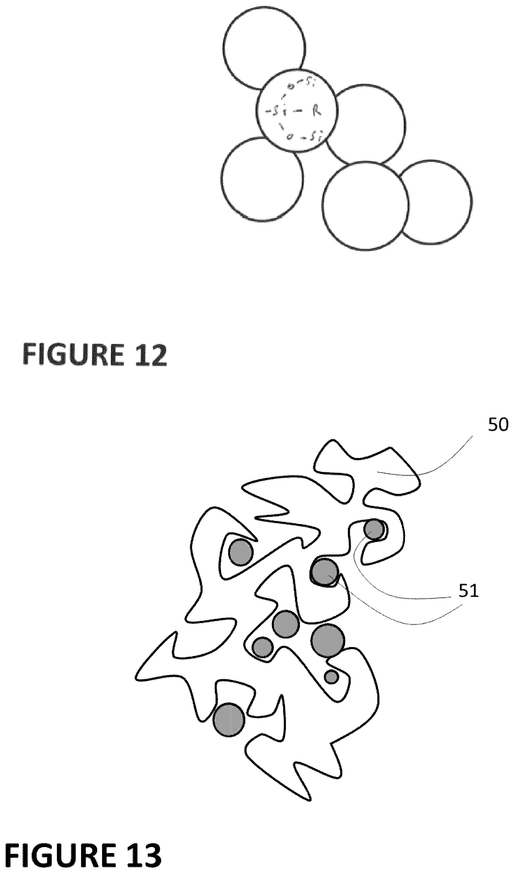

La figure 12 représente un garnissage constitué d'un gel organique comprenant dans sa masse le produit d'une co-condensation d'orthosilicates et de silanes. Ces silanes peuvent comporter une, deux ou trois liaisons Si-C ou Si-R. Les conduits sont dans ce cas des macropores anisotropes, dont la direction ou la morphologie favorise un écoulement axial de la phase éluante dans le garnissage, et inclus dans celui-ci. R peut être tout radical carboné, comme un radical propyle, butyle, octyle, octadecyle, une amine primaire, secondaire tertiaire ou quaternaire, un alcool, etc... ou de façon non limitative un ou plusieurs silanes mono, bi ou trifonctionnel parmi ceux cités précédemment dans ce texte dans la liste des agents de couplage.

La figure 13 représente un garnissage suivant l'invention constitué d'une masse poreuse organique ou minérale 50 comportant des particules ou des nanoparticules organiques 51 en dispersion dans ses pores.

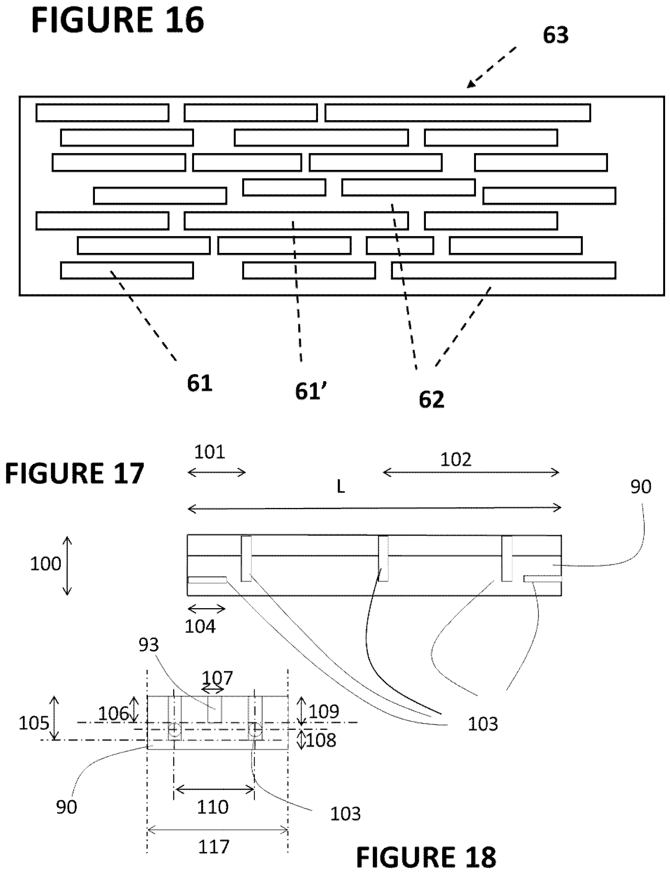

La figure 16 représente une vue en coupe suivant une direction parallèle à son grand axe d'une variante d'un garnissage pour la chromatographie suivant l'invention dans lequel les conduits 61, 61' sont inclus dans une masse monolithique poreuse 63 et sont empilés et juxtaposés. Dans ce cas les conduits débouchent de façon ordonnée ou aléatoire dans le matériau 62 perméable à l'éluant. Afin de visualiser cette structure, on pourra considérer que ces conduits peuvent avoir pour précurseurs des fibres coupées, empilées et juxtaposées de façon directionnelle de façon à leur conférer une direction moyenne parallèle au sens d'écoulement du fluide dans le garnissage. Avantageusement suivant l'invention, les conduits sont de longueurs et de diamètres homogènes, et le plus parallèles possible.

Les exemples développés ci-dessous décrivent différents procédés de fabrication d'un garnissage pour la mise en œuvre d'un procédé de chromatographie selon l'invention.

Exemple 1 : Fabrication d'un garnissage multicapillaire en un échangeur d'anion

Le matériau de départ est un fil en un alliage d'étain et de bismuth en proportions 58%, 42% en poids respectivement. Il a 15/100 de mm de diamètre. Le fil est recouvert par trempage d'une fine couche d'un mélange de styrène, de 8% en poids de divinylbenzène en poids, de 0,4% en poids d'un activateur de polymérisation (azobis isobutyronitrile) et de poudre de verre broyée à 10 μm (un volume de poudre de verre pour un volume de la solution). Il est disposé 24 heures à 70°C sous azote.. Le fil est coupé en tronçons rectilignes de 200 mm de long. Ils sont ensuite introduits en un faisceau de 4 mm de diamètre environ dans un tube de verre de 160 mm de long et 4 mm de diamètre intérieur préalablement préparé.

Un mélange de styrène, de 8% en poids de divinylbenzène et 0,4% en poids d'un activateur de polymérisation (t-butyl hydroperoxyde) est ensuite coulé dans le tube par les interstices entre les tronçons de fil de façon à remplir totalement cet espace vide. Le mélange est polymérisé durant 24 heures à 120°C.

Le composite ainsi réalisé est libéré en sectionnant les tronçons de fil de part et d'autre du tube de verre au ras de ses extrémités, perpendiculairement auxdits tronçons.

Le composite est porté dans un four à 145°C, jusqu'à fusion des tronçons de fil, et le métal fondu est éliminé par des vibrations ultrasonores et sous l'action de la gravité et d'une circulation d'air sous pression.

Le monolithe ainsi réalisé est converti en un échangeur d'ions basique en le soumettant à l'action d'un courant d'une solution à 15% en poids de tétrachlorure d'étain dans l'éther chlorodiméthylique à 0°C durant 6 heures. Le garnissage est ensuite lavé au méthanol puis par de l'eau et quaternisé par l'action d'un courant d'une solution aqueuse de triméthylamine à 40% durant une période de dix heures. Le garnissage est ensuite lavé jusqu'à neutralité et l'ammonium quaternaire est converti en sa forme hydroxylée.

Exemple 2 : Fabrication d'un garnissage multicapillaire en un échangeur de cations

Un monolithe à parois poreuses d'alumine alpha de 160 mm de long présentant 100 conduits de 0,45 mm de diamètre répartis suivant une maille carrée de 1,2 mm de côté est produit par extrusion et frittage d'une poudre d'alumine alpha de 20 μm de diamètre élémentaire.

Un mélange 49 g de styrène, de 1 g de divinylbenzène , 200 mg d'un activateur de polymérisation (t-butyl hydroperoxyde) et de 150 ml de pentane est ensuite coulé dans le monolithe de façon à remplir totalement la porosité de la paroi. Le cœur des conduits est drainé de la phase liquide qu'il contient. Le monolithe porté à 50 °C de façon à évaporer la majorité du pentane, puis briévement tiré sous vide de façon à parfaire cette évaporation. Le dépôt de monomères et d'activateur ainsi déposé sous forme d'une pellicule liquide recouvrant la paroi des grains d'alumine est polymérisé durant 24 heures à 120°C sous atmosphère d'azote.

Le monolithe ainsi réalisé est converti en un échangeur d'ions acide par sulfonation. Le monolithe est traité par un courant d'acide sulfurique concentré contenant 0,1% en poids de carbonate d'argent à 100°C durant 3 heures. Le garnissage sulfoné est ensuite traité par de l'acide sulfurique progressivement moins concentré et finalement par de l'eau distillée.

Exemple 3 : Fabrication d'un garnissage multicapillaire présentant une porosité

On prépare un mélange contenant 8 g de méthacrylate d'hydroxyéthyle, 32 g de divinylbenzène, 445 mg d'azobisisobutyronitrile, 60 g de dodécanol et on le dégaze sous azote durant 20 minutes.

Ce mélange est porté à 70°C durant 24 heures. Le mélange se polymérise.

Le monolithe A ainsi réalisé est lavé y faisant percoler du THF durant 30 minutes et séché a l'étuve à 90°C.

Le monolithe A est broyé sous azote liquide jusqu'à obtenir le diamétre de grains désiré

La porosité de ces grains est comblée par une cire paraffinique fondant à 80 °C par ajout à chaud de la cire fondue dans la poudre sous agitation.

Exemple 4 :

Un fil d'un mélange d'indium et d'étain dans des proportions pondérales 48, 52 fondant à 118°C, est produit avec un diamètre de 0,25 mm.

Le fil est recouvert par collage sur sa surface à l'aide d'une solution aqueuse de PVA (alcool polyvinylique) d'une monocouche des grains du monolithe A obtenu à l'exemple 3 broyé à 50 $\mu$m. Le fil est coupé en tronçons rectilignes de 12 cm de long et assemblés en un faisceau de 4 mm de diamètre environ dans un tube de verre de 100 mm de long et 4 mm de diamètre intérieur préalablement préparé.

On prépare en parallèle un mélange contenant 8 g de méthacrylate d'hydroxyéthyle, 32 g de divinylbenzène, 445 mg d'azobisisobutyronitrile, 60 g de dodécanol et on le dégaze sous azote durant 20 minutes.

Le faisceau préparé précédemment est rempli avec ce mélange et porté à 70°C durant 24 heures. Le mélange se polymérise.

Le composite ainsi réalisé est libéré en sectionnant les tronçons de fil de part et d'autre du tube de verre au ras de ses extrémités, perpendiculairement auxdits tronçons.

Le composite est porté dans une étuve à 125°C, jusqu'à fusion des tronçons de fil, et le métal fondu est facilement éliminé par application de vibrations ultrasonores par gravité et sous une légère circulation d'air sous pression.

Le monolithe ainsi réalisé est lavé par un courant de n-octane à 120°C durant 30 minutes, puis par du THF (tetrahydrofurane) à temperature ambiante durant 30 minutes.

Exemple 5 : Fabrication d'un garnissage multicapillaire présentant une porosité

On prépare un mélange contenant 8 g de méthacrylate d'hydroxyéthyle, 32 g de divinylbenzène, 445 mg d'azobisisobutyronitrile, 60 g de dodécanol et on le dégaze sous azote durant 20 minutes.

Ce mélange est porté à 70°C durant 24 heures. Le mélange se polymérise.

Le monolithe B ainsi réalisé est lavé y faisant percoler du THF durant 30 minutes et séché a l'étuve à 90°C.

Le monolithe B est broyé sous azote liquide jusqu'à obtenir un diamétre de grains de 50 $\mu$m.

La porosité de ces grains est comblée par une cire paraffinique fondant à 80 °C par ajout à chaud de la cire fondue dans la poudre sous agitation.

Un fil de polydioxanone est produit avec un diamètre de 0,25 mm.

Le fil est recouvert par trempage et collage à l'aide une solution d'alcool polyvinylique aqueux préalablement déposée d'une fine couche de grains du monolithe B broyé à 50 $\mu$m. Il est ensuite coupé en longueurs de 120 mm et assemblés en un faisceau de 4 mm de diamètre environ dans un tube de verre de 100 mm de long et 4 mm de diamètre intérieur préalablement préparé.

On prépare en parallèle un mélange contenant 8 g de méthacrylate d'hydroxyéthyle, 32 g de divinylbenzène, 890 mg d'azobisisobutyronitrile, 60 g de dodécanol et on le dégaze sous azote durant 20 minutes.

Le faisceau préparé précédemment est rempli avec ce mélange et porté à 70°C durant 24 heures. Le mélange se polymérise.

Le composite ainsi réalisé est libéré en sectionnant les tronçons de fil de part et d'autre du tube de verre au ras de ses extrémités, perpendiculairement auxdits tronçons.

Le monolithe ainsi réalisé est lavé par un courant de n-octane à 120°C durant 30 minutes, puis par du THF (tetrahydrofurane) à temperature ambiante durant 30 minutes.

Les fils de polydioxanone sont dissous par de la soude N à 90°C percolée au travers du garnissage durant 1 heure, puis le garnissage est lavé par de l'eau distillée jusqu'à neutralité et séché à 105°C.

Le monolithe est porté dans une étuve sous un vide poussé à 125°C, jusqu'à fusion et volatilisation des résidus de cire et des organiques légers.

Exemple 6 : Fabrication d'un garnissage multicapillaire en agarose réticulé

On prépare un mélange contenant 8 g de méthacrylate d'hydroxyéthyle, 32 g de divinylbenzène, 445 mg d'azobisisobutyronitrile, 60 g de dodécanol et on le dégaze sous azote durant 20 minutes.

Ce mélange est porté à 70°C durant 24 heures. Le mélange se polymérise.

Le monolithe C ainsi réalisé est lavé y faisant percoler du THF durant 30 minutes et séché a l'étuve à 90°C.

Le monolithe C est broyé sous azote liquide jusqu'à obtenir un diamétre de grains de 50 $\mu$m.

La porosité de ces grains est comblée par une cire paraffinique fondant à 80 °C par ajout à chaud de la cire fondue dans la poudre sous agitation.

Un fil de polydioxanone est produit avec un diamètre de 0,25 mm.

Le fil est recouvert par trempage d'une fine couche de grains du monolithe C broyé à 50 $\mu$m. Il est ensuite coupé en longueurs de 120 mm et assemblés en un faisceau de 4 mm de diamètre environ dans un tube de verre de 100 mm de long et 4 mm de diamètre intérieur préalablement préparé.

On prépare en parallèle un mélange contenant 8 g de méthacrylate d'hydroxyéthyle, 32 g de divinylbenzène, 445 mg d'azobisisobutyronitrile, 60 g de dodécanol et on le dégaze sous azote durant 20 minutes.

Le faisceau préparé précédemment est rempli avec ce mélange et porté à 70°C durant 24 heures. Le mélange se polymérise.

Le composite ainsi réalisé est libéré en sectionnant les tronçons de fil de part et d'autre du tube de verre au ras de ses extrémités, perpendiculairement auxdits tronçons.

Le monolithe ainsi réalisé est lavé par un courant de n-octane à 120°C durant 30 minutes, puis par du THF (tetrahydrofurane) à temperature ambiante durant 30 minutes.

Les fils de polydioxanone sont dissous par de la soude N à 90°C percolée au travers du garnissage durant 1 heure, puis le garnissage est lavé par de l'eau distillée jusqu'à neutralité et séché à 105 °C.

Le monolithe est porté dans une étuve sous un vide poussé à 125°C, jusqu'à fusion et volatilisation des résidus de cire et des organiques légers. Un décilitre de billes d'agarose sont dissoutes dans un décilitre d'eau déminéralisée à 95°C.

La porosité du monolithe est imprégnée de cette solution par trempage et drainage à 95 °C du cœur des conduits puis refroidissement.

L'agarose occlus et gelé est lavé à l'eau distillée

Un décilitre de solution de NaOH 1 N contenant 2 ml d'épichlorohydrine et 0,5 g de NaBH4 est préparé. On en remplit les conduits du monolithe.

L'ensemble est porté à 60°C durant une heure.

Le gel réticulé obtenu est lavé à l'eau chaude jusqu'à neutralité.

Exemple 7: Fabrication d'un garnissage multicapillaire en agarose réticulé

Un monolithe à parois poreuses d'alumine alpha de 300 mm de long présentant 100 conduits de 0,45 mm de diamètre répartis suivant une maille carrée de 1,2 mm de côté est produit par extrusion et frittage d'une poudre d'alumine alpha de 20 $\mu$m de diamètre élémentaire

Un décilitre de billes d'agarose sont dissoutes dans un décilitre d'eau déminéralisée à 95°C.

La porosité du monolithe est imprégnée de cette solution par trempage et drainage à 95 °C du cœur des conduits puis refroidissement.

L'agarose occlus et gelé est lavé à l'eau distillée.

Un décilitre de solution de NaOH 1 N contenant 1 ml d'epichlorohydrine et 0,25 g de NaBH4 est préparé. On en remplit les conduits du monolithe.

L'ensemble est porté à 60°C durant une heure.

Le gel réticulé obtenu est lavé à l'eau chaude jusqu'à neutralité.

Exemple 8 : Fabrication d'un garnissage multicapillaire en agarose réticulé

Un monolithe à parois poreuses de verre pyrex de 150 mm de long présentant 100 conduits de 0,45 mm de diamètre répartis suivant une maille carrée de 1,2 mm de côté est produit par extrusion et frittage d'une poudre de verre pyrex de 20 $\mu$m de diamètre élémentaire

Un décilitre de billes d'agarose sont dissoutes dans un décilitre d'eau déminéralisée à 95°C.

La porosité du monolithe est imprégnée de cette solution par trempage et drainage des conduits à 95 °C puis refroidissement.

L'agarose occlus et gelé est lavé à l'eau distillée

Un décilitre de solution de NaOH 1 N contenant 20 ml d'epichlorohydrine et 5 g de NaBH4 est préparé. On en remplit les conduits du monolithe.

L'ensemble est porté à 60°C durant une heure.

Le gel réticulé obtenu est lavé à l'eau chaude jusqu'à neutralité.

On prépare 50 ml de NaOH 2N et 0,25 g de NaBH4. On percole le monolithe par cette solution, et on l'autoclave à 120°C pendant une heure.

Le gel est lavé avec du NaOH 1 N contenant 0,5 % NaBH4 chaud, puis froid.

Le monolithe est rapidement transféré dans un bain de glace tamponné à ph 4 à l'aide d'une solution d'acide acétique et d'acétate de sodium.

Le monolithe est lavé par circulation d'eau distillée chaude, puis glacée.

Exemple 9 : Fabrication d'un garnissage multicapillaire en agarose réticulé et fonctionnalisé

Un monolithe à parois poreuses d'alumine alpha de 150 mm de long présentant 100 conduits de 0,45 mm de diamètre répartis suivant une maille carrée de 1,2 mm de côté est produit par extrusion et frittage d'une poudre d'alumine alpha de 20 $\mu$m de diamètre élémentaire

Un litre de billes d'agarose sont dissoutes dans un litre d'eau déminéralisée à 95°C.

La porosité du monolithe est imprégnée de cette solution par trempage et drainage des conduits à 95 °C puis refroidissement.

L'agarose occlus et gelé est lavé à l'eau distillée

Un décilitre de solution de NaOH 1 N contenant 1 ml d'epichlorohydrine et 0,25 g de NaBH4 est préparé. On en remplit les conduits du monolithe.

L'ensemble est porté à 60°C durant une heure.

Le gel réticulé obtenu est lavé à l'eau chaude jusqu'à neutralité.

On prépare 50 ml de NaOH 2N et 0,25 g de NaBH4. On percole le monolithe par cette solution, et on l'autoclave à 120°C pendant une heure.

Le gel est lavé avec du NaOH 1 N contenant 0,5 %NaBH4 chaud, puis froid.

Le monolithe est rapidement transféré dans un bain de glace tamponné à ph 4 à l'aide d'une solution d'acide acétique et d'acétate de sodium.

Le monolithe est lavé par circulation d'eau distillée chaude, puis glacée.

Le monolithe est lyophilisé et le gel sec est traité avec 60 ml d'un mélange de pyridine et d'acide acétique à volumes égaux. L'acétylation est conduite en ajoutant 4 ml de chlorure d'acétyle à 60°C pendant 75 mn, en faisant circuler le mélange au travers des conduits.

Le monolithe est transféré dans 100 ml de dioxane sec. 1 g de LiAlH4 sont ajoutées au milieu, en faisant circuler le mélange au travers des conduits. La température est augmentée lentement jusqu'à 80°C et maintenue 2 heures.

La réaction est stoppée par ajout d'acétate d'éthyle puis d'eau.

Le monolithe est refroidi dans un bain de glace. On fait circuler de l'acide chlorhydrique 1M au travers des conduits. Le monolithe est brièvement lavé par HCl 0,1 M puis par l'eau.

La désacétylation est menée à 80°C durant 15 minutes avec NaOH M contenant 0,1% de NaBH4.

Exemple 10 : Fabrication d'un garnissage multicapillaire en gel polymérique par immersion d'une fibre creuse de polypropylène.

On aligne jointivement 500 fibres microporeuses de polypropylène CELGARD X30-240 de 300 $\mu$m de diamètre externe et 240 $\mu$m de diamètre interne et de 300 mm de long sous la forme d'un cylindre dans un tube de verre de 8 mm de diamètre intérieur.

On prépare un mélange contenant 16 g de méthacrylate d'hydroxyéthyle, 64 g de divinylbenzène, 890 mg d'azobisisobutyronitrile, 120 g de dodécanol et on le dégaze sous azote durant 20 minutes.

La paroi, le lumen et les interstices du faisceau de fibres creuses sont imprégnés avec ce mélange par immersion sous vide puis remise à pression atmosphérique suivi d'un drainage du lumen des fibres.

Le faisceau est porté à 70°C durant 24 heures. Le mélange polymérise.

Le mélange gèle dans la paroi poreuse des fibres dans ces conditions.

Le monolithe ainsi réalisé est lavé sous THF durant 30 minutes, puis séché sous un courant d'air sec à 70°C.

Exemple 11 Fabrication d'un garnissage multicapillaire en gel polymérique par moulage

2 parties de polypropylène ayant un MI de 0,8g/10 mn et une partie et demi de tetrahydronaphtalène sont mélangés en un mélange homogène à une température d'environ 160°C et après refroidissement à 140°C sont mélangés à une partie de styrène contenant 8% en poids de dinvinylbenzène. On ajoute au mélange 0,5% en poids de p-methoxyphenol comme inhibiteur de polymérisation et 0,1 % en poids de di t-butyl hydroperoxyde comme initiateur de polymérisation. Le mélange est poursuivi 5 mn. Le mélange est ensuite polymérisé dans un réacteur sous pression à 180°C durant 8 heures.

Le polymére résultant est extrudé en une feuille de 50 mm de large et de 0,5 mm d'epaisseur comportant 100 rainures de 0,4 mm de large et 0,4 mm de profondeur equidistantes.

La feuille résultante est coupée en feuillets de longueurs 250 mm. Le solvant présent dans ces feuillets est extrait par du methanol a l'ébullition.

100 feuillets sont ensuite empilés suivant leur longueur en un faisceau carré constituant un garnissage pour la chromatographie.

Exemple 12 : Fabrication d'un garnissage multicapillaire support de silice colloïdale

Un monolithe est obtenu suivant le protocole donné dans l'exemple 5.

La porosité du monolithe est imprégnée d'une solution de sol de silice Ludox SM30 à 30% en matière sèche en y faisant percoler ce sol puis en le drainant hors du lumen des fibres.

Le sol de silice est séché in situ par circulation d'air sec à 80°C.

Exemple 13 : Fabrication d'un garnissage multicapillaire en cellulose

Un monolithe à parois poreuses d'alumine alpha de 300 mm de long présentant 100 conduits de 0,45 mm de diamètre répartis suivant une maille carrée de 1,2 mm de côté est produit par extrusion et frittage d'une poudre d'alumine alpha de 20 $\mu$m de diamètre élémentaire.

150 g de cellulose pour la chromatographie sur couche mince (marque Sigma Aldrich) sont broyés jusqu'à un diamètre de particule de 1 $\mu$m.

La poudre obtenue est progressivement ajoutée à 50 ml de polystyréne colloïdal aqueux de 0,35 $\mu$m de taille de particule à 5 % de concentration pondérale (marque PolyScience inc) jusqu'à obtenir une suspension épaisse ayant une viscosité de 1 Poiseuille environ.

La suspension obtenue est coulée dans le monolithe par les conduits de façon à remplir la porosité des parois, et les conduits sont drainés de la suspension qu'ils contiennent.

Le monolithe est séché à l'étuve à 80 °C.

Exemple 14 : Fabrication d'un garnissage multicapillaire avec une phase stationnaire liquide organique

On prépare un monolithe organique par le protocole présenté dans l'exemple 5.

Le garnissage est imprégné par immersion dans de l'acétate de cyclohexyle suivi d'un drainage du lumen des conduits..

Exemple 15 : Fabrication d'un garnissage multicapillaire par immersion d'une fibre creuse de polypropylène dans un liquide organique.

On aligne jointivement 500 fibres microporeuses de polypropylène CELGARD X30-240 de 300 $\mu$m de diamètre externe et 240 $\mu$m de diamètre interne et de 300 mm de long sous la forme d'un cylindre dans un tube de verre de 8 mm de diamètre intérieur.

La paroi, le lumen et les interstices du faisceau de fibres creuses entre les fibres sont imprégnés avec de l'acétate de cyclohexyle par immersion totale sous vide puis remise à pression atmosphérique suivi d'un drainage du lumen des fibres.

Les interstices entre les fibres individuelles sont remplis d'acétate de cyclohexyle

Exemple 16 : Fabrication d'un garnissage multicapillaire avec une phase stationnaire liquide organique

Un monolithe à parois poreuses de verre pyrex de 300 mm de long présentant 100 conduits de 0,45 mm de diamètre répartis suivant une maille carrée de 1,2 mm de côté est produit par extrusion et frittage d'une poudre de verre pyrex de 20 $\mu$m de diamètre élémentaire.

Le garnissage est immergé dans de l'hexamethyle disilazanne et porté à 140°C sous pression dans un récipient clôt de façon à hydrophobiser la surface du verre.

Le garnissage est imprégné par immersion dans de l'acétate de cyclohexyle suivi d'un drainage du lumen des conduits..

Exemple 17 : Fabrication d'un garnissage multicapillaire en sépharose

Un monolithe à parois poreuses d'alumine alpha de 300 mm de long présentant 100 conduits de 0,45 mm de diamètre répartis suivant une maille carrée de 1,2 mm de côté est produit par extrusion et frittage d'une poudre d'alumine alpha de 20 $\mu$m de diamètre élémentaire.

150 g de Sepharose (GE HealthCare) sont broyés dans l'azote liquide jusqu'à un diamètre de particule de 1 $\mu$m. La poudre obtenue est progressivement ajoutée à 50 ml de polystyréne colloïdal aqueux de 0,80 $\mu$m de taille de particule à 5 % de concentration pondérale (marque PolyScience inc) jusqu'à obtenir une suspension épaisse ayant une viscosité de 1 Poiseuille environ.

La suspension obtenue est coulée dans le monolithe par les conduits de façon à remplir la porosité des parois, et les conduits sont drainés de la suspension qu'ils contiennent.

Le monolithe est séché à l'étuve à 80 °C.

Exemple de réalisation 18

On prépare un mélange contenant 8 g d'ethylstyréne, 32 g de divinylbenzène, 445 mg d'azobisisobutyronitrile, 120 g de dodécanol et on le dégaze sous azote durant 20 minutes.

Ce mélange est porté à 70°C durant 24 heures. Le mélange se polymérise.

Le monolithe A ainsi réalisé est lavé y faisant percoler du THF durant 30 minutes et séché a l'étuve à 90°C.

Le monolithe A est broyé sous azote liquide jusqu'à obtenir un diamétre de grains de 25 $\mu$m.

La porosité de ces grains est comblée d'une cire paraffinique fondant à 80 °C par ajout à chaud de la cire fondue dans la poudre sous agitation.

Un fil de polydioxanone est produit avec un diamètre de 0,05 mm.

Le fil est recouvert par trempage et collage à l'aide une solution d'alcool polyvinylique aqueux préalablement déposée d'une fine couche de grains du monolithe B broyé à 25 $\mu$m. Il est ensuite coupé en longueurs de 120 mm et assemblés en un faisceau de 4 mm de diamètre environ dans un tube de verre de 75 mm de long, de 6.35 mm de diamètre externe et de 4 mm de diamètre intérieur préalablement préparé.

On prépare en parallèle un mélange contenant 8 g d'ethylstyréne, 32 g de divinylbenzène, 890 mg d'azobisisobutyronitrile, 120 g de dodécanol et on le dégaze sous azote durant 20 minutes.

Le faisceau préparé précédemment est rempli avec ce mélange et porté à 70°C durant 24 heures. Le mélange se polymérise.

Le composite ainsi réalisé est libéré en sectionnant les tronçons de fil de part et d'autre du tube de verre au ras de ses extrémités, perpendiculairement auxdits tronçons.

Le monolithe ainsi réalisé est lavé par un courant de n-octane à 120°C durant 30 minutes, puis par du THF (tetrahydrofurane) à température ambiante durant 30 minutes.

Les fils de polydioxanone sont dissous par de la soude N à 90°C percolée au travers du garnissage durant 1 heure, puis le garnissage est lavé par de l'eau distillée jusqu'à neutralité et séché à 105°C. Le monolithe est porté dans une étuve sous un vide poussé à 125°C, jusqu'à fusion et volatilisation des résidus de cire et des organiques légers.

Le monolithe ainsi obtenu peut être utilisé directement pour la chromatographie liquide de molécules de poids moléculaires de 500 g/mole à 5000 g/mole .

Exemple de réalisation 19

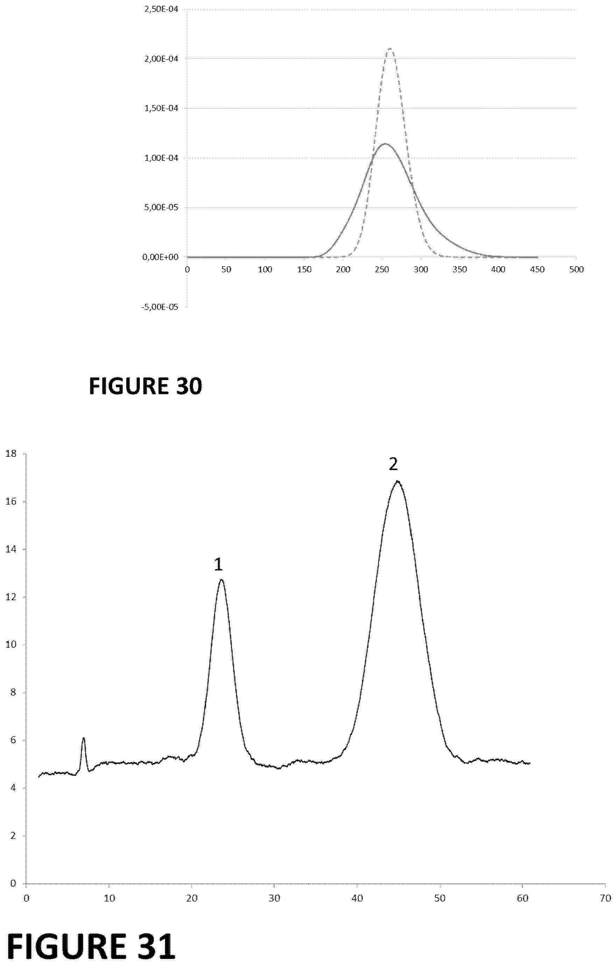

On prépare un monolithe suivant le protocole décrit en exemple 18 . La figure 31 représente un chromatogramme réalisé avec ce monolithe.

Les conditions sont les suivantes :

• Chromatographe Agilent 1100, détecteur UV a longueur d'onde variable

- Solvant A Eau/Acétonitrile 95/5(v/v) + 0.1%Acide Trifluoroacétique
- Solvant B Eau/Acétonitrile 5/95(v/v) + 0.1%Acide Trifluoroacétique
- Mode Gradient 1-65% B en 60 mn
- T° Ambiante
- Débit : 0,012 ml/mn
- Longueur d'onde de détection : 235 nm

Les espèces séparées sont l'angiotensine II (1) et le lysozyme (2).

L'axe des abscisses est le temps en mn, l'axe des ordonnées est la réponse du détecteur.

Exemple de réalisation 20

Une préforme des canaux du monolithe est réalisée en réalisant un faisceau composé de trois familles de fils de nylon 66 de respectivement 50, 60 et 70 $\mu$m de diamètre.

Le faisceau est réalisé en un faisceau carré de 12 fils de cotés répartis suivant une maille carrée de 120 $\mu$m de pas, a l'aide d'un dispositif support du type de celui présenté figure 30.

Les fils des trois familles sont disposés alternativement en couches successives de 12 fils de même diamètre suivant la séquence 50/60/70/60/50/60/70/6050/60/70/60.

Le faisceau est réalisé avec une longueur de 75 mm de long.

Le faisceau d'aiguilles est ensuite inséré dans un logement carré de 1.5 mm de côté et de 75 mm de long creusé dans une feuille de 20x10x75 mm d'acier inoxydable 316L, et d'un couvercle plan dans une feuille de 20x10x75 mm de PTFE (marque Teflon déposée par DuPont de Nemours).

200 g de Gel de Silice pour la chromatographie de taille de pore 6 nm (SiliCycle) est broyé jusqu'à un diamètre moyen de particules de 3 $\mu$m environ.

La poudre est mise graduellement en suspension dans 500 ml d'un mélange de 200 ml de sol de silice TM50 de Grace à 50% en matière sèche et 20 nm de taille de particule et de 300 ml d'eau déminéralisée.

Le faisceau d'aiguilles de nylon dans le logement inox est imprégné avec ce mélange. Le liquide doit remplir la totalité du faisceau, qui doit s'y trouver immergé.

Les deux parties, inox et teflon sont vissées l'une contre l'autre.

Le mélange est maintenu à 90°C sous atmosphère saturée humide jusqu'à gel complet du sol.

Le couvercle en PTFE supérieur maintenant le faisceau est extrait du gel, les extrémités du gel sont dégagées, et le faisceau dans son logement inox est porté graduellement avec une montée en température de 5°C /mn jusqu'à 95 °C dans une étuve. Ils sont maintenus 5 heures à cette température.

Le faisceau sec dans son logement inox est porté graduellement avec une montée en température de 1°C /mn jusqu'à 550 °C dans un four sous atmosphère d'air. Il est maintenu 5 heures à cette température.

Un couvercle manufacturé dans une feuille de 20x10x75 mm d'acier inoxydable 316L est replacé pour refermer le garnissage en substitution de la demi coque en PTFE.

Le monolithe est lavé à l'eau désionisée percolée par les conduits libres et séché à 105°C deux heures.

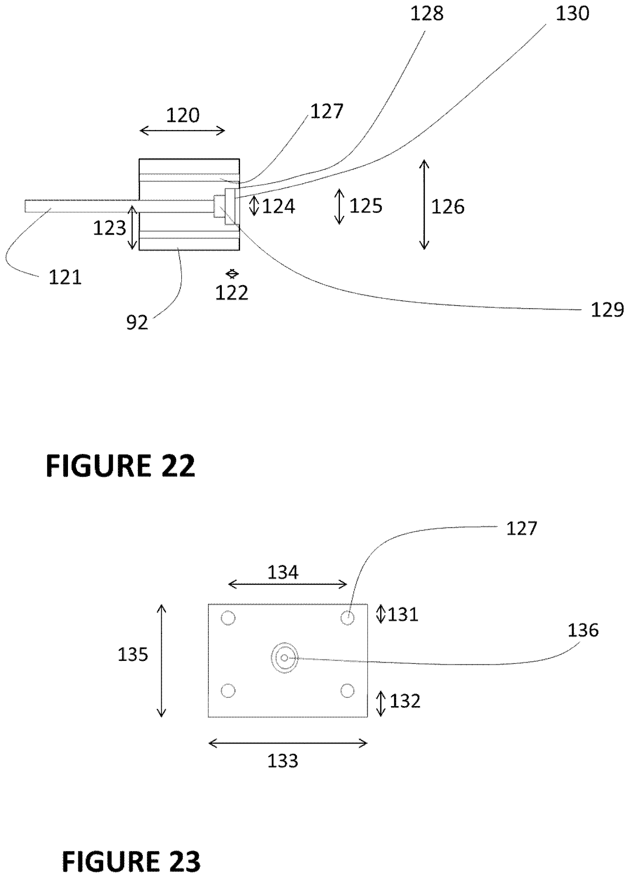

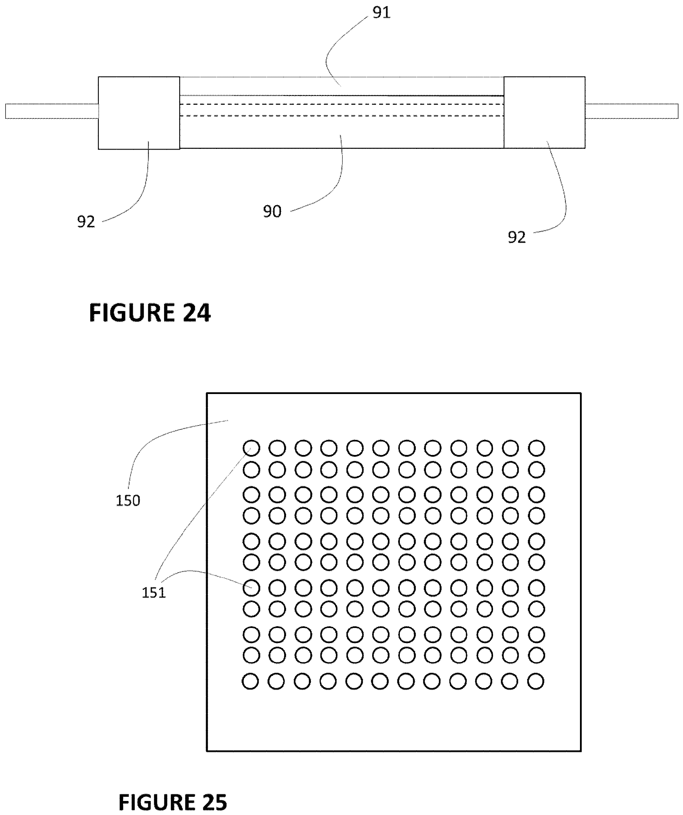

Les embouts (figures 22 23)sont fixés (figure 24) sur la colonne et l'ensemble est étanché par une pellicule de colle époxy bicomposants. La colonne est connectée au chromatographe.

Une caractérisation de la matière silicique de ce monolithe par adsorption à l'azote montre un diamètre médian des mésopores de 8 nm et une fraction de volume poreux de 55%.

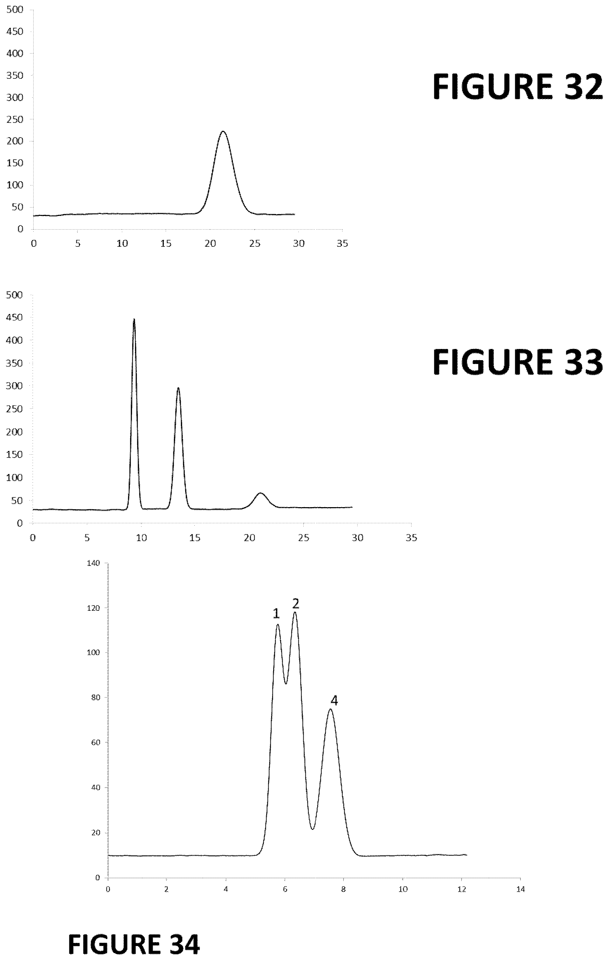

Les figures 32 et 33 montrent les chromatogrammes obtenus à l'aide de ce monolithe. Les conditions sont les suivantes :

- Chromatographe Agilent 1100, détecteur à barette de diode
- Mode isocratique
- Solvant Eau 100 %
- T° Ambiante
- Débit : 0.01 ml/mn
- Longueur d'onde de détection : 235 nm

L'axe des abscisses est le temps en mn, l'axe des ordonnées est la réponse du détecteur.

Figure 32 : traceur acide acétique dilué 0.1 N

Figure 33: traceur microsphéres de latex de polystyréne (Applied Physics AP3100A ) de 100 nm de diamètre, solution à 1000 ppm de matière sèche. On note que la diffusion de l'acide acétique entre les canaux autorise une réponse chromatographique sous forme d'un pic unique. Au contraire, le diamètre des particules de polystyrène empêche les phénomènes diffusifs de se produire et chaque famille de canaux produit son propre pic d'élution. Il n'est plus possible dans ce dernier cas d'associer chaque pic a une espèce unique.

Exemple de réalisation 21

Une préforme des canaux du monolithe est réalisée en réalisant un faisceau composé de fils de polydioxanone de 50μm de diamètre.

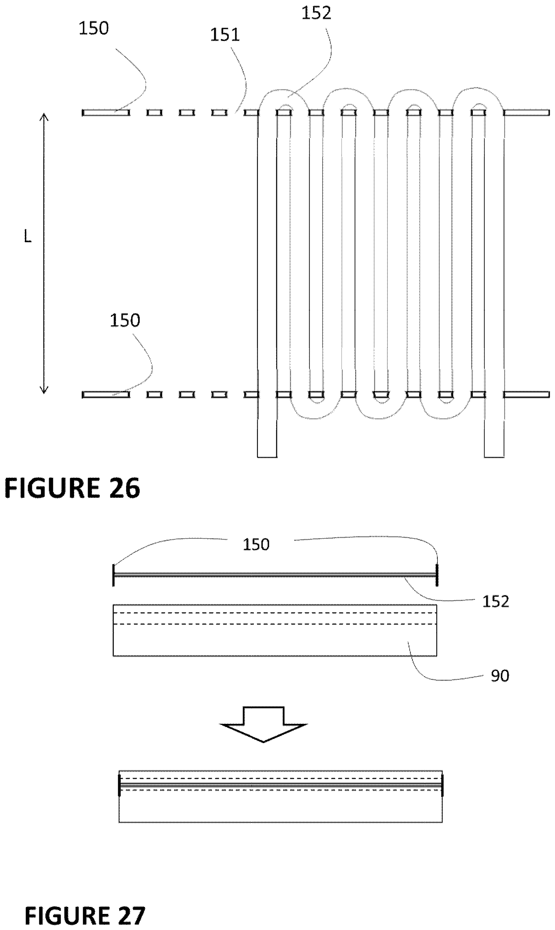

Le faisceau est réalisé en un faisceau carré de 10 fils de cotés répartis suivant une maille carrée de 100 μm de pas, a l'aide d'un dispositif support du type de celui présenté figures 27 à 29. Le crible perforé est réalisé par perçage laser de perforations de 55 μm dans une feuille d'acier inoxydable de 150 μm d'épaisseur.

Le faisceau est réalisé avec une longueur de 75 mm de long.

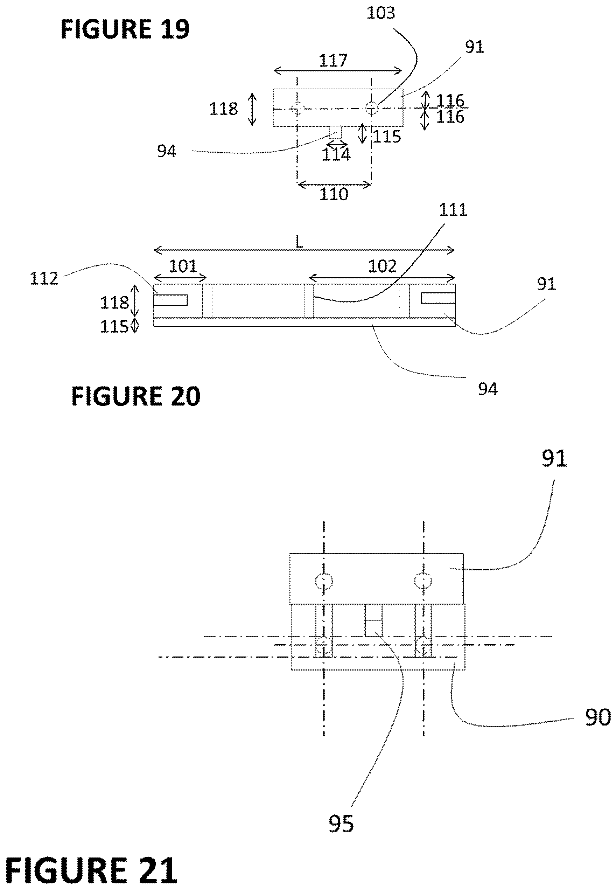

Le faisceau d'aiguilles est ensuite inséré au fond d'un logement de 1.0 mm de large, de 2 mm de profondeur et de 75 mm de long creusé dans une feuille de 20x10x75 mm d'acier inoxydable 316L (figures 17 et 18) . Un couvercle plan dans une feuille de 20x10x75 mm d'acier inoxydable (figures 19 et 20) est préparé.

On mélange dans un erlenmeyer à col rodé de 25 ml 7 g de polyethylene glycol ayant un poids moléculaire de 200 g, 0.37 g de 2,2,2-tri-(2,3-epoxypropyl)-isocyanurate et 1.6 g de bis(4-aminocyclohexyl)methane sous agitation jusqu'à dissolution sur un agitateur magnétique chauffant.

Après quoi le mélange est injecté dans le logement de la base en inox précédante comportant le faisceau de fils de 50 μm et le couvercle est posé de façon à définir le canal du monolithe. L'ensemble est porté 20 h à 80°C pour être polymérisé.

Le barreau résultant est lavé à l'eau et au méthanol, puis mis a percoler par de la soude N à 90 °C durant 24 h jusqu'à dissolution des fils.

Après lavage à l'eau jusqu'à neutralité, le garnissage est séché à l'étuve sous vide.

Les embouts (figures 22 23)sont fixés (figure 24) sur la colonne et l'ensemble est étanché par une pellicule de colle époxy bicomposants. La colonne est connectée au chromatographe.

La figure 34 représente un chromatogramme réalisé avec ce monolithe.
Les conditions sont les suivantes :

- Solvant Eau/Acétonitrile 60/40(100 ml/100 ml) + 20mM de tampon phosphate à pH7
- T° Ambiante
- Débit : 0.01 ml/mn
- Longueur d'onde de détection : 210 nm

Les espèces séparées sont l'uracile (1) le benzène (2) et l'hexylbenzene(3).

L'axe des abscisses est le temps en mn, l'axe des ordonnées est la réponse du détecteur.

Les figures 17 à 24 représentent des vues de la construction d'une colonne de chromatographie multicapillaire.

Les figures 17-18 et 19-20, représentent respectivement deux éléments constituant le corps de la colonne, à savoir un bloc inférieur 90 et un bloc supérieur 91. Un logement ou canal de section rectangulaire 93 est creusé dans le bloc inférieur 90. Ce logement reçoit et moule le monolithe. Avantageusement la synthèse du monolithe y est réalisée. La figure 17 est une vue de côté de la pièce 90, la figure 18 en est une vue suivant sa section. L représente la longueur de la pièce. La pièce est munie de perforations taraudées permettant son assemblage.

La figure 19 est une vue du bloc supérieur 91 suivant sa section, la figure 20 en est une vue de côté. La pièce 91 comporte une partie male 94 destinée à s'encastrer dans le canal 93.

La figure 21 représente une vue en coupe des pièces 90 et 91 encastrées. Leur encastrement ménage un canal libre 95 dans lequel se loge le monolithe.

Les figures 22 et 23 représentent respectivement en vue de profil et en vue de face la pièce 92 d'embout de la colonne permettant de la connecter à la fluidique. La pièce 92 comporte un tube 121 soudé ou collé de façon étanche permettant d'amener ou d'évacuer la phase mobile jusqu'au filtre fritté 130 par l'intermédiaire d'un espace annulaire 129. Le filtre est logé dans un espace annulaire 128. Les perforations 127 permettent d'assembler la colonne.

La figure 24 représente schématiquement la géométrie de l'assemblage final des éléments 90, 91 et 92. L'étanchéité de l'ensemble peut être réalisée simplement en le recouvrant d'une pellicule d'une colle bicomposant.

Le tableau ci-dessous explicite, dans un exemple, les cotes représentées sur les figures 17-24.

| Référence | Cote (mm) | Commentaire |
|-----------|-----------|-------------|
| 100 | 10 | |
| 101 | 15 | |
| 102 | 100 | |

(suite)

| Référence | Cote (mm) | Commentaire |
|---|---|---|
| 103 | M3 | Filetage3 mm profondeur 7 mm |
| 104 | 7 | |
| 105 | 10 | |
| 106 | 4 | |
| 107 | 2 | |
| 108 | 4 | |
| 109 | 6 | |
| 110 | 12 | |
| 111 | 3 mm | Perforation (diamètre) |
| 112 | M3 | Filetage3 mm profondeur 7 mm |
| 114 | 1,98 | |
| 115 | 2,0 | |
| 116 | 2.0 | |
| 117 | 20 | |
| 118 | 4 | |
| 120 | 20 | |
| 121 | 1,58 | Tube 1/16 pouce diamètre externe, diamètre interne 0,25 mm |
| 122 | 1,25 | |
| 124 | 2,1 | diamètre |
| 125 | 3,2 | diamètre |
| 126 | 14 | |
| 127 | 3 | Perforation (diamètre) |
| 129 | 0,3 | Profondeur |
| 130 | 1,0 | Epaisseur du filtre fritté |
| 131 | 2 | |
| 132 | 4 | |
| 133 | 20 | |
| 134 | 12 | |
| 135 | 14 | |
| 136 | 0,25 | Canal centré |

Les figures 25 et 26 représentent un mode d'assemblage de fils 152 précurseurs des conduits d'un monolithe. Une feuille 150 est perforée de trous 151 réguliers. Des perçages très fins de l'ordre de quelques dizaines de micromètres peuvent être réalisés par perçage laser dans de la feuille d'acier inoxydable, de la feuille de laiton ou de polymère. Le fil 152 est passé entre les perforations de deux plaques opposées symétriques 150 espacées de la longueur L de façon à réaliser un faisceau de fils parallèles. Les fils peuvent être ultérieurement soudés ou collés à la feuille 150 par une goutte de colle.

La figure 27 représente schématiquement l'assemblage du faisceau de fils 152 dans la pièce 90. Le faisceau de fils 152 limité par les feuilles 150 est inséré sous une légère tension au fond de la rainure 93. Les feuilles 150 réalisent une étanchéité provisoire aux deux extrémités. Le faisceau peut être rempli de phase stationnaire, et ultérieurement pyrolysé, dissout, fondu, ou éliminé par tout moyen convenable.

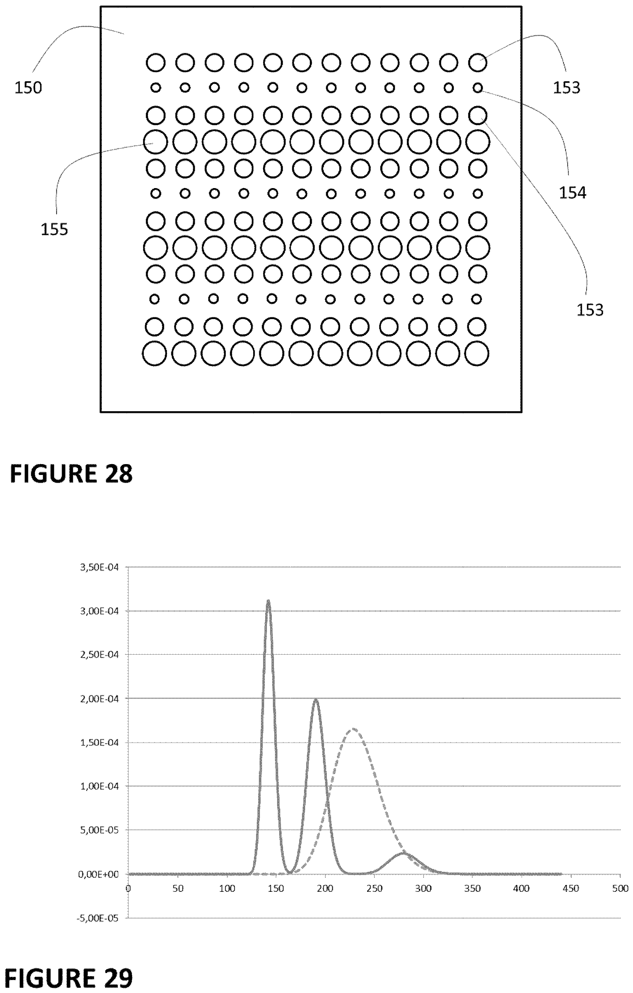

La figure 28 représente une feuille perforée 150 dont les trous sont répartis en couches de trois diamètres différents 153, 154, 155. On peut ainsi obtenir des faisceaux dont des fils de trois diamètres différents sont disposés en nappes alternées.

Les figures 29 et 30 représentent des réponses chromatographiques d'une même colonne dans les cas où la molécule éluée est d'un diamètre moléculaire inférieur à la moitié du diamètre des pores permettant la diffusion entre les conduits adjacents (courbe en pointillés), et dans le cas ou son diamètre moléculaire, supérieur à la moitié du diamètre des pores, ne le permet pas (courbe en trait plein). L'axe des abscisses est le temps, l'axe des ordonnées est la réponse du détecteur.

Dans le cas de la figure 29, la colonne contient trois familles de conduits de diamètres différents arrangés en couches superposées. Un exemple d'un tel agencement est représenté en coupe sur la figure 28.

On constate que lorsque la diffusion a lieu, un pic unique (courbe en pointillés) résulte de l'interaction des trois familles de conduits. Lorsque la diffusion est empêchée, trois pics (courbe en trait plein) se produisent pour un même composé, rendant impossible la lecture du chromatogramme.

Dans le cas de la figure 30, la colonne contient des conduits dont les diamètres sont répartis aléatoirement suivant une loi gaussienne dont l'écart type correspond à 5% du diamètre moyen des conduits.

On constate que lorsque la diffusion a lieu (courbe en pointillés) le nombre de plateaux théorique de la colonne est de 178. Lorsque la diffusion est empêchée (courbe en trait plein), le nombre de plateaux théorique de la colonne n'est plus que de 50, ce qui montre que la colonne est considérablement moins performante.

**REFERENCES**

[1] "Water Diffusion and Permeability in Unsaturated Polyester Resin Flms Characterized by Measurement Performed with a Water-Specific Permeameter : Analysis of the Transient Permeation", S. Marais, M. Métayer, M. Labbé, Journal of Polymer Science, Dec. 1999, Vol. 74, Issue 14, pp. 3380-3396

[2] Chromatographies en phases liquide et supercritique, R. Rosset, M. Caudé, A. Jardy, MASSON 3ème édition, 1991

[3] Measurement of the Effective Diffusivity in Porous Media by the diffusion Cell Method. In-Soo Park, Duong D. Do, Catalysis Review: Science and Engineering, 1996, Vol. 38, Issue 2 pp. 189-247

[4] US 8404346 B2

**Revendications**

1. Procédé de chromatographie dans lequel on fait circuler une phase mobile gazeuse, liquide ou supercritique contenant des espèces à séparer au travers d'un garnissage formant ou comprenant une phase stationnaire, ledit garnissage comprenant :

   - une pluralité de conduits capillaires s'étendant dans le garnissage entre une face dite amont par laquelle la phase mobile pénètre dans le garnissage et une face dite aval par laquelle la phase mobile sort du garnissage, les espèces à séparer contenues dans la phase mobile circulant dans chaque conduit étant retenues par la phase stationnaire, et
   - un milieu continu perméable à la diffusion moléculaire s'étendant entre lesdits conduits, comportant un gel organique poreux ou un liquide organique et incluant au moins un réseau de pores connexes dans lequel la taille desdits pores est supérieure à deux fois le diamètre moléculaire d'au moins une espèce à séparer et ouvert sur les conduits, de sorte à procurer à ladite au moins une espèce un chemin diffusif entre lesdits conduits,

   la permittivité dudit milieu continu vis-à-vis des espèces à séparer étant supérieure à 5000 Barrer, c'est-à-dire supérieure à $5.10^{-7}(cm^3 O_2 cm) / (cm^2 s\ cm\ Hg)$.

2. Procédé selon la revendication 1, dans lequel le débit molaire moyen de diffusion des espèces à séparer entre les conduits adjacents sous l'effet d'une différence de concentration donnée desdites espèces entre les parois desdits conduits est supérieur à 0.01 fois le débit molaire moyen de diffusion des espèces entre un conduit et la phase stationnaire sous l'effet d'une même différence de concentration des espèces à séparer entre le fluide conduit par les conduits et la paroi desdits conduits.

3. Procédé selon l'une des revendications 1 à 2, dans lequel le diamètre des conduits capillaires du garnissage est inférieur ou égal à 500 $\mu$m, de préférence inférieur ou égal à 150 $\mu$m et de manière encore préférée inférieur ou égal à 50 $\mu$m.

**4.** Procédé selon l'une des revendications 1 à 3, dans lequel ledit milieu continu est formé d'un gel organique, ledit gel organique étant choisi parmi :

(a) un copolymère du styrène et du divinylbenzène,
(b) du polyméthacrylate de méthyle,
(c) un copolymère du méthacrylate d'hydroxyéthyle et du divinylbenzène,
(d) un polyholoside.

**5.** Procédé selon l'une des revendications 1 à 3, dans lequel ledit milieu continu est formé d'un liquide organique s'étendant dans ledit réseau de pores connexes, ledit liquide organique étant choisi parmi :

(a) un hydocarbure aliphatique ou aromatique,
(b) un alcool aliphatique ou aromatique,
(c) une cétone aliphatique ou aromatique,
(d) une amine aliphatique ou aromatique,
(d) un composé organique halogéné.

**6.** Procédé selon l'une des revendications 1 à 4, dans lequel le garnissage comprend un monolithe de gel organique perméable à la diffusion moléculaire au travers duquel s'étendent lesdits conduits capillaires, ledit réseau de pores connexes s'étendant au sein dudit gel organique.

**7.** Procédé selon l'une des revendications 1 à 5, dans lequel le garnissage comprend un monolithe d'un matériau poreux chimiquement inerte contenant ledit réseau de pores connexes, lesdits pores étant remplis dudit gel organique ou dudit liquide organique perméable à la diffusion moléculaire.

**8.** Procédé selon l'une des revendications 1 à 7, dans lequel le garnissage comprend un monolithe d'un matériau poreux chimiquement inerte contenant ledit réseau continu de pores, la surface desdits pores étant recouverte du gel organique perméable à la diffusion moléculaire sur une épaisseur choisie de sorte à laisser, dans ledit réseau de pores, un volume libre pour la diffusion de la phase mobile, ledit gel organique formant un réseau continu de pores entre les conduits.

**9.** Procédé selon l'une des revendications 7 ou 8, dans lequel le matériau chimiquement inerte dudit monolithe est choisi parmi la silice, l'alumine, ou une combinaison de silice et d'alumine.

**10.** Procédé selon l'une des revendications 1 à 5, dans lequel le garnissage comprend un empilement de fibres poreuses comprenant chacune un lumen formant un conduit capillaire du garnissage et une paroi comprenant un réseau de pores connexes, lesdites fibres étant rendues jointives par le gel organique poreux ou le liquide organique perméable à la diffusion moléculaire.

**11.** Garnissage pour la mise en œuvre d'un procédé de chromatographie selon l'une des revendications 1 à 10, comprenant :

- une pluralité de conduits capillaires traversant le garnissage entre une face dite amont destinée à l'entrée de la phase dans le garnissage et une face dite aval destinée à la sortie de la phase mobile du garnissage, et
- un milieu continu perméable à la diffusion moléculaire s'étendant entre lesdits conduits, comportant un gel organique poreux ou un liquide organique et incluant au moins une famille de pores connexes, la permittivité dudit milieu continu vis-à-vis des espèces à séparer étant supérieure à 5000 Barrer, c'est-à-dire supérieure à $5.10^{-7}$ $(cm^3\ O_2\ cm) / (cm^2\ s\ cm\ Hg)$,

le diamètre des conduits capillaires dudit garnissage étant inférieur ou égal à 500 $\mu$m, de préférence inférieur ou égal à 150 $\mu$m et de manière encore préférée inférieur ou égal à 80 $\mu$m.

**Patentansprüche**

**1.** Chromatographieverfahren, bei dem eine gasförmige, flüssige oder superkritische mobile Phase, die zu trennende Spezies enthält, durch eine Packung zirkuliert, die eine stationäre Phase bildet oder umfasst, wobei die Packung umfasst:

- eine Vielzahl von Kapillarkanälen, die sich in der Packung zwischen einer als stromaufwärts bezeichnet gelegenen Seite, durch die die mobile Phase in die Packung eintritt, und einer als stromabwärts bezeichnet gelegenen Seite, durch die die mobile Phase die Packung verlässt, erstrecken, wobei die in der mobilen Phase vorhandenen zu trennenden Spezies, die in jedem Kanal zirkulieren, durch die stationäre Phase zurückgehalten werden, und

- ein kontinuierliches Medium, das für die Molekulardiffusion durchlässig ist und sich zwischen den Kanälen erstreckt, ein poröses organisches Gel oder eine organische Flüssigkeit aufweist und mindestens ein Netz aus verbundenen Poren aufweist, in dem die Größe der Poren mehr als doppelt so groß ist wie der Moleküldurchmesser mindestens einer zu trennenden Spezies und zu den Kanälen hin offen ist, so dass für die mindestens eine Spezies ein Diffusionsweg zwischen den Kanälen bereitgestellt wird,

wobei die Permittivität des kontinuierlichen Mediums gegenüber den zu trennenden Spezies größer als 5000 Barrer ist, das heißt größer als $5.10^{-7}$ ($cm^3$ $O_2$ cm)/($cm^2$ s cm Hg).

2. Verfahren nach Anspruch 1, wobei der mittlere molare Diffusionsdurchsatz der zu trennenden Spezies zwischen den benachbarten Kanälen unter der Wirkung einer gegebenen Konzentrationsdifferenz der Spezies zwischen den Wänden der Kanäle größer ist als das 0,01-fache des mittleren molaren Diffusionsdurchsatzes der Spezies zwischen einem Kanal und der stationären Phase unter der Wirkung derselben Konzentrationsdifferenz der zu trennenden Spezies zwischen dem durch die Kanäle geleiteten Fluid und der Wand der Kanäle.

3. Verfahren nach einem der Ansprüche 1 bis 2, wobei der Durchmesser der Kapillarkanäle der Packung kleiner oder gleich 500 $\mu$m, vorzugsweise kleiner oder gleich 150 $\mu$m und noch bevorzugter kleiner oder gleich 50 $\mu$m ist.

4. Verfahren nach einem der Ansprüche 1 bis 3, wobei das kontinuierliche Medium aus einem organischen Gel gebildet wird, wobei das organische Gel ausgewählt ist aus:

(a) einem Copolymer des Styrols und des Divinylbenzols,
(b) Polymethylmethacrylat,
(c) einem Copolymer des Hydroxyethylmethacrylats und des Divinylbenzols,
(d) einem Polyholosid.

5. Verfahren nach einem der Ansprüche 1 bis 3, wobei das kontinuierliche Medium aus einer organischen Flüssigkeit gebildet wird, die sich in dem Netz verbundener Poren erstreckt, wobei die organische Flüssigkeit ausgewählt ist aus:

(a) einem aliphatischen oder aromatischen Kohlenwasserstoff,
(b) einem aliphatischen oder aromatischen Alkohol,
(c) einem aliphatischen oder aromatischen Keton,
(d) einem aliphatischen oder aromatischen Amin,
(d) einer halogenierten organischen Verbindung.

6. Verfahren nach einem der Ansprüche 1 bis 4, wobei die Packung einen organischen Gelmonolithen umfasst, der für die molekulare Diffusion durchlässig ist und durch den sich die Kapillarkanäle erstrecken, wobei sich das Netz verbundener Poren innerhalb des organischen Gels erstreckt.

7. Verfahren nach einem der Ansprüche 1 bis 5, wobei die Packung einen Monolithen aus einem porösen, chemisch inerten Material umfasst, der das Netz verbundener Poren enthält, wobei die Poren mit dem organischen Gel oder der organischen Flüssigkeit, die für die molekulare Diffusion durchlässig sind, gefüllt sind.

8. Verfahren nach einem der Ansprüche 1 bis 7, wobei die Packung einen Monolith aus einem porösen chemisch inerten Material umfasst, der das kontinuierliche Porennetz enthält, wobei die Oberfläche der Poren mit dem organischen Gel, das für die molekulare Diffusion durchlässig ist, in einer Dicke bedeckt ist, die derart gewählt ist, dass in dem Porennetz ein freies Volumen für die Diffusion der mobilen Phase verbleibt, wobei das organische Gel ein kontinuierliches Porennetz zwischen den Kanälen bildet.

9. Verfahren nach einem der Ansprüche 7 oder 8, wobei das chemisch inerte Material des Monolithen aus Siliciumdioxid, Aluminiumoxid oder einer Kombination aus Siliciumdioxid und Aluminiumoxid ausgewählt ist.

10. Verfahren nach einem der Ansprüche 1 bis 5, wobei die Packung einen Stapel poröser Fasern umfasst, die jeweils ein Lumen, das einen Kapillarkanal der Packung bildet, und eine Wand, die ein Netz verbundener Poren umfasst, umfassen, wobei die Fasern durch das poröse organische Gel oder die organische Flüssigkeit, die für die molekulare Diffusion durchlässig sind, aneinandergefügt werden.

**11.** Packung für die Durchführung eines Chromatographieverfahrens nach einem der Ansprüche 1 bis 10, umfassend:

- eine Vielzahl von Kapillarkanälen, die die Packung zwischen einer als stromaufwärts bezeichneten Seite, die für den Eintritt der Phase in die Packung bestimmt ist, und einer als stromabwärts bezeichneten Seite, die für den Austritt der mobilen Phase aus der Packung bestimmt ist, durchqueren, und
- ein kontinuierliches Medium, das für die Molekulardiffusion durchlässig ist und sich zwischen den Kanälen erstreckt, das ein poröses organisches Gel oder eine organische Flüssigkeit umfasst und mindestens eine Familie verbundener Poren aufweist, wobei die Permittivität des kontinuierlichen Mediums gegenüber den zu trennenden Spezies größer als 5000 Barrer ist, das heißt größer als $5.10^{-7}(cm^3 \, O_2 \, cm)/(cm^2 \, s \, cm \, Hg)$,

wobei der Durchmesser der Kapillarkanäle der Packung kleiner oder gleich 500 $\mu$m, vorzugsweise kleiner oder gleich 150 $\mu$m und noch bevorzugter kleiner oder gleich 80 $\mu$m ist.

**Claims**

**1.** Chromatography process in which a gaseous, liquid or supercritical mobile phase containing the species to be separated is circulated through a packing forming or comprising a stationary phase, said packing comprising:

- a plurality of capillary ducts extending into the packing between an upstream face through which the mobile phase enters the packing and a downstream face through which the mobile phase leaves the packing, the species to be separated contained in the mobile phase circulating in each duct being retained by the stationary phase, and
- a continuous medium permeable to molecular diffusion extending between said conduits, comprising a porous organic gel or an organic liquid and including at least one network of associated pores in which the size of said pores is greater than twice the molecular diameter of at least one species to be separated and open to the conduits, so as to provide said at least one species with a diffusive path between said conduits,

the permittivity of the said continuous medium with respect to the species to be separated being greater than 5000 Barrer, i.e. greater than $5.10^{-7}(cm^3 \, O_2 \, cm) / (cm^2 \, s \, cm \, Hg)$.

**2.** Process according to claim 1, in which the average molar diffusion rate of the species to be separated between adjacent ducts under the effect of a difference of given concentration of the said species between the walls of the said ducts is greater than 0.01 times the average molar diffusion rate of the species between a duct and the stationary phase under the effect of the same difference in concentration of the species to be separated between the fluid conducted through the ducts and the wall of the said ducts.

**3.** Process according to one of claims 1 to 2, in which the diameter of the capillary ducts of the packing is less than or equal to 500 $\mu$m, preferably less than or equal to 150 $\mu$m and even more preferably less than or equal to 50 $\mu$m.

**4.** Process according to one of claims 1 to 3, in which said continuous medium is formed an organic gel, said organic gel being selected from:

(a) a copolymer of styrene and divinylbenzene,
(b) polymethyl methacrylate,
(c) a copolymer hydroxyethyl methacrylate and divinylbenzene,
(d) a polyholoside.

**5.** Process according to one of claims 1 to 3, in which the said continuous medium is formed of an organic liquid extending into the said network of associated pores, the said organic liquid being chosen from:

(a) an aliphatic or aromatic hydocarbon,
(b) an aliphatic or aromatic alcohol,
(c) an aliphatic or aromatic ketone,
(d) an aliphatic or aromatic amine,

(d) a halogenated organic compound.

6.  A method according to one of claims 1 to 4, wherein the packing comprises an organic gel monolith permeable to molecular diffusion through which said capillary ducts extend, said network of associated pores extending within said organic gel.

7.  A method according to one of claims 1 to 5, wherein the packing comprises a monolith of a chemically inert porous material containing said network of associated pores, said pores being filled with said organic gel or said liquid organic material permeable to molecular diffusion.

8.  A process according to one of claims 1 to 7, wherein the packing comprises a monolith of a chemically inert porous material containing said continuous network of pores, the surface of said pores being covered with the organic gel permeable to molecular diffusion over a thickness chosen so as to leave, in the said pores network, a free volume for the diffusion of the mobile phase, the said organic gel forming a continuous network of pores between the ducts.

9.  Process according to one of claims 7 or 8, in which the material of said monolith is chosen from silica, alumina or a combination of silica and alumina.

10. Process according to one of claims 1 to 5, wherein the packing comprises a stack of porous fibers each comprising a lumen forming a capillary duct of the packing and a wall comprising a network of associated pores, said fibers being joined together by the porous organic gel or the organic liquid permeable to molecular diffusion.

11. Packing for carrying out a chromatography process according to one of claims 1 to 10, comprising:

     - a plurality of capillary ducts passing through the packing between an upstream face intended for the entry of the phase into the packing and a downstream face intended for the exit of the mobile phase from the packing, and
     - a continuous medium permeable to molecular diffusion extending between said ducts, comprising a porous organic gel or an organic liquid and including at least one family of associated pores, the permittivity of said continuous medium with respect to the species to be separated being greater than 5000 Barrer, i.e. greater than $5.10^{-7} (cm^3 O_2 cm)/(cm^2 s cm Hg)$, the diameter of the capillary ducts of the said packing being less than or equal to 500 $\mu$m, preferably less than or equal to 150 $\mu$m and even more preferably less than or equal to 80 $\mu$m.

FIGURE 1

FIGURE 2

**FIGURE 3**

**FIGURE 4**

**FIGURE 5**

**FIGURE 6**

**FIGURE 7**

## FIGURE 8

## FIGURE 9

FIGURE 10

FIGURE 11

**FIGURE 12**

50

51

**FIGURE 13**

# FIGURE 14

# FIGURE 15

## FIGURE 16

63

61    61'    62

## FIGURE 17

101    102    L    90

100

104

FIGURE 18

93    107    109    108    106    105    110    103    90    103    117

**FIGURE 19**

**FIGURE 20**

**FIGURE 21**

**FIGURE 22**

**FIGURE 23**

91

92

90

92

# FIGURE 24

150

151

# FIGURE 25

**FIGURE 26**

**FIGURE 27**

**FIGURE 28**

**FIGURE 29**

## FIGURE 30

## FIGURE 31

FIGURE 32

FIGURE 33

FIGURE 34

# EP 3 200 890 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4957620 A, Cussler E.
- US 4007138 A, Kanig G.
- US 8017015 B, Clarke
- US 7922908 B
- WO 7473367 A, Xie S.
- WO 2011114017 A
- WO 2013064754 A, Parmentier
- US 8404346 B2

**Littérature non-brevet citée dans la description**

- **HONGBING DING** ; **E. CUSSLER**. Hollow-Fiber Liquid Chromatography. *AIChE Journal*, 1989, vol. 35 (5), 814-820
- **S. MARAIS** ; **M. MÉTAYER** ; **M. LABBÉ**. Water Diffusion and Permeability in Unsaturated Polyester Resin Flms Characterized by Measurement Performed with a Water-Specific Permeameter : Analysis of the Transient Permeation. *Journal of Polymer Science*, December 1999, vol. 74 (14), 3380-3396
- Chromatographies en phases liquide et supercritique. **R. ROSSET** ; **M. CAUDÉ** ; **A. JARDY**. MASSON. 1991
- **SOO PARK** ; **DUONG D. DO**. Measurement of the Effective Diffusivity in Porous Media by the diffusion Cell Method.. *Catalysis Review: Science and Engineering*, 1996, vol. 38 (2), 189-247